(19) Europäisches Patentamt
European Patent Office
Office européen des brevets

(11) **EP 4 657 225 A1**

(12) **EUROPEAN PATENT APPLICATION**
published in accordance with Art. 153(4) EPC

(43) Date of publication:
03.12.2025 Bulletin 2025/49

(51) International Patent Classification (IPC):
*G06F 3/04817* (2022.01)

(21) Application number: 24774069.9

(22) Date of filing: 18.03.2024

(86) International application number:
PCT/CN2024/082199

(87) International publication number:
WO 2024/193504 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.03.2023 CN 202310325688

(71) Applicant: Huawei Technologies Co., Ltd.
Shenzhen, Guangdong 518129 (CN)

(72) Inventor: HU, Meng
Shenzhen, Guangdong 518129 (CN)

(74) Representative: Gill Jennings & Every LLP
The Broadgate Tower
20 Primrose Street
London EC2A 2ES (GB)

(54) **INTERFACE ELEMENT MOVING METHOD AND RELATED APPARATUS**

(57) This application discloses an interface element moving method and a related apparatus. The electronic device includes a foldable display, the foldable display includes a first display area and a second display area, and a first interface element is displayed at a first location in the second display area. An operation of moving the first interface element to a second location in the first display area by a user is received and responded to. If one or more interface elements are displayed in a first layout at the second location, and the one or more interface elements can be accommodated and displayed in the second display area, the electronic device displays the one or more interface elements in the second display area, and displays the first interface element at the second location. In this way, even if there is no enough space in the first display area, the one or more interface elements originally located at the second location may be displayed in the second display area, to ensure successful cross-screen moving of the first interface element. This simplifies operation steps of the user and improves moving efficiency.

FIG. 3D

**Description**

This application claims priority to Chinese Patent Application No. 202310325688.X, filed with the China National Intellectual Property Administration on March 22, 2023 and entitled "INTERFACE ELEMENT MOVING METHOD AND RELATED APPARATUS", which is incorporated herein by reference in its entirety.

**TECHNICAL FIELD**

This application relates to the field of electronic technologies, and in particular, to an interface element moving method and a related apparatus.

**BACKGROUND**

With continuous development of electronic technologies, a terminal device having a display is used increasingly frequently in daily life, and there are increasing scenarios of moving an interface element (for example, an application icon or a service widget) displayed on the display.

When a user needs to move a target interface element displayed on the display from a start location to a target location, if the target location is already occupied by an interface element, the user needs to move the existing interface element at the target location to another location, and then move the target interface element to the target location. Consequently, operation steps of moving the interface element by the user are complex.

**SUMMARY**

This application provides an interface element moving method and a related apparatus, to implement cross-area moving of an interface element. This is easy to operate.

According to a first aspect, this application provides an interface element moving method, applied to an electronic device including a foldable display, where the foldable display includes a first display area and a second display area. The method includes: when the electronic device is in an unfolded form, displaying a first page of a home screen in the first display area, and displaying a second page of the home screen in the second display area, where the second page includes a first interface element, and the first interface element is located at a first location in the second display area; receiving a first operation of a user for the first interface element, where the first operation is used to move the first interface element to a second location in the first display area, and one or more interface elements arranged in a first layout are displayed at the second location; and in response to the first operation, displaying, at the first location, the one or more interface elements arranged in the first layout, and displaying the first interface element at the second location.

In this way, even if there is no enough space in the first display area to accommodate and display the first interface element, the electronic device may exchange, with a location of the first interface element in the second display area, a location of the one or more interfaces arranged in the first layout in the first display area. This simplifies operation steps and improves efficiency.

In a possible implementation, the method further includes: In response to the first operation, the first interface element moves along a track of the first operation.

In a possible implementation, in a process in which the first interface element moves along the track of the first operation, the method further includes: displaying an initial location prompt at the first location, where the initial location prompt is used to prompt the first location.

In a possible implementation, the method further includes: displaying a moving track of the one or more interface elements.

In this way, the moving track may be further displayed in a moving process of the interface element, and a start point, an end point, and the moving track of the user interface element may be prompted.

In a possible implementation, before the electronic device is in the unfolded form, the method further includes: when the electronic device is in a folded form, displaying the first page in the first display area, and displaying a first interface or a black screen in the second display area, where the first interface is different from the home screen.

In a possible implementation, the method further includes: when the electronic device is in the folded form, receiving a fifth operation of the user for the first display area; and displaying the second page in the first display area in response to the fifth operation.

In a possible implementation, the method further includes: when the electronic device is in the folded form, receiving a sixth operation of the user; and switching the electronic device from the folded form to the unfolded form in response to the sixth operation.

In a possible implementation, the electronic device further includes another display, and the display includes a third display area. Before the electronic device is in the unfolded form, the method further includes: when the electronic device is in a folded form, displaying the first page in the third display area.

In a possible implementation, the method further includes: when the electronic device is in the folded form, receiving a seventh operation of the user for the third display area; and displaying the second page in the first display area in response to the seventh operation.

In a possible implementation, the method further includes: when the electronic device is in the folded form, receiving an eighth operation of the user; and switching the electronic device from the folded form to the unfolded form in response to the eighth operation.

According to a second aspect, this application provides another interface element moving method, applied to an electronic device including a foldable display, where the foldable display includes a first display area and a second display area. The method includes: when the electronic device is in an unfolded form, displaying a first page of a home screen in the first display area, and displaying a second page of the home screen in the second display area, where the second page includes a second interface element, and the second interface element is located at a third location in the second display area; receiving a second operation of a user for the second interface element, where the second operation is used to move the second interface element to a fourth location in the first display area, and a part of one or more interface elements arranged in a second layout is displayed at the fourth location; and in response to the second operation, displaying, at a fifth location in the second display area, the one or more interface elements arranged in the second layout, and displaying the second interface element at the fourth location.

In this way, the electronic device may display, at another unoccupied location in the second display area, the one or more interface elements in the second layout at the fourth location.

Content of the second aspect may also be combined with any one of the possible implementations of the first aspect.

According to a third aspect, this application provides an interface element moving method, applied to an electronic device including a foldable display, where the foldable display includes a first display area and a second display area. The method includes: when the electronic device is in an unfolded form, displaying a first page of a home screen in the first display area, and displaying a second page of the home screen in the second display area, where the second page includes a third interface element, and the third interface element is located at a sixth location in the second display area; receiving a third operation of a user for the third interface element, where the third operation is used to move the third interface element to a seventh location in the first display area, and a part of a fourth interface element and a fifth interface element that are arranged in a third layout is displayed at the seventh location; and in response to the third operation, displaying the third interface element at the seventh location, displaying the fourth interface element at an eighth location in the second display area, and displaying the fifth interface element at a ninth location in the second display area.

In this way, the electronic device may further dispersedly display, at an unoccupied location in the second display area, the one or more interface elements (including the fourth interface element and the fifth interface element) at the seventh location.

Content of the third aspect may also be combined with any one of the aspects.

According to a fourth aspect, this application provides another interface element moving method, applied to an electronic device including a foldable display, where the foldable display includes a first display area and a second display area. The method includes: when the electronic device is in an unfolded form, displaying a first page of a home screen in the first display area, and displaying a second page of the home screen in the second display area, where the second page includes a sixth interface element, and the sixth interface element is located at a tenth location in the second display area; receiving a fourth operation of a user for the sixth interface element, where the fourth operation is used to move the sixth interface element to an eleventh location in the first display area, and a part of a seventh interface element and an eighth interface element that are arranged in a fourth layout is displayed at the eleventh location; and in response to the fourth operation, displaying the sixth interface element at the eleventh location, displaying the seventh interface element at a twelfth location in the first display area, and displaying the eighth interface element at a thirteenth location in the second display area.

In this way, the electronic device may further dispersedly display, at unoccupied locations in the first display area and the second display area, the one or more interface elements (including the seventh interface element and the eighth interface element) at the eleventh location.

Content of the fourth aspect may also be combined with any one of the aspects.

According to a fifth aspect, this application provides another interface element moving method, applied to an electronic device including a foldable display, where the foldable display includes a first display area and a second display area. The method includes: when the electronic device is in an unfolded form, displaying a first page of a home screen in the first display area, and displaying a second page of the home screen in the second display area, where the second page includes a ninth interface element, and the ninth interface element is located at a fourteenth location in the second display area, a part or all of one or more interface elements arranged in a fifth layout are displayed at a fifteenth location in the first display area, and a part or all of a tenth interface element is displayed at a sixteenth location in the first display area; receiving a ninth operation of a user for the ninth interface element, where the ninth operation is used to move the ninth interface element to the fifteenth location in the first display area; and in response to the ninth operation, displaying the ninth interface element at the fifteenth location, displaying, at a seventeenth location in the first display area, the one or more interface elements arranged in the fifth layout, and displaying a tenth interface element at an eighteenth location in the second display area, where the sixteenth location and the seventeenth location are on a same side of the fifteenth location.

In this way, the one or more interface elements at the fifteenth location may be displayed in an original layout at another location in the first display area, and one or more interface elements (including the tenth element) displayed at the sixteenth location are displayed in the second display area. The one or more interface elements at the sixteenth location may be displayed in an original layout in the second display area. In some embodiments, the one or more interface elements may alternatively be separately displayed at different locations in the second display area.

In a possible implementation, the sixteenth location is the same as the seventeenth location.

The sixteenth location may be the same as or different from the seventeenth location.

Content of the fifth aspect may also be combined with any one of the aspects.

According to a sixth aspect, this application provides another electronic device, including one or more processors, one or more displays, and one or more memories. The one or more memories are coupled to the one or more processors. The one or more memories are configured to store computer program code. The computer program code includes computer instructions. When the one or more processors execute the computer instructions, the electronic device is enabled to perform the interface element moving method in any possible implementation of any one of the foregoing aspects. The one or more displays may include a foldable display and/or a non-foldable display.

According to a seventh aspect, an embodiment of this application provides a computer storage medium, including computer instructions. When the computer instructions are run on an electronic device, the electronic device is enabled to perform the interface element moving method in any possible implementation of any one of the foregoing aspects.

According to an eighth aspect, an embodiment of this application provides a computer program product. When the computer program product runs on an electronic device, the electronic device is enabled to perform the interface element moving method in any possible implementation of any one of the foregoing aspects.

For beneficial effect of the sixth aspect to the eighth aspect, refer to the beneficial effect of the first aspect to the fifth aspect.

**BRIEF DESCRIPTION OF DRAWINGS**

FIG. 1A is a diagram of a hardware structure of an electronic device 100 according to an embodiment of this application;
FIG. 1B to FIG. 1E are diagrams of device forms of a group of electronic devices 100 according to an embodiment of this application;
FIG. 1F to FIG. 1I are diagrams of device forms of another group of electronic devices 100 according to an embodiment of this application;

FIG. 1J is a diagram of distribution of a customized control cell (unit) layout on a display of an electronic device 100 according to an embodiment of this application;
FIG. 1K is a diagram of a device form of another electronic device 100 according to an embodiment of this application;
FIG. 2A to FIG. 2E are a group of diagrams of interfaces in a process of switching an electronic device 100 from a folded form to an unfolded form according to an embodiment of this application;
FIG. 2F to FIG. 2H are a group of diagrams of interfaces in an interface element moving method according to an embodiment of this application;
FIG. 3A to FIG. 3F are a group of diagrams of interfaces in an interface element moving method according to an embodiment of this application;
FIG. 4A to FIG. 4F are another group of diagrams of interfaces in an interface element moving method according to an embodiment of this application;
FIG. 5A to FIG. 5F are another group of diagrams of interfaces in an interface element moving method according to an embodiment of this application;
FIG. 6A to FIG. 6E are another group of diagrams of interfaces in an interface element moving method according to an embodiment of this application;
FIG. 7A to FIG. 7D are another group of diagrams of interfaces in an interface element moving method according to an embodiment of this application;
FIG. 8A and FIG. 8B are a schematic flowchart of an interface element moving method according to an embodiment of this application;
FIG. 9A and FIG. 9B are a schematic flowchart of another interface element moving method according to an embodiment of this application;
FIG. 10A and FIG. 10B are a schematic flowchart of another interface element moving method according to an embodiment of this application;
FIG. 11A to FIG. 11C are a schematic flowchart of an interface element moving method according to an embodiment of this application;
FIG. 12 is a diagram of functional modules of an electronic device 100 according to an embodiment of this application;
FIG. 13 is a schematic flowchart of an interface element moving method according to an embodiment of this application;
FIG. 14 is a schematic flowchart of an interface element moving method according to an embodiment of this application;
FIG. 15 is a schematic flowchart of an interface element moving method according to an embodiment of this application;
FIG. 16 is a schematic flowchart of an interface element moving method according to an embodiment of this application; and
FIG. 17 is a schematic flowchart of an interface element moving method according to an embodiment of this application.

## DESCRIPTION OF EMBODIMENTS

The technical solutions according to embodiments of this application are clearly and completely described in the following with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of an electronic device.

The following describes a hardware architecture of an electronic device according to an embodiment of this application.

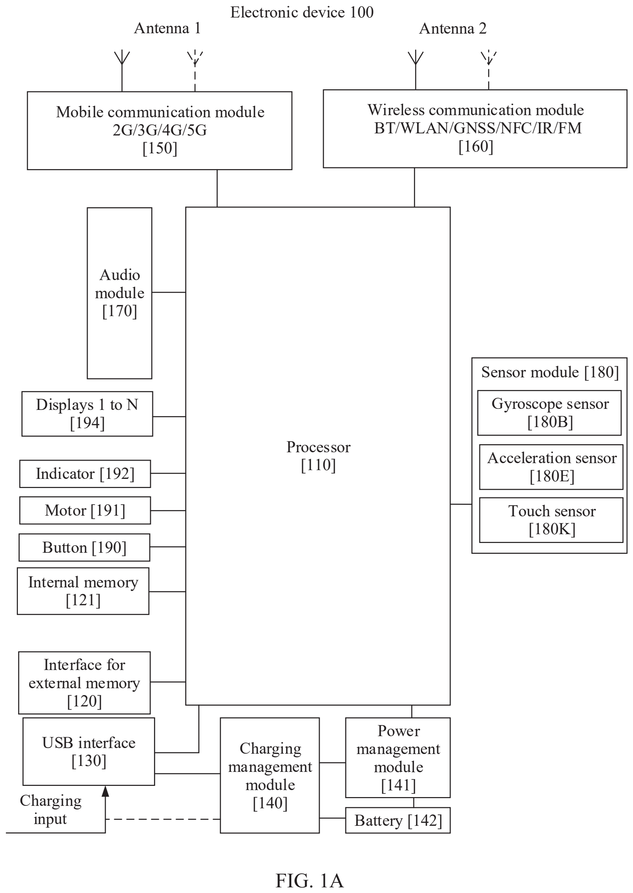

FIG. 1A is a diagram of an architecture of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 100 may include a processor 110, an interface for external memory 120, an internal memory 121, a universal serial bus (universal serial bus, USB) interface 130, a charging management module 140, a power management module 141, a battery 142, and a display 194. In some embodiments, the electronic device 100 may alternatively include any one or more of the following: an antenna 1, an antenna 2, a mobile communication module 150, a wireless communication module 160, an audio module 170, a sensor module 180, a button 190, a motor 191, an indicator 192, and the like. The sensor module 180 may include a touch sensor 180K, a gyroscope sensor 180B, and an acceleration sensor 180E. Optionally, the sensor module 180 may further include one or more other sensors, for example, a pressure sensor, a barometric pressure sensor, a magnetic sensor, a distance sensor, an optical proximity sensor, a fingerprint sensor, a temperature sensor, an ambient light sensor, a bone conduction sensor, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to modules such as the processor 110, the internal memory 121, and the display 194. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

In some embodiments, a wireless communication function of the first electronic device 100 may be implemented by using the antenna 1, the antenna 2, the mobile communication module 150, the wireless communication module 160, the modem processor, the baseband processor, and the like. The antenna 1 and the antenna 2 are configured to transmit and receive an electromagnetic wave signal. The mobile communication module 150 may provide a wireless communication solution that is applied to the electronic device 100 and that includes 2G/3G/4G/5G and the like. The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module.

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD). The display panel may be further manufactured by using an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The internal memory 121 may include one or more random access memories (random access memory, RAM) and one or more nonvolatile memories (nonvolatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM generally referred to as DDR5 SDRAM), or the like. The nonvolatile memory may include a magnetic disk storage device and a flash memory (flash memory).

The random access memory may be directly read and written by using the processor 110. The random access memory may be configured to store an executable program (for example, machine instructions) in an operating system or another running program, and may be further configured to store data of a user, data of an application, and the like.

The nonvolatile memory may store an executable program, data of a user and an application, and the like, and may be loaded into the random access memory in advance, so that the processor 110 directly performs reading and writing.

The interface for external memory 120 may be configured to connect to an external nonvolatile memory, to expand a storage capability of the electronic device 100. The external nonvolatile memory communicates with the processor 110 through the interface for external memory 120, to implement a data storage function. For example, files such as music and videos are stored in the external nonvolatile memory.

The audio module 170 may include any one or more of the following: a speaker, a receiver, a microphone, a headset jack, and the like. The electronic device 100 may implement an audio function by using the audio module 170 and the application processor, for example, music playing and recording.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The gyroscope sensor 180B may be configured to determine a moving posture of the electronic device 100. In some embodiments, an angular velocity of the electronic device 100 around three axes (namely, axes x, y, and z) may be determined by using the gyroscope sensor 180B.

The acceleration sensor 180E may detect accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application, for example, switching between a landscape mode and a portrait mode or a pedometer.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, time reminding, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

In embodiments of this application, the electronic device 100 may include a foldable display, and the foldable display may include one or more display areas. When the foldable display of the electronic device 100 is unfolded, a device form of the electronic device 100 is an unfolded form. When the foldable display is folded, the device form of the electronic device 100 is a folded form. The folded form may include a forward folded form and a reversely folded form. The following describes several different device forms of the electronic device 100 provided in embodiments of this application by using an example in which the electronic device 100 includes two displays.

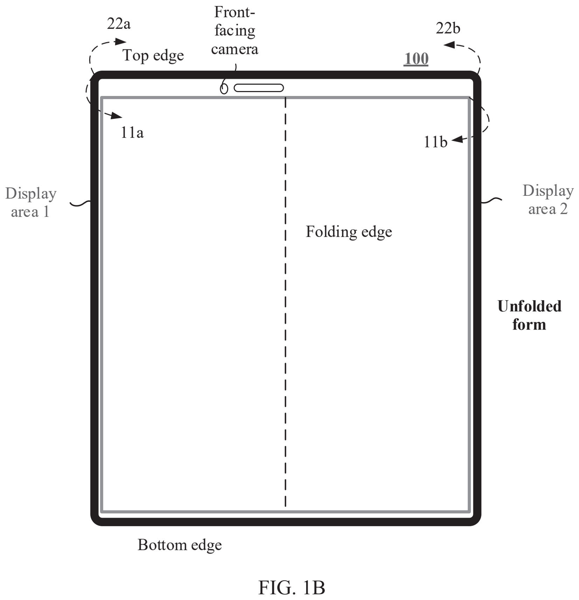

FIG. 1B to FIG. 1E are diagrams of device forms of a group of electronic devices 100 according to an embodiment of this application.

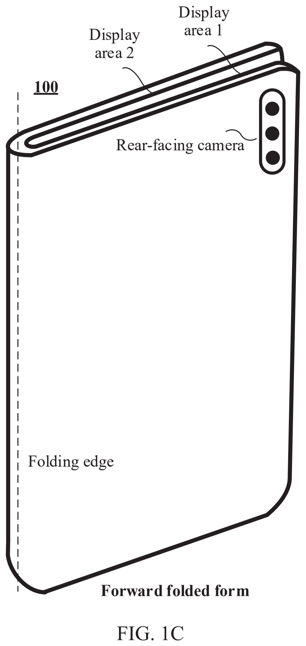

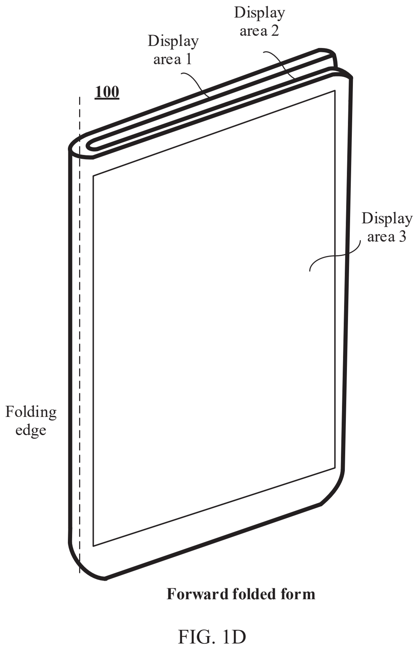

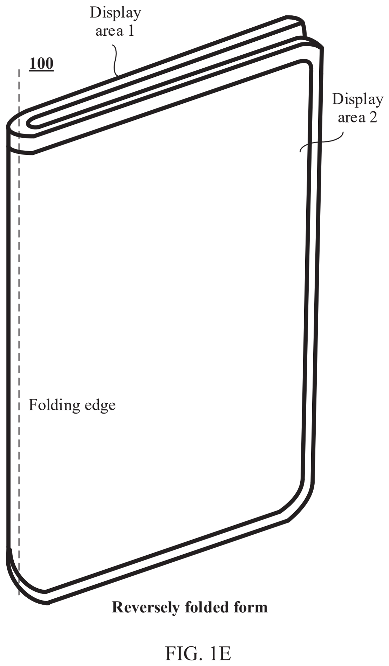

As shown in FIG. 1B, the electronic device 100 is in an unfolded form. The electronic device 100 includes a foldable display, the foldable display is in an unfolded state, the foldable display may include a display area 1 and a display area 2, and the display area 1 and the display area 2 are distributed from left to right. The display area 1 may be a left half screen of the foldable display, and the display area 2 may be a right half screen of the foldable display. There is a folding edge between the display area 1 and the display area 2. In FIG. 1B, the electronic device 100 is in the unfolded form, and a user can view content displayed in both the display area 1 and the display area 2. A front-facing camera may be disposed on the top of the display area 1, and a component like an earpiece may be further disposed. When the display area 1 rotates, by using the folding edge as an axis, in a direction indicated by an arrow 11a, and the display area 2 rotates, by using the folding edge as an axis, in a direction indicated by an arrow 11b, a device status of the electronic device 100 may be switched from the unfolded form to a forward folded form shown in FIG. 1C or FIG. 1D. When the display area 1 rotates, by using the folding edge as an axis, in a direction indicated by an arrow 22a, and the display area 2 rotates, by using the folding edge as an axis, in a direction indicated by an arrow 22b, the device status of the electronic device 100 may be switched from the unfolded form to a reversely folded form shown in FIG. 1E.

FIG. 1C shows the forward folded form of the electronic device 100. As shown in FIG. 1C, the device form of the electronic device 100 is the forward folded form. The forward folded form is a device form formed after a front face of the display area 1 and a front face of the display area 2 of the electronic device 100 are folded inward along the folding edge. In the forward folded form, the user may view a rear face of the display area 1 or a rear face of the display area 2, and the user cannot view content displayed in the display area 1 and the display area 2. The front face of the display area is a face for displaying an interface, and the rear face of the display area is a face opposite to the front face. A rear-facing camera may be disposed on the rear face of the display area 1.

FIG. 1D shows a forward folded form of another electronic device 100. In addition to a foldable display, the electronic device 100 may further include another display. The display may be located on a rear face of a display area 1 (or located on a rear face of a display area 2). As shown in FIG. 1D, when the electronic device 100 is in the forward folded form, a user may view a display on the rear face of the display area 1, and a display area on the display may be referred to as a display area 3. A rear-facing camera may be further disposed on the rear face of the display area 2.

As shown in FIG. 1E, the device form of the electronic device 100 is the reversely folded form. The reversely folded form is a device form formed after the rear face of the display area 1 and the rear face of the display area 2 of the electronic device 100 are folded inward along a folding edge. In the reversely folded form, the user may view content displayed in the display area 1 or content displayed in the display area 2, and the user cannot view the rear face of the display area 1 and the rear face of the display area 2.

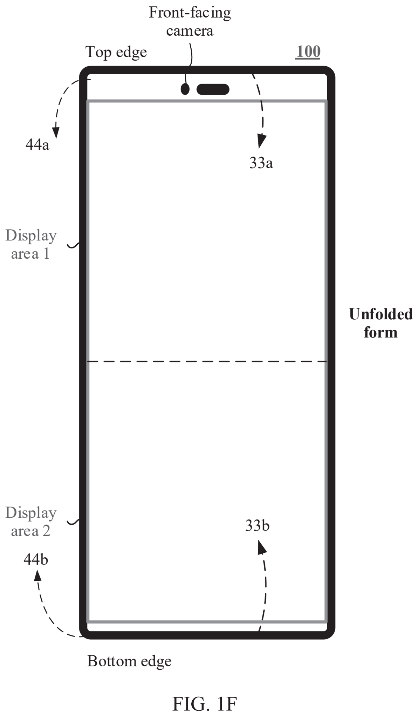

FIG. 1F to FIG. 1I are diagrams of device forms of another group of electronic devices 100 according to an embodiment of this application.

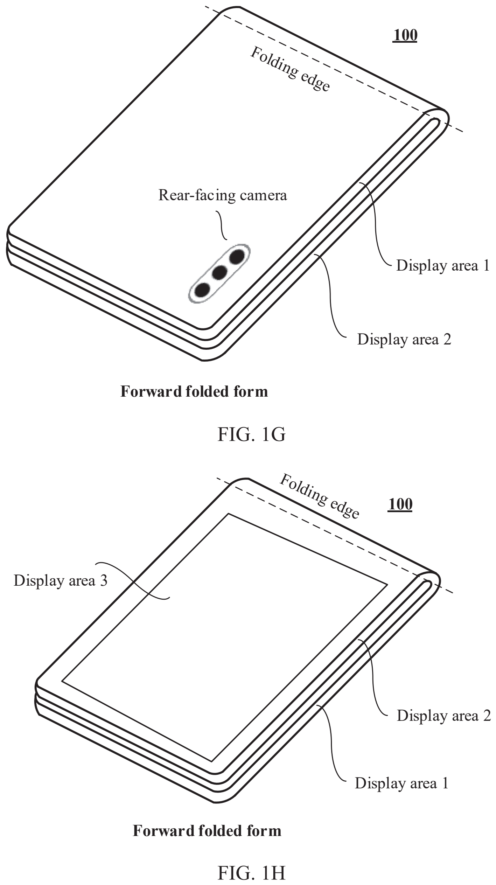

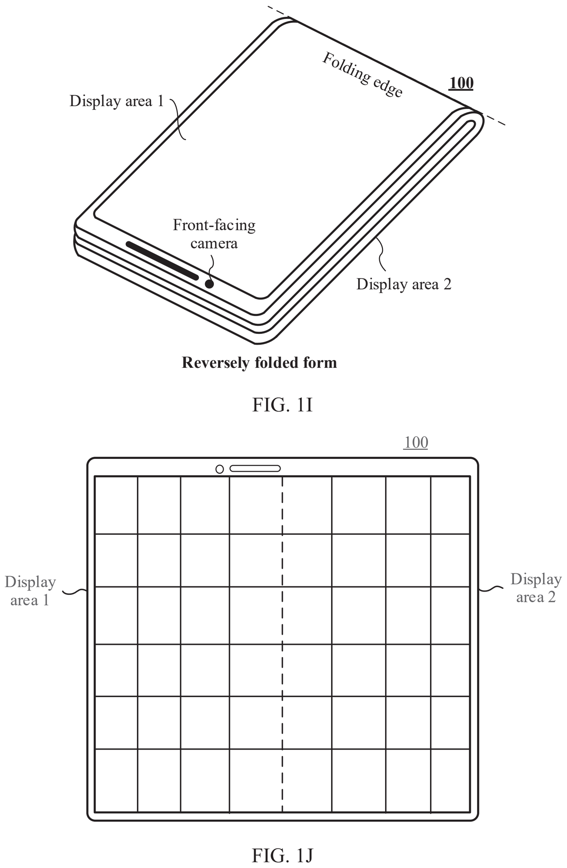

As shown in FIG. 1F, a device form of an electronic device 100 is an unfolded form. The electronic device 100 may include a display area 1 and a display area 2, the display area 1 and the display area 2 are distributed from top to bottom, and there is a folding edge between the display area 1 and the display area 2. In FIG. 1F, the electronic device 100 is in the unfolded form, and a user can view content displayed in both the display area 1 and the display area 2. A front-facing camera may be disposed on the top of the display area 1, and a component like an earpiece may be further disposed. When the display area 1 rotates, by using the folding edge as an axis, in a direction indicated by an arrow 33a, and the display area 2 rotates, by using the folding edge as an axis, in a direction indicated by an arrow 33b, a device status of the electronic device 100 may be switched from the unfolded form to a forward folded form shown in FIG. 1G or FIG. 1H. When the display area 1 rotates, by using the folding edge as an axis, in a direction indicated by an arrow 44a, and the display area 2 rotates, by using the folding edge as an axis, in a direction indicated by an arrow 44b, the device status of the electronic device 100 may be switched from the unfolded form to a reversely folded form shown in FIG. 1I.

FIG. 1G shows a forward folded form of an electronic device 100. As shown in FIG. 1G, the device form of the electronic device 100 is a forward folded form. The forward folded form is a device form formed after a front face of a display area 1 and a front face of a display area 2 of the electronic device 100 are folded inward along a folding edge. In the forward folded form, a user may view a rear face of the display area 1 or a rear face of the display area 2, and the user cannot view content displayed in the display area 1 and the display area 2. For definitions of the front face and the rear face of the display area, refer to related descriptions in the foregoing embodiment. A rear-facing camera may be disposed on the rear face of the display area 1.

FIG. 1H shows a forward folded form of another electronic device 100. In addition to a foldable display, the electronic device 100 may further include another display. The display may be located on a rear face of a display area 1 (or located on a rear face of a display area 2). As shown in FIG. 1D, when the electronic device 100 is in the forward folded form, a user may view a display on the rear face of the display area 1, and a display area on the display may be referred to as a display area 3. A rear-facing camera may be further disposed on the rear face of the display area 2.

As shown in FIG. 1I, a device form of the electronic device 100 is a reversely folded form. The reversely folded form is a device form formed after the rear face of the display area 1 and the rear face of the display area 2 of the electronic device 100 are folded inward along a folding edge. In the reversely folded form, the user may view content displayed in the display area 1 or content displayed in the display area 2, and the user cannot view the rear face of the display area 1 and the rear face of the display area 2.

It may be understood that the embodiments shown in FIG. 1B to FIG. 1I merely describe device forms of several electronic devices 100. In embodiments of this application, the foldable display may include at least two display areas, and the two or more display areas may be arranged in more forms than those in the foregoing embodiments. This is not limited in this application.

It should be noted that, in embodiments of this application, the foldable display may include a plurality of display areas (for example, a display area 1 and a display area 2). The foldable display is formed by splicing the plurality of display areas, and each display area of the foldable display corresponds to an independent view (view), and has an independent cell layout (cell layout). When the electronic device 100 displays a home screen including a plurality of interface elements, a same interface element cannot occupy locations in two display areas at the same time (that is, cannot cross over a middle seam). In addition, the display area 1 cannot sense content displayed in the display area 2, and the display area 2 cannot sense content displayed in the display area 1.

The following describes a diagram of distribution of a customized control cell (unit) layout in a display area according to an embodiment of this application.

As shown in FIG. 1J, the electronic device 100 may include a display area 1 and a display area 2, and the electronic device 100 is in an unfolded form. A minimum area that is in a plurality of display areas (including the display area 1, the display area 2, and the like) of a foldable display and that is used to accommodate and display (also referred to as place) an interface element is a control cell, or may be referred to as a unit. When the interface element is displayed in the display area, the interface element needs to occupy one or more units in the display area. A size of the interface element may indicate a quantity of units occupied by the interface element in the display area and an arrangement form of all the units occupied by the interface element. A size of an interface element 1 may include a horizontal size and a vertical size. The horizontal size of the interface element 1 refers to a quantity of columns of units that need to be occupied by the interface element 1 in the display area, and the vertical size refers to a quantity of rows of units that need to be occupied by the interface element 1 in the display area. For example, if the size of the interface element 1 is 1*2, that is, the horizontal size is 2, and the vertical size is 1, the interface element 1 needs to occupy two units in the display area, and an arrangement form of the two units is 1*2 row-column distribution, that is, the interface element 1 needs to occupy the units in one row and two columns in the display area. For another example, if the size of the interface element 1 is 4*2, that is, the horizontal size is 2, and the vertical size is 4, the interface element 1 needs to occupy eight units in the display area, and an arrangement form of the eight units is 4*2 row-column distribution, that is, the interface element 1 needs to occupy the units in four rows and two columns in the display area.

A quantity of rows and a quantity of columns of units in the display area are related to a size of the display area. For example, as shown in FIG. 1J, when a horizontal size of the display area 1 is four times a horizontal size of one unit, and a vertical size of the display area 1 is six times a vertical size of one unit, the display area 1 may include a plurality of units in 6*4 row-column distribution, 6 indicates a quantity of rows of units in the display area 1, and 4 indicates a quantity of columns of units in the display area 1. In the embodiment shown in FIG. 1J, a size of the display area 2 is the same as a size of the display area 1, and the display area 2 may also include a plurality of units in 6*4 row-column distribution.

A row ranking and a column ranking of a unit in the display area may indicate a location of the unit in the display area. In the embodiment shown in FIG. 1J, a unit (1, 1) in the display area 1 indicates a unit in a first row from the top and in a first column from the left in the display area 1. To be specific, when a row ranking and a column ranking of a unit are indicated, a digit on a left side in a parenthesis indicates a row ranking of the unit in the display area, a digit on a right side in the parenthesis indicates a column ranking of the unit in the display area.

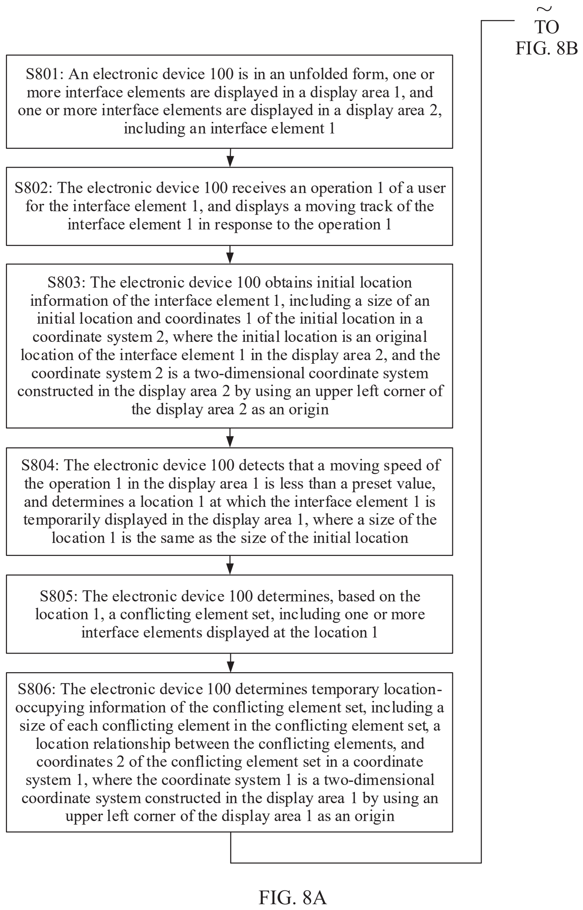

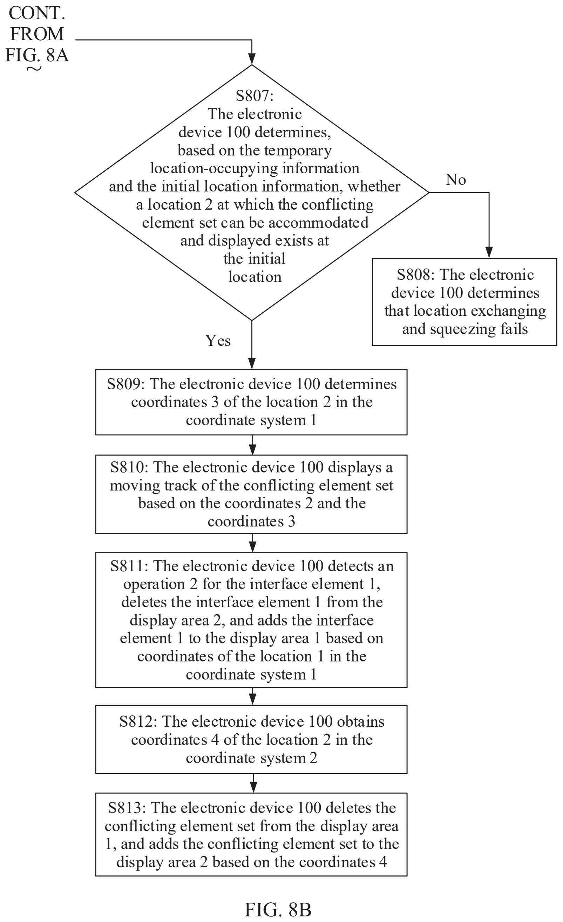

In some embodiments, a two-dimensional coordinate system may be further constructed in each display area, and a location of the unit in the display area is represented by coordinates in the coordinate system. For example, the two-dimensional coordinate system is constructed in the display area 1. The electronic device 100 may construct the two-dimensional coordinate system in the display area 1 by using any point (for example, an upper left corner, a center point, an upper right corner, or a lower right corner) of the display area 1 as an origin. In some embodiments, the electronic device 100 may alternatively construct the two-dimensional coordinate system in the display area 1 by using the upper left corner of the display area 1 as the origin, a downward direction as a positive direction of a horizontal axis, a rightward direction as a positive direction of a vertical axis, a horizontal size of one unit as a vertical unit 1, and a vertical size of one unit as a horizontal unit 1. In this case, the two-dimensional coordinate system in the display area 1 may coincide with a plurality of units in row-column distribution in the display area 1, and a row ranking and a column ranking of each unit may be considered as a horizontal coordinate and a vertical coordinate of the unit in the coordinate system. It may be understood that the electronic device 100 may alternatively use another two-dimensional coordinate system. In this case, the electronic device 100 may obtain coordinates of each unit in the coordinate system through conversion between a row ranking, a column ranking, and coordinates of the unit. For a specific conversion manner, refer to the following embodiment shown in FIG. 8A and FIG. 8B. Details are not described herein.

It may be understood that the embodiment shown in FIG. 1J is merely an example. In this embodiment of this application, the size of the display area 1 may alternatively be a size different from that in the foregoing embodiment, and more units, fewer units, or units in different arrangement forms may be obtained through division in the display area 1. Alternatively, the size of the display area 1 may be different from the size of the display area 2. This is not limited herein in this application. In addition, in some embodiments, the electronic device 100 may alternatively include more display areas, and each display area may be divided into a plurality of units in row-column distribution based on a size of the display area and a size of the unit.

In this embodiment of this application, the interface element may include any one or more of the following: an application icon, a service widget, an application component, an application folder, and the like. The application icon may be used to trigger the electronic device 100 to display an application interface corresponding to the application icon. The service widget may be used to trigger the electronic device 100 to display a service interface corresponding to the service widget. The application component may be used to trigger the electronic device 100 to display a function interface of an application corresponding to the application component. The application folder may be used to trigger the electronic device 100 to display icons of one or more applications in the application folder. The application folder may include a small application folder (namely, a conventional application folder, referred to as an application folder in the following) and a large application folder. A size of the large application folder is larger.

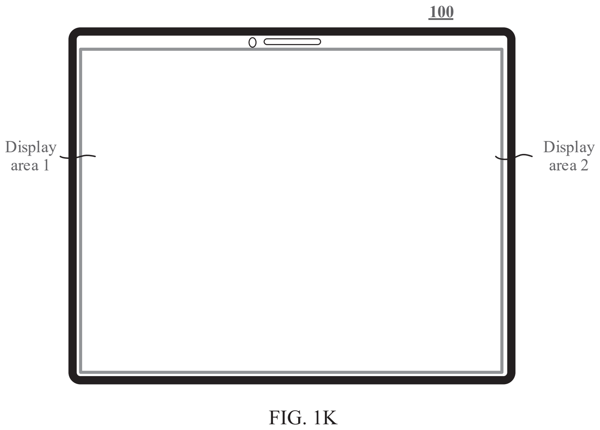

It may be understood that electronic devices 100 shown in FIG. 1B to FIG. 1J are all devices having a foldable display. In some embodiments, the electronic device 100 may not include the foldable display, that is, the electronic device 100 may not be a foldable device. For example, as shown in FIG. 1K, a display of an electronic device 100 may be a non-foldable display, and the display of the electronic device 100 may be divided into a plurality of display areas, for example, a display area 1 and a display area 2. The display area 1 may be a left half part of the display, and the display area 2 may be a right half part of the display. For the display area 1 and the display area 2, a cell layout of each display area may also be determined with reference to the embodiment shown in FIG. 1J.

It may be understood that the embodiment shown in FIG. 1K is merely an example in which that the electronic device 100 may not include the foldable display is described. The electronic device 100 may be the tablet shown in FIG. 1K, or be another electronic device having one or more displays. In addition, the electronic device 100 may further include more display areas. This is not limited herein in this application.

In this embodiment of this application, when the electronic device 100 is in the folded form, the electronic device 100 may display a page of the home screen in a display area (for example, the display area 1, the display area 2, or the display area 3). When the electronic device 100 is switched from the folded form to the unfolded form, the electronic device 100 may display the page and one or more adjacent pages on the foldable display.

The following describes a group of diagrams of interfaces changing in a process of switching an electronic device 100 from a folded form to an unfolded form according to an embodiment of this application.

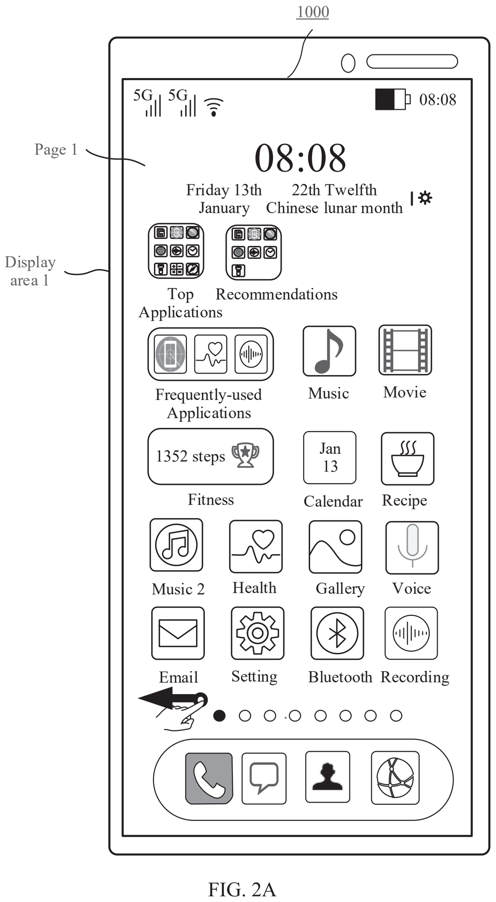

For example, as shown in FIG. 2A, the electronic device 100 is in a folded form. The folded form may be a reversely folded form. A home screen 1000 is displayed in a display area 1 of a foldable display, and a page 1 on which one or more interface elements are placed may be displayed on the home screen 1000. The one or more interface elements may include a music application icon, a movie application icon, and the like.

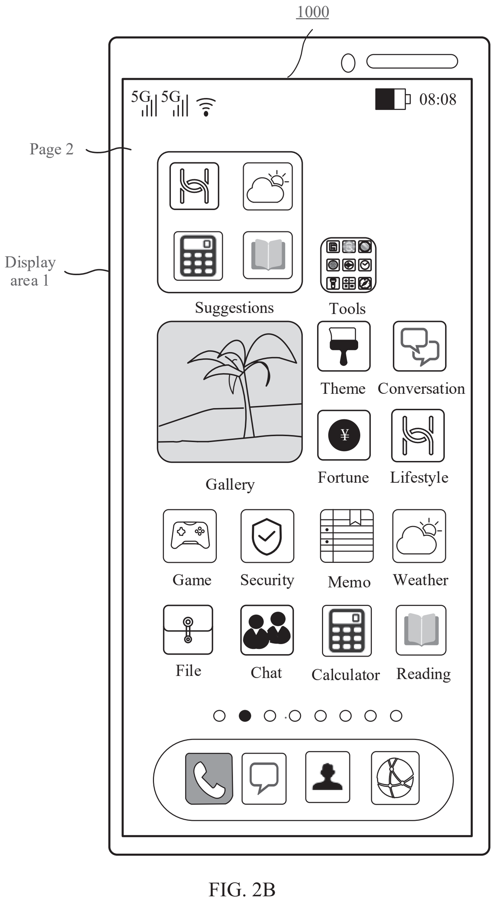

The electronic device 100 may receive and respond to a leftward sliding operation of a user for the display area 1, switch a page displayed in the display area 1, and display, on the home screen 1000, a page 2 shown in FIG. 2B.

As shown in FIG. 2B, the electronic device 100 displays the page 2, and one or more interface elements, for example, a game application icon and a gallery widget, are placed on the page 2. The page 2 is a next page of the page 1 in the plurality of pages displayed on the home screen 1000.

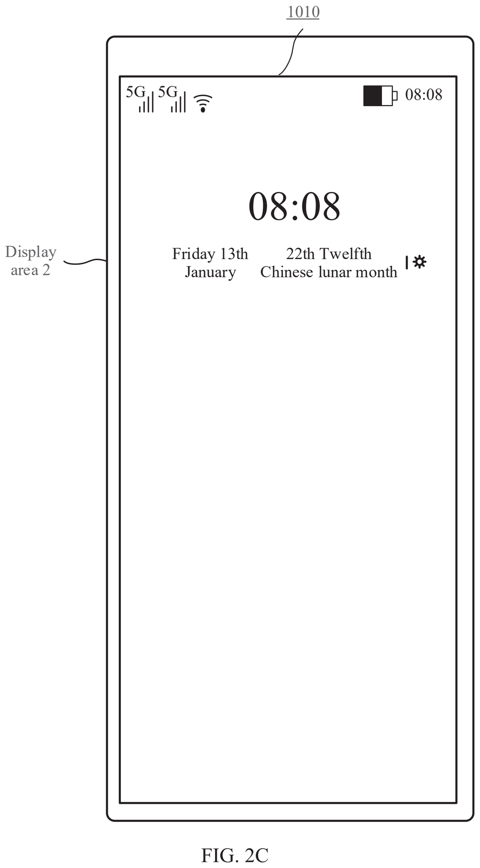

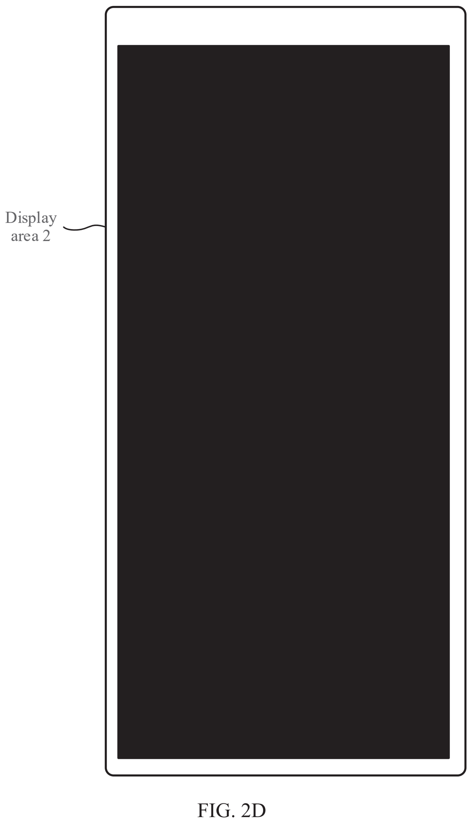

When the electronic device 100 is in the folded form, and the home screen 1000 shown in FIG. 2A or FIG. 2B is displayed in the display area 1, an interface 1010 shown in FIG. 2C may be displayed in a display area 2. The display area 2 of the electronic device 100 may alternatively display a black screen shown in FIG. 2D, namely, an off screen interface. The interface 1010 is different from the home screen 1000.

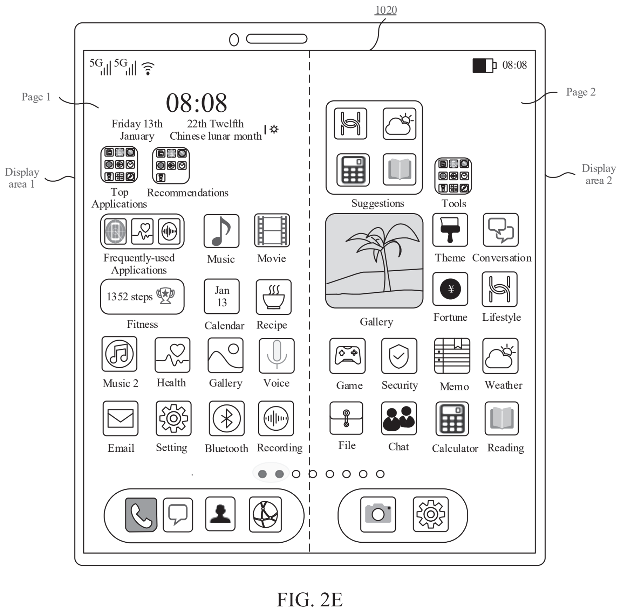

The electronic device 100 in the folded form may receive and respond to an operation of unfolding the foldable display by the user, switch a device form of the electronic device 100 from the folded form to the unfolded form, and display the home screen 1000 shown in FIG. 2E.

As shown in FIG. 2E, after the electronic device 100 is unfolded, the electronic device 100 may display the home screen 1000 in the display area 1 and the display area 2, and sizes of the display area 1 and the display area 2 are the same. The home screen 1000 includes a plurality of pages on which one or more interface elements are placed. The page 1 of the home screen 1000 is displayed in the display area 1, and the page 2 is displayed in the display area 2. The page 1 is the same as the page 1 shown in FIG. 2A, and the page 2 is the same as the page 2 shown in FIG. 2B.

In some other embodiments, if the electronic device 100 is in a forward folded form, and in the forward folded form, the electronic device 100 may display the home screen in a display area 3 of another display. In this case, for the home screen displayed by the electronic device 100 in the display area 3 in the folded form, refer to the embodiments shown in FIG. 2A and FIG. 2B. When the electronic device 100 is switched from the folded form to the unfolded form, for the home screen displayed by the electronic device 100 in the unfolded form, refer to the embodiment shown in FIG. 2E.

It should be noted that, in the embodiments shown in FIG. 2A to FIG. 2E, sizes of the display area 1 and the display area 2 are the same. Therefore, after the electronic device 100 is switched from the folded form to the unfolded form, the page 1 may be displayed in the display area 1 and the page 2 may be displayed in the display area 2. In some other embodiments, sizes of the display area 1 and the display area 2 may be different. In this case, after the electronic device 100 is switched from the folded form to the unfolded form, the electronic device 100 may display a part of a page in a display area with a larger size, and display the other part of the page and another page in a display area with a smaller size. In addition, in the folded form, a size of the page may be adaptively adjusted based on a size of a display area in which the page is located. In the unfolded form, the size of the page may be adaptively adjusted based on a size of the foldable display. It may be understood that this embodiment is merely described by using an example in which the foldable display includes two display areas. In embodiments of this application, the foldable display may further include more display areas. This is not limited herein in this application.

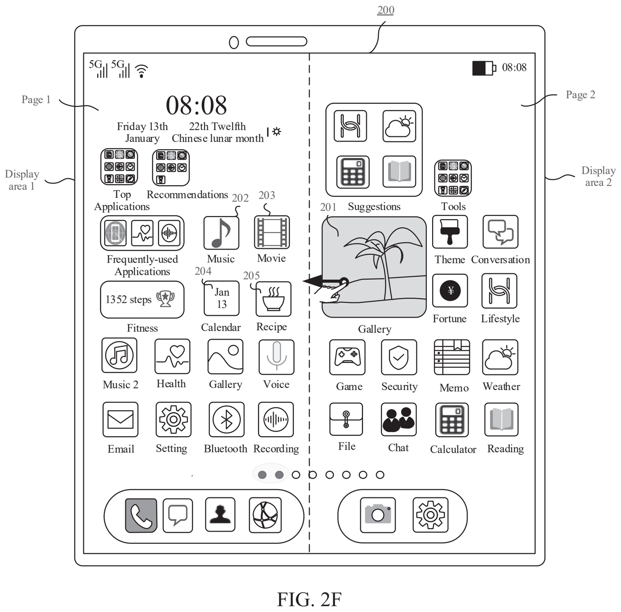

With reference to FIG. 2F to FIG. 2H, the following describes an interface element moving manner according to an embodiment of this application.

As shown in FIG. 2F, a foldable display of an electronic device 100 may include a display area 1 and a display area 2. A page 1 of a home screen 200 may be displayed in the display area 1, and a page 2 of the home screen 200 may be displayed in the display area 2. The page 1 includes one or more interface elements, for example, a music application icon 202, a movie application icon 203, a calendar application icon 204, and a recipe application icon 205. The page 2 may include one or more interface elements, for example, a gallery widget 201. The gallery widget 201 is displayed at an initial location on the page 2, and a size of the gallery widget 201 is 2*2, occupying four units. On the page 1, there are only two units in an available state.

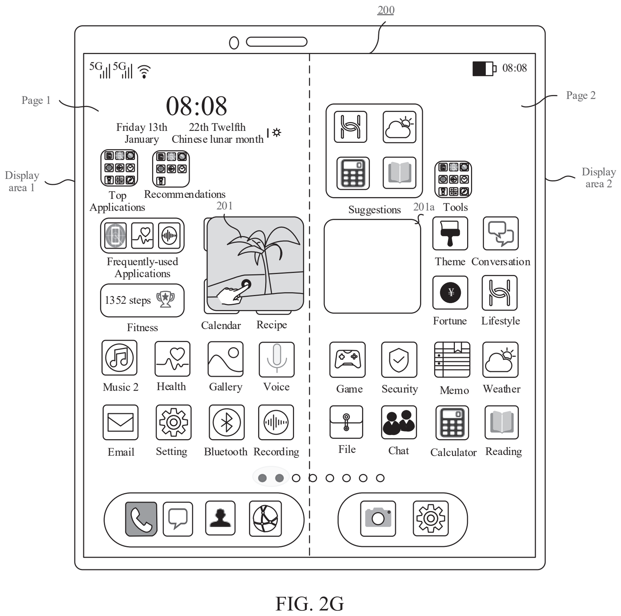

The electronic device 100 may receive and display the home screen 200 shown in FIG. 2G in response to an operation (for example, a touch and hold and drag operation) of the user of dragging the gallery widget 201 from the page 2 to a target location on the page 1.

As shown in FIG. 2G, on the home screen 200, the gallery widget 201 is displayed at the target location on the page 1. With reference to FIG. 2F, it can be learned that one or more interface elements are displayed at the target location on the page 1, including the music application icon 202, the movie application icon 203, the calendar application icon 204, and the recipe application icon 205. The gallery widget 201 covers and is displayed on the one or more interface elements. A rectangular box 201a may be further displayed at the initial location of the page 2, and is used to prompt a location of the gallery widget 201 before the movement. Because there are only two units in the available state on the page 1, and the one or more interface elements need to occupy four units, the one or more interface elements cannot be accommodated and displayed in the display area 1.

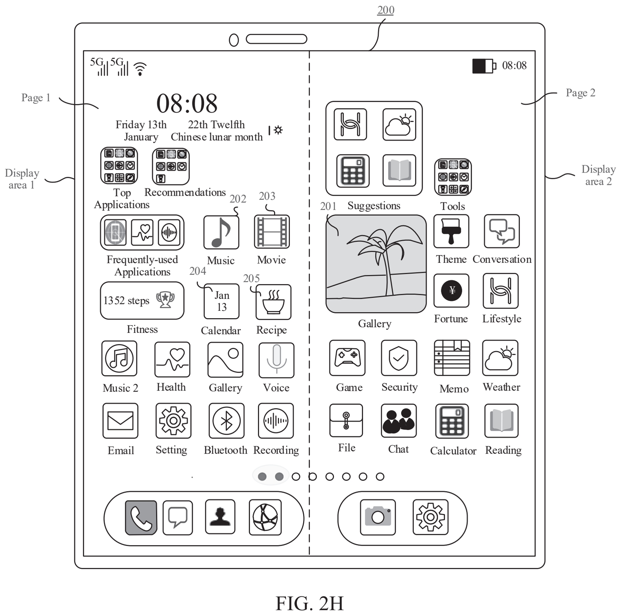

After determining that the one or more interface elements cannot be accommodated and displayed in the display area 1, the electronic device 100 receives and responds to an operation of releasing the gallery widget 201 by the user, and may display the home screen 200 shown in FIG. 2H. The home screen 200 shown in FIG. 2H is completely the same as the home screen 200 shown in FIG. 2F.

As shown in FIG. 2H, after the operation of releasing the gallery widget 201 by the user is received, because there is no unit that can place the one or more interface elements in the display area 1, the gallery widget 201 returns to the initial location on the page 2. In other words, cross-screen movement of the gallery widget 201 fails.

It can be learned from the foregoing embodiment that, in the foregoing interface element moving manner, when the display area in which the target location is located does not have enough available units (units in an available state), an interface element in another display area cannot be moved to the display area by using a single operation. In this case, the electronic device needs to first receive and respond to operations of sequentially moving one or more interface elements at the target location to another display area by the user, and sequentially move the one or more conflicting elements to the another display area. Then, the electronic device may receive an operation of moving the interface element from another display area to the display area by the user, and move the interface element to the display area. If the foregoing interface element moving manner is used, operation steps are complex and efficiency is low.

This application provides an interface element moving method, applied to an electronic device 100 including a foldable display. The foldable display may include a plurality of display areas (for example, a display area 1 and a display area 2). One or more interface elements are displayed in the display area 1, and one or more interface elements (including an interface element 1) are displayed in the display area 2. The electronic device 100 receives and responds to an operation of moving the interface element 1 to a location 1 in the display area 1 by a user, and after detecting that one or more interface elements (namely, conflicting elements) are originally displayed in a first layout at the location 1, the electronic device 100 determines whether a location set in which each conflicting element can be separately accommodated and displayed exists in the display area 2. If the location set exists in the display area 2, the electronic device 100 displays each conflicting element at a location that is in the location set and that corresponds to the conflicting element, and displays the interface element 1 at the location 1.

In this way, even if there is no enough space in the display area 1 to accommodate and display the conflicting element, the conflicting element may be displayed in the display area 2, to ensure that cross-screen moving of the interface element 1 is successful, thereby simplifying operation steps of the user and improving moving efficiency.

With reference to an application scenario, the following describes an interface element moving method according to an embodiment of this application.

In some application scenarios, a foldable display of an electronic device 100 may include a display area 1 and a display area 2. When the foldable display is in an unfolded form, the electronic device 100 may display a page 1 of a home screen in the display area 1, and display a page 2 of the home screen in the display area 2. The page 2 may include an interface element 1 displayed at an initial location. When receiving an operation of moving the interface element 1 from the initial location on the page 2 to a location 1 on the page 1 by the user, if one or more interface elements (also referred to as conflicting elements) originally arranged and displayed in a first layout at the location 1 can be accommodated and displayed at the initial location, the electronic device 100 exchanges display locations of the interface element 1 and the one or more interface elements originally arranged and displayed in the first layout at the location 1, that is, displays the interface element 1 at the location 1, and displays the one or more interface elements arranged and displayed in the first layout at the initial location. It should be noted that, if all of the one or more interface elements arranged and displayed in the first layout (that is, each interface element is complete at the location 1) are displayed at the location 1, the one or more interface elements arranged and displayed in the first layout can also be accommodated and displayed at the initial location. If a part of the one or more interface elements arranged and displayed in the first layout (that is, at least one interface element is incomplete at the location 1) is displayed at the location 1, the one or more interface elements arranged and displayed in the first layout cannot be accommodated and displayed at the initial location.

In this way, even if there is no enough space in the display area 1 to accommodate and display the interface element 1, the electronic device 100 may exchange, with the location of the interface element 1 in the display area 2, the location of the one or more conflicting elements arranged in the first layout in the display area 1. This simplifies operation steps and improves efficiency.

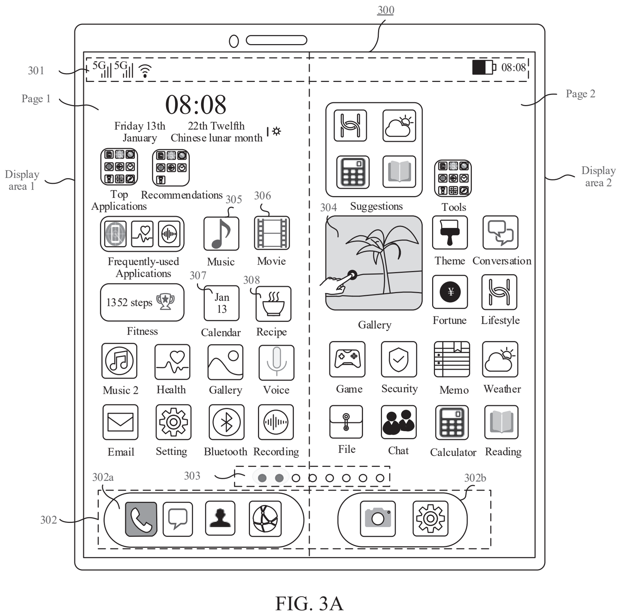

For example, as shown in FIG. 3A, the foldable display of the electronic device 100 may include the display area 1 and the display area 2, and the foldable display is in an unfolded state. A home screen 300 is displayed on the foldable display.

The home screen 300 displays two pages on which interface elements (such as an application icon, a service widget, and an application folder) are placed, including a page 1 and a page 2. The page 1 is displayed in the display area 1, and the page 2 is displayed in the display area 2. One or more interface elements (such as a music application icon 305, a movie application icon 306, a calendar application icon 307, and a recipe application icon 308) may be displayed on the page 1. One or more interface elements (such as a gallery widget 304, a theme application icon, and a lifestyle application icon) may be displayed on the page 2. Optionally, a page indicator 303 is further displayed at the bottom of the home screen 300, to indicate a total quantity of pages on the home screen and a location relationship between a currently displayed page and another page. For example, the home screen 300 may include eight pages, and an ellipse mark (namely, an identifier in a capsule shape) in the page indicator includes two dots at a leftmost end, which may indicate that the currently displayed page includes first two pages from the left of the eight pages. Optionally, a status bar 301 is further displayed at the top of the home screen 300, and the status bar 301 may include information such as a strength indicator of a communication signal, a battery level value, and time. Further, optionally, there may be a dock (dock) area 302 below the page indicator, and the dock area 302 may include one or more docks, for example, a dock 302a displayed on the page 1 and a dock 302b displayed on the page 2. One or more icons (for example, a phone application icon, a messages application icon, an address book application icon, and a browser application icon) may be displayed in the dock 302a, and one or more icons (for example, a camera application icon and a setting application icon) may also be displayed in the dock 302b. The one or more docks in the dock area may remain displayed during page switching.

The following describes a display location of an interface element on a page with reference to FIG. 3A. Both the display area 1 and the display area 2 may include a plurality of units. When the page 1 is displayed in the display area 1, each interface element on the page 1 may occupy one or more units in the display area 1. When the page 2 is displayed in the display area 2, each interface element on the page 2 may occupy one or more units in the display area 2. A quantity of units occupied by an interface element and a location relationship between a plurality of units occupied by the interface element are determined by a size of the interface element. For a specific relationship, refer to the embodiment shown in FIG. 1J. The dock area is not considered temporarily. For example, units in the display area 1 are arranged in six rows and four columns. A 6*4-dimensional matrix may be constructed, and each digit in the matrix may correspond to one unit in the display area 1. A row ranking and a column ranking of the digit in the matrix may correspond to a row ranking and a column ranking of the unit in the display area 1. In the matrix, a digit "1" represents that the unit is occupied (that is, an interface element is displayed), and a digit "0" represents that the unit is not occupied. According to the page 1 shown in FIG. 3A, occupation of each unit in the display area 1 by each interface element on the page 1 may be represented by using the following 6*4-dimensional screen location-occupying matrix A0:

$$A0 = \begin{Bmatrix} 1 & 1 & 1 & 1 \\ 1 & 1 & 0 & 0 \\ 1 & 1 & 1 & 1 \\ 1 & 1 & 1 & 1 \\ 1 & 1 & 1 & 1 \\ 1 & 1 & 1 & 1 \end{Bmatrix} \quad \text{formula (1)}$$

It can be learned from Formula (1) that, when the page 1 is displayed in the display area 1, the display area 1 may include 4*6=24 units, only a unit (2, 3) and a unit (2, 4) are unoccupied units in the 24 units, and interface elements are displayed in all other units. A digit on the left side in a parenthesis represents a row ranking of the unit in the display area, and rows are sorted from top to bottom. A digit on the right side in the parenthesis represents a column ranking of the unit in the display area, and columns are sorted from left to right.

Similarly, it may be learned that, according to the page 2 shown in FIG. 3A, occupation of each unit in the display area 2 by each interface element on the page 2 may be represented by using the following 6*4-dimensional screen location-occupying matrix B0:

$$B0 = \begin{Bmatrix} 1 & 1 & 0 & 0 \\ 1 & 1 & 1 & 0 \\ 1 & 1 & 1 & 1 \\ 1 & 1 & 1 & 1 \\ 1 & 1 & 1 & 1 \\ 1 & 1 & 1 & 1 \end{Bmatrix} \text{ formula (2)}$$

It can be learned from Formula (2) that, when the page 2 is displayed in the display area 2, the display area 2 may include 4*6=24 units, only a unit (1, 3), a unit (1, 4), and a unit (2, 4) are unoccupied units in the 24 units, and interface elements are displayed in all other units. A digit on the left side in a parenthesis represents a row ranking of the unit in the display area, and rows are sorted from top to bottom. A digit on the right side in the parenthesis represents a column ranking of the unit in the display area, and columns are sorted from left to right.

On the page 1 displayed in the display area 1, the music application icon 305, the movie application icon 306, the calendar application icon 307, and the recipe application icon 308 are displayed. The four application icons respectively occupy the following four units in the display area 1: a unit (3, 3), a unit (3, 4), a unit (4, 3), and a unit (4, 4). The gallery widget 304 is displayed on the page 2 displayed in the display area 2. A size of the gallery widget 304 is 2*2, that is, the gallery widget 304 needs to occupy four units, and the four units are arranged in a square shape. It can be learned from the page 2 shown in FIG. 3A that a location occupied by the gallery widget 304 in the display area 2 includes the following four units: a unit (3, 1), a unit (3, 2), a unit (4, 1), and a unit (4, 2).

The electronic device 100 may receive and respond to a touch and hold operation of the user for the gallery widget 304, and display an edit bar 309 near the gallery widget 304.

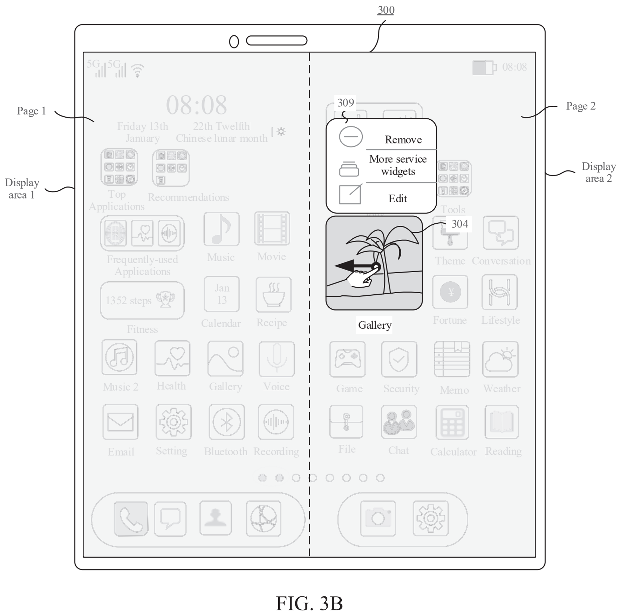

As shown in FIG. 3B, one or more controls may be displayed in the edit bar 309, for example, a remove control, a more service widgets control, and an edit control. The remove control may be used to trigger the electronic device 100 to remove the gallery widget 304 on the page 2, the more service widgets control may be used to trigger the electronic device 100 to display more service widgets, the edit control may be used to trigger the electronic device 100 to display an editing interface of the gallery control, and the like. Optionally, when displaying the edit bar 309, the electronic device 100 may further display other interface elements (interface elements other than the gallery widget 304 and the edit bar 309) on the home screen 300 in a fuzzy manner, to highlight the gallery widget 304. This helps the user focus on the gallery widget 304 and the edit bar 309.

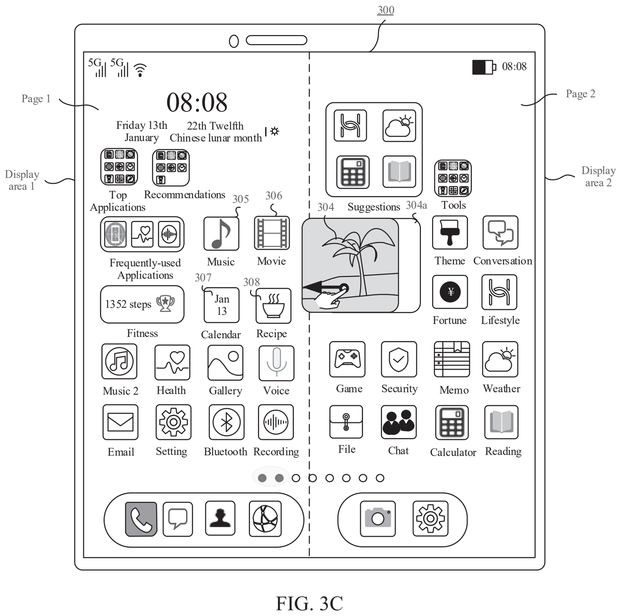

The electronic device 100 may receive and respond to a drag operation of the user for the gallery widget 304, as shown in FIG. 3C, disable display of the edit bar 309, and enable the gallery widget 304 to move along a track of the drag operation of the user.

As shown in FIG. 3C, on the home screen 300, display of the edit bar 309 is disabled, and the gallery widget 304 may move along the track of the drag operation of the user. Optionally, in a moving process of the gallery widget 304, an initial location prompt may be displayed at an initial location of the gallery widget 304 in the display area 2, for example, a rectangular box 304a shown in FIG. 3C. The rectangular box 304a may include all units occupied by the initial location. The initial location prompt may be used to inform the user of the initial location of the gallery widget 304 before the movement. It may be understood that, in some other embodiments, the initial location prompt may alternatively be a prompt box or a prompt window in another shape, or a prompt of another type like a text or an animation. This is not limited herein in this application.

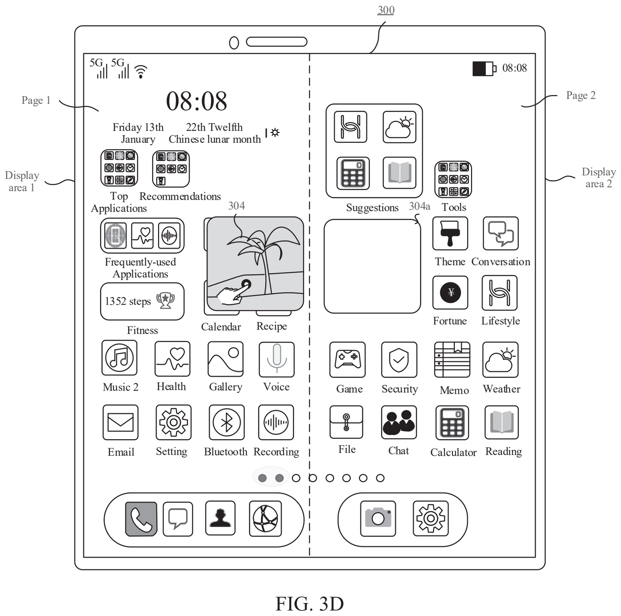

The electronic device 100 may display, in response to the operation of moving the gallery widget to the location 1 by the user, the home screen 300 shown in FIG. 3D. A size of the location 1 is consistent with a size of the gallery widget 304. In some embodiments, the electronic device 100 may detect the track and a moving speed of the drag operation of the user for the gallery widget 304, and determine the location 1 based on the moving speed. When detecting that the user drags the gallery widget 304 to the display area 1 and the moving speed is less than a preset value, the electronic device 100 may determine, based on the location 1 of the gallery widget 304 in the display area 1, one or more interface elements, also referred to as conflicting elements, originally displayed at the location 1.

As shown in FIG. 3D, the gallery widget 304 is displayed at the location 1 in the display area 1, and the location 1 includes the following four units in the display area 1: the unit (3, 3), the unit (3, 4), the unit (4, 3), and the unit (4, 4). Digits in the parenthesis respectively represent a row and a column in which the unit is located in the display area 1. For details, refer to related descriptions in Formula (1). It can be learned from FIG. 3A that, before the drag operation of the user, in the display area 1, an interface element originally displayed at the unit (3, 3) is the music application icon, an interface element originally displayed at the unit (3, 4) is the movie application icon, an interface element originally displayed at the unit (4, 3) is the calendar application icon, and an interface element originally displayed at the unit (4, 4) is the recipe application icon. Therefore, the electronic device 100 may determine that the one or more conflicting elements included in a conflicting element set are the music application icon, the movie application icon, the calendar application icon, and the recipe application icon. Because the size of the gallery widget 304, the size of the initial location, and the size of the location 1 are all 2*2, and all the conflicting elements displayed at the location 1 are complete interface elements (that is, all of the one or more conflicting elements are displayed at the location 1), a size of a location that needs to be occupied by the conflicting element set is also 2*2. The electronic device 100 may determine that the one or more conflicting elements in the conflicting element set can be placed at the initial location in the display area 2 with an original location relationship maintained.

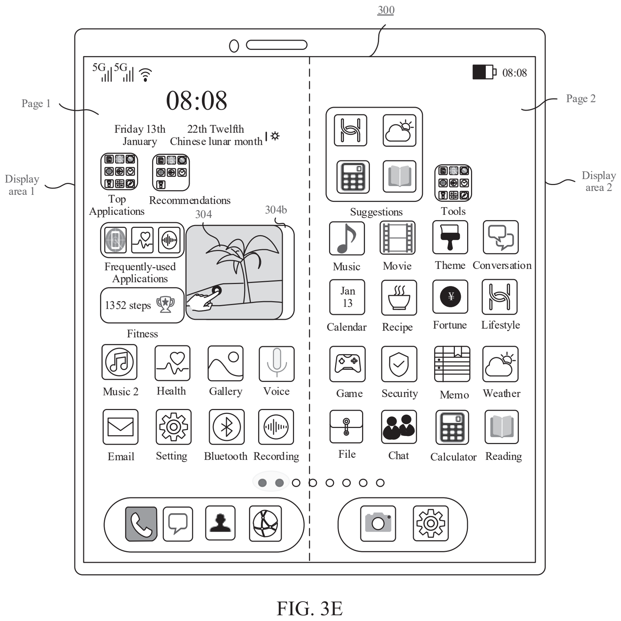

After determining that the one or more conflicting elements can be placed at the initial location of the gallery widget 304 in the display area 2 with relative locations of the one or more conflicting elements maintained (that is, after the one or more conflicting elements arranged and displayed in an original layout can be accommodated and displayed), as shown in FIG. 3E, the electronic device 100 may maintain the relative locations of the one or more conflicting elements, and display the one or more conflicting elements at the initial location in the display area 2.

As shown in FIG. 3E, in the display area 2, the music application icon is displayed at the unit (3, 1), the movie application icon is displayed at the unit (3, 2), the calendar application icon is displayed at the unit (4, 1), and the recipe application icon is displayed at the unit (4, 2). In other words, the one or more conflicting elements are displayed at the initial location of the gallery widget 304, maintaining relative locations before the drag operation of the user. Optionally, a target location prompt, for example, a rectangular box 304b, may be further displayed at the location 1 in the display area 1, and the rectangular box 304b may include all the units occupied by the location 1. The target location prompt is used to inform the user that the target location may be used to place the gallery widget 304. It may be understood that, in some other embodiments, the target location prompt may alternatively be a prompt box or a prompt window in another shape, or a prompt of another type like a text or an animation. This is not limited herein in this application.

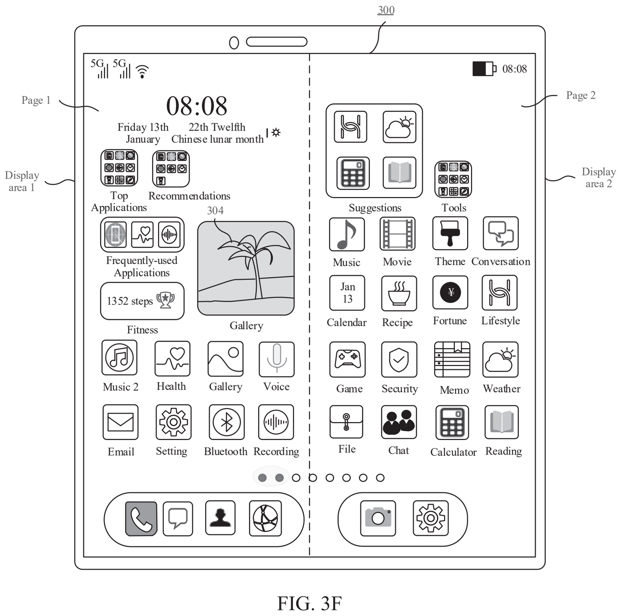

The electronic device 100 may receive and respond to an operation of releasing the gallery widget 304 at the location 1 by the user, as shown in FIG. 3F, and display the gallery widget 304 at the location 1 in the display area 1.

As shown in FIG. 3F, the gallery widget 304 is displayed at the location 1 in the display area 1, and a text "Gallery" may be further displayed below the gallery widget 304, to prompt a name of the gallery widget 304. In comparison with the home screen 300 shown in FIG. 3A, on the home screen 300 shown in FIG. 3F, locations of the gallery widget 304 and the conflicting element set (including the music application icon, the movie application icon, the calendar application icon, and the recipe application icon) are exchanged.

It may be understood that the embodiment shown in FIG. 3A to FIG. 3F is merely an example. In embodiments of this application, the electronic device 100 may alternatively include more display areas, the interface element 1 may alternatively be an interface element other than the gallery widget 304, and the display area 1 and the display area 2 may alternatively include more or fewer interface elements, or interface elements different from those in the foregoing embodiment. Each display area may alternatively include more or fewer units than those in the foregoing embodiment, or units arranged in different manners, and the screen occupation information matrix corresponding to the display area may alternatively include a unit in the dock area. This is not limited herein in this application.

In some application scenarios, a foldable display of an electronic device 100 may include a display area 1 and a display area 2. When the foldable display is in an unfolded form, the electronic device 100 may display a page 1 of a home screen in the display area 1, and display a page 2 of the home screen in the display area 2. The page 2 may include an interface element 1 displayed at an initial location. When receiving an operation of moving the interface element 1 from the initial location on the page 2 to a location 1 on the page 1 by a user, if one or more interface elements (also referred to as conflicting elements) originally arranged and displayed in a first layout at the location 1 can be accommodated and displayed at a location 2 in the display area 2, the electronic device 100 arranges and displays, in the first layout at the location 2, the one or more interface elements originally arranged and displayed in the first layout at the location 1, and displays the interface element 1 at the location 1. The location 2 is different from the initial location. In this way, even if the one or more conflicting elements arranged in the first layout at the location 1 cannot be accommodated and displayed at the initial location, the electronic device 100 may search for, in the display area 2 by traversing the display area 2, the location 2 at which the one or more conflicting elements arranged in the first layout can be accommodated and displayed, display the one or more conflicting elements arranged in the first layout at the location 2, and display the interface element 1 at the location 1. This simplifies operation steps and improves efficiency.

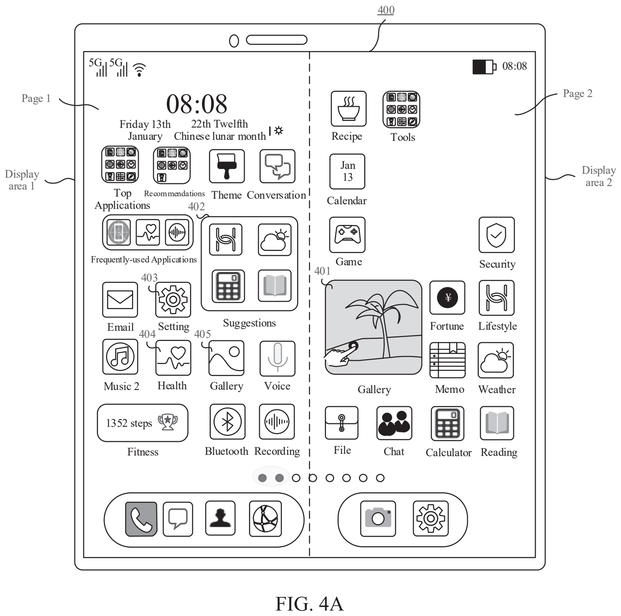

For example, as shown in FIG. 4A, the foldable display of the electronic device 100 may include the display area 1 and the display area 2. When the foldable display is in an unfolded form, the electronic device 100 may display a home screen 400 on the foldable display.

The home screen 400 displays two pages on which interface elements (such as an application icon, a service widget, and an application folder) are placed, including a page 1 and a page 2. The page 1 is displayed in the display area 1, and the page 2 is displayed in the display area 2. One or more interface elements (such as a large application folder 402, a setting application icon 403, a health application icon 404, and a gallery application icon 405) may be displayed on the page 1. One or more interface elements (such as a gallery widget 401, a fortune application icon, and a memo application icon) may be displayed on the page 2. Optionally, one or more of a page indicator, a status bar, and a dock area may be further displayed on the home screen 400. For specific descriptions of the one or more pieces of content, refer to related descriptions in the embodiment shown in FIG. 3A. Details are not described herein again. The following describes a display location of an interface element on a page in a display area with reference to FIG. 4A. Both the display area 1 and the display area 2 may include a plurality of units. When the page 1 is displayed in the display area 1, each interface element on the page 1 may occupy one or more units in the display area 1. When the page 2 is displayed in the display area 2, each interface element on the page 2 may occupy one or more units in the display area 2. A quantity of units occupied by an interface element and a location relationship between a plurality of units occupied by the interface element are determined by a size of the interface element. For a specific relationship, refer to the embodiment shown in FIG. 1J. The dock area is not considered temporarily. For example, units in the display area 1 are arranged in six rows and four columns. A 6*4-dimensional matrix may be constructed, and each digit in the matrix may correspond to one unit in the display area 1. A row ranking and a column ranking of the digit in the matrix may correspond to a row ranking and a column ranking of the unit in the display area 1. In the matrix, "1" represents that the unit is occupied (that is, an interface element is displayed), and "0" represents that the unit is not occupied. According to the page 1 shown in FIG. 4A, occupation of each unit in the display area 1 by each interface element on the page 1 may be represented by using the following 6*4-dimensional screen location-occupying matrix A1:

$$A1 = \begin{Bmatrix} 1 & 1 & 1 & 1 \\ 1 & 1 & 1 & 1 \\ 1 & 1 & 1 & 1 \\ 1 & 1 & 1 & 1 \\ 1 & 1 & 1 & 1 \\ 1 & 1 & 1 & 1 \end{Bmatrix} \text{ formula (3)}$$

It can be learned from Formula (3) that, when the page 1 is displayed in the display area 1, the display area 1 may include 4*6=24 units, and there is no unoccupied unit in the 24 units, that is, an interface element is displayed in each unit in the display area 1. A digit on the left side in a parenthesis represents a row ranking of the unit in the display area, and rows are sorted from top to bottom. A digit on the right side in the parenthesis represents a column ranking of the unit in the display area, and columns are sorted from left to right.

Similarly, it may be learned that, according to the page 2 shown in FIG. 4A, occupation of each unit in the display area 2 by each interface element on the page 2 may be represented by using the following 6*4-dimensional screen location-occupying matrix B1:

$$B1 = \begin{Bmatrix} 1 & 1 & 0 & 0 \\ 1 & 0 & 0 & 0 \\ 1 & 0 & 0 & 1 \\ 1 & 1 & 1 & 1 \\ 1 & 1 & 1 & 1 \\ 1 & 1 & 1 & 1 \end{Bmatrix} \text{ formula (4)}$$

It can be learned from Formula (4) that, when the page 2 is displayed in the display area 2, the display area 2 may include 4*6=24 units, unoccupied units in the 24 units include the following a plurality of units: a unit (1, 3), a unit (1, 4), a unit (2, 2), a unit (2, 3), a unit (2, 4), a unit (3, 2), and a unit (3, 3), and interface elements are displayed in all other units. A digit on the left side in a parenthesis represents a row ranking of the unit in the display area, and rows are sorted from top to bottom. A digit on the right side in the parenthesis represents a column ranking of the unit in the display area, and columns are sorted from left to right.

Interface elements such as the large application folder 402, the setting application icon 403, the health application icon 404, and the gallery application icon 405 are displayed on the page 1 displayed in the display area 1. A size of the large application folder 402 is 2*2, and the large application folder 402 occupies the following four units in the display area 1: the unit (3, 3), a unit (3, 4), a unit (4, 3), and a unit (4, 4). The setting application icon 403 occupies a unit (4, 2) in the display area 1. The health application icon 404 occupies a unit (5, 2) in the display area 1. The gallery application icon 405 occupies a unit (5, 3) in the display area 1. The gallery widget 401 is displayed on the page 2 displayed in the display area 2. A size of the gallery widget 401 is 2*2, that is, the gallery widget 401 needs to occupy four units, and the four units are arranged in a square shape. It can be learned from the page 2 shown in FIG. 4A that a location occupied by the gallery widget 401 in the display area 2 includes the following four units: a unit (4, 1), a unit (4, 2), a unit (5, 1), and a unit (5, 2).

The electronic device 100 may receive and respond to a touch and hold operation of the user for the gallery widget 401, and display an edit bar 406 near the gallery widget 401.

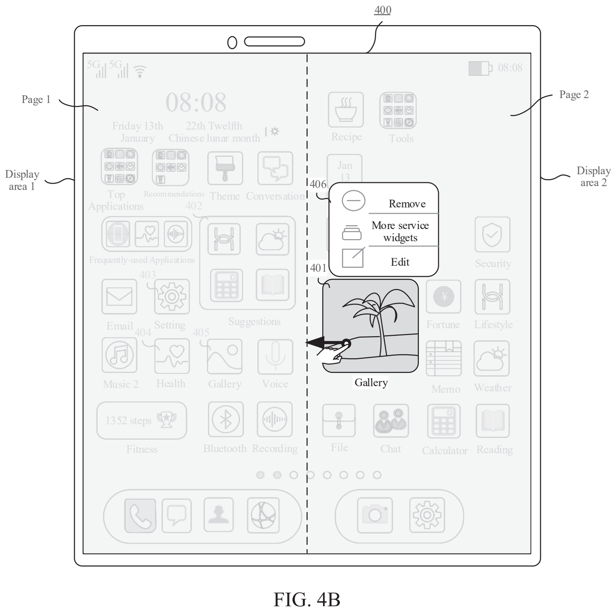

As shown in FIG. 4B, one or more controls may be displayed in the edit bar 406, for example, a remove control, a more service widgets control, and an edit control. For a specific description of the control in the edit bar 406, refer to related content shown in FIG. 3B. Details are not described herein again. Optionally, when displaying the edit bar 406, the electronic device 100 may further display other interface elements (interface elements other than the gallery widget 401 and the edit bar 406) on the home screen 400 in a fuzzy manner, to highlight the gallery widget 401. This helps the user focus on the gallery widget 401 and the edit bar 406.

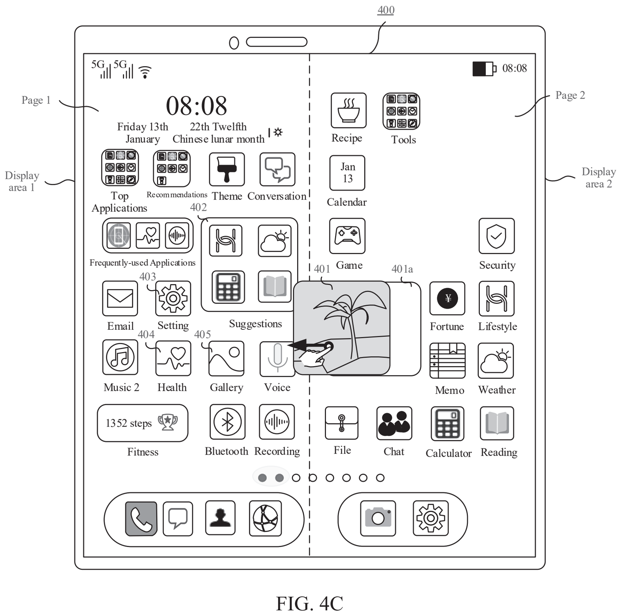

The electronic device 100 may receive and respond to a drag operation of the user for the gallery widget 401, as shown in FIG. 4C, disable display of the edit bar 406, and enable the gallery widget 401 to move along a track of the drag operation of the user.

As shown in FIG. 4C, on the home screen 400, display of the edit bar 406 is disabled, and the gallery widget 401 may move along the track of the drag operation of the user. Optionally, in a moving process of the gallery widget 401, an initial location prompt may be displayed at an initial location of the gallery widget 401 in the display area 2, for example, a rectangular box 401a shown in FIG. 4C. The rectangular box 401a may include all units occupied by the initial location. The initial location prompt may be used to inform the user of the initial location of the gallery widget 401 before the movement. It may be understood that, in some other embodiments, the initial location prompt may alternatively be a prompt box or a prompt window in another shape, or a prompt of another type like a text or an animation. This is not limited herein in this application.

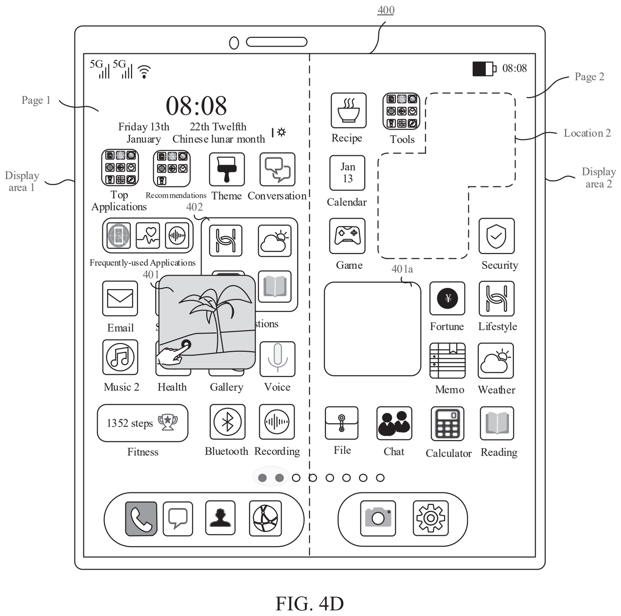

The electronic device 100 may display, in response to an operation of moving the gallery widget 401 to a location 1 by the user, the home screen 400 shown in FIG. 4D. A size of the location 1 is the same as a size of the gallery widget 401. In some embodiments, the electronic device 100 may detect the track and a moving speed of the drag operation of the user for the gallery widget 401. When detecting that the user drags the gallery widget 401 to the display area 1 and the moving speed is less than a preset value, as shown in FIG. 4D, the electronic device 100 may determine, based on the location 1 of the gallery widget 401 in the display area 1, one or more conflicting elements originally displayed at the location 1.

As shown in FIG. 4D, the gallery widget 401 is displayed at the location 1 in the display area 1, and the location 1 includes the following four units in the display area 1: the unit (4, 2), the unit (4, 3), the unit (5, 2), and the unit (5, 3). Digits in the parenthesis respectively represent a row and a column in which the unit is located in the display area. For details, refer to related descriptions in Formula (3). It can be learned from FIG. 4A that, before the drag operation of the user, in the display area 1, an interface element originally displayed at the unit (4, 2) is the setting application icon 403, an interface element originally displayed at the unit (4, 3) is the large application folder 402 (a lower left part of the large application folder 402), an interface element originally displayed at the unit (5, 2) is the health application icon 404, and an interface element originally displayed at the unit (5, 3) is the gallery application icon 405. In other words, there is an incomplete conflicting element in the conflicting elements displayed at the location 1 (that is, a part of the one or more conflicting elements is displayed at the location 1). Therefore, the electronic device 100 may determine that the one or more conflicting elements included in a conflicting element set are the large application folder 402, the setting application icon 403, the health application icon 404, and the gallery application icon 405. The conflicting element set occupies seven units, and occupies three rows and three columns in the display area 1. Occupation of each unit in the three rows and the three columns by the conflicting element set may be represented by using the following 3*3-dimensional location-occupying matrix C1:

$$C1 = \begin{pmatrix} 0 & 1 & 1 \\ 1 & 1 & 1 \\ 1 & 1 & 0 \end{pmatrix} \text{ formula (5)}$$

It can be learned from Formula (5) that, in the units that are in the three rows and the three columns and that correspond to the conflicting element set, only a unit (1, 1) and a unit (3, 3) are not occupied, and all other units are occupied by the conflicting element set. In other words, the conflicting element set needs to occupy seven units, and the seven units include all units other than a unit in an upper left corner and a unit in a lower right corner in the units in the three rows and the three columns.

In a process in which the gallery widget 401 moves to the display area 1 along with the operation of the user, because the gallery widget 401 leaves the display area 2, unoccupied units in the display area 2 increase. In this case, occupation of each unit in the display area 2 by each interface element on the page 2 may be represented by using the following 6*4-dimensional screen location-occupying matrix D1:

$$D1 = \begin{pmatrix} 1 & 1 & 0 & 0 \\ 1 & 0 & 0 & 0 \\ 1 & 0 & 0 & 1 \\ 0 & 0 & 1 & 1 \\ 0 & 0 & 1 & 1 \\ 1 & 1 & 1 & 1 \end{pmatrix} \text{ formula (6)}$$

It can be learned from Formula (6) that, in a process of dragging the gallery widget 401 from the display area 2 to the display area 1, the display area 2 may include 4*6=24 units, unoccupied units in the 24 units include the following a plurality of units: a unit (1, 3), a unit (1, 4), a unit (2, 2), a unit (2, 3), a unit (2, 4), a unit (3, 2), a unit (3, 3), a unit (4, 1), a unit (4, 2), a unit (5, 1), and a unit (5, 2), and interface elements are displayed in all other units.

Based on the screen location-occupying matrix D1 of the display area 2 and the location-occupying matrix C1 of the conflicting element set, the electronic device 100 may determine that the location 2 exists in the display area 2, so that the electronic device 100 can maintain a location relationship between the conflicting elements in the conflicting element set, and place the conflicting element set at the location 2. In other words, one or more conflicting elements arranged in an original layout can be accommodated and displayed at the location 2 in the display area 2. As shown in FIG. 4D, the location 2 includes the following seven units in the display area 2: a unit (1, 3), a unit (1, 4), a unit (2, 2), a unit (2, 3), a unit (2, 4), a unit (3, 2), and a unit (3, 3).

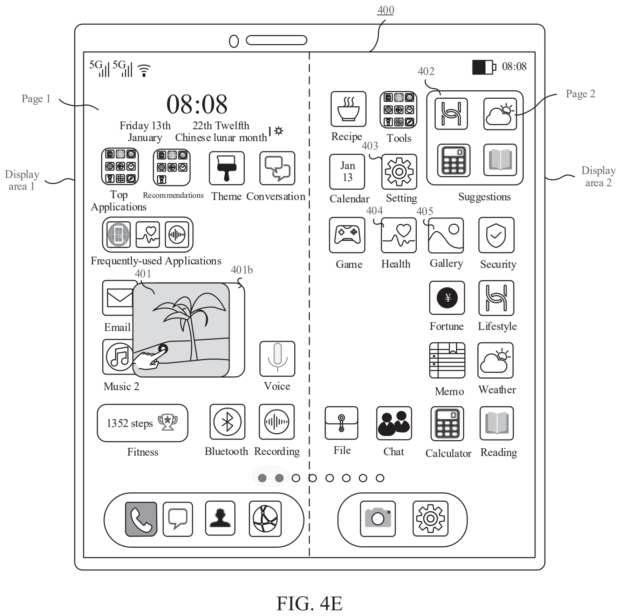

After determining that the location 2 at which the one or more conflicting elements can be accommodated and displayed with relative locations of the one or more conflicting elements maintained exists in the display area 2, as shown in FIG. 4E, the electronic device 100 may maintain the relative locations of the one or more conflicting elements, and display the one or more conflicting elements at the location 2 in the display area 2.

As shown in FIG. 4E, in the display area 2, the setting application icon 403 is displayed at the unit (2, 2), the health application icon 404 is displayed at the unit (3, 2), the gallery application icon 405 is displayed at the unit (3, 3), and the large application folder 402 occupies the following four units in the display area 2: the unit (1, 3), the unit (1, 4), the unit (2, 3), and the unit (2, 4). In other words, the one or more conflicting elements are displayed at the location 2 in the display area 2, maintaining relative locations before the drag operation of the user. Optionally, a target location prompt, for example, a rectangular box 401b, may be further displayed at the location 1 in the display area 1, and the rectangular box 401b may include all the units occupied by the location 1. The target location prompt is used to inform the user that the target location may be used to place the gallery widget 401. It may be understood that, in some other embodiments, the target location prompt may alternatively be a prompt box or a prompt window in another shape, or a prompt of another type like a text or an animation. This is not limited herein in this application.

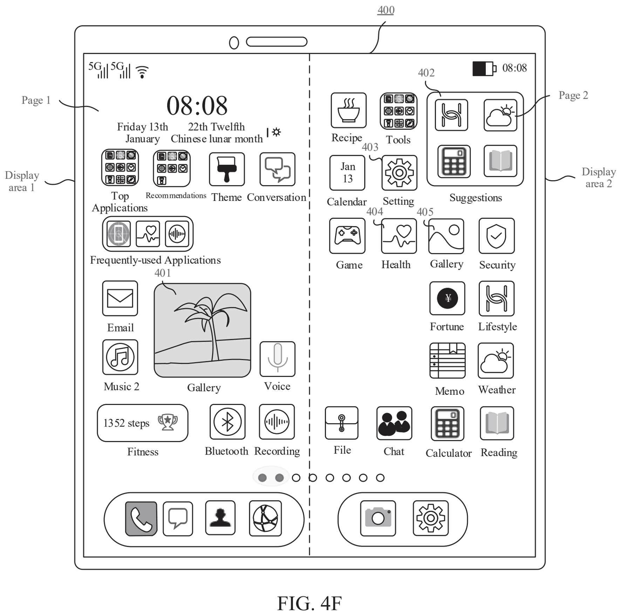

The electronic device 100 may receive and respond to an operation of releasing the gallery widget 401 at the location 1 by the user, as shown in FIG. 4F, and display the gallery widget 401 at the location 1 in the display area 1.

As shown in FIG. 4F, the gallery widget 401 is displayed at the location 1 in the display area 1, and a text "Gallery" may be further displayed below the gallery widget 401, to prompt a name of the gallery widget 401. In comparison with the home screen 400 shown in FIG. 4A, on the home screen 400 shown in FIG. 4F, the gallery widget 401 is displayed in the display area 1, and the conflicting element set (including the large application folder 402, the setting application icon 403, the health application icon 404, and the gallery application icon 405) is displayed in the display area 2.

It may be understood that the embodiment shown in FIG. 4A to FIG. 4F is merely an example. In embodiments of this application, the electronic device 100 may alternatively include more display areas, the interface element 1 may alternatively be an interface element other than the gallery widget 401, and the display area 1 and the display area 2 may alternatively include more or fewer interface elements, or interface elements different from those in the foregoing embodiment. Each display area may alternatively include more or fewer units than those in the foregoing embodiment, or units arranged in different manners, and the screen occupation information matrix corresponding to the display area may alternatively include a unit in the dock area. This is not limited herein in this application.

In some application scenarios, a foldable display of an electronic device 100 may include a display area 1 and a display area 2. When the foldable display is in an unfolded form, the electronic device 100 may display a page 1 of a home screen in the display area 1, and display a page 2 of the home screen in the display area 2. The page 2 may include an interface element 1 displayed at an initial location. When receiving an operation of moving the interface element 1 from the initial location on the page 2 to a location 1 on the page 1 by the user, if one or more interface elements (also referred to as conflicting elements) displayed at the location 1 can be separately accommodated and displayed in the display area 2, the electronic device 100 separately display, at a location in a location set, the one or more interface elements displayed at the location 1 and display the interface element 1 at the location 1. In this way, even if a location 2 at which the one or more conflicting elements arranged in a first layout can be accommodated does not exist in the display 2, the electronic device 100 may search for, in the display area 2, the location set in which each conflicting element can be separately accommodated, display the one or more conflicting elements at the location in the location set, and display the interface element 1 at the location 1. This simplifies operation steps and improves efficiency.

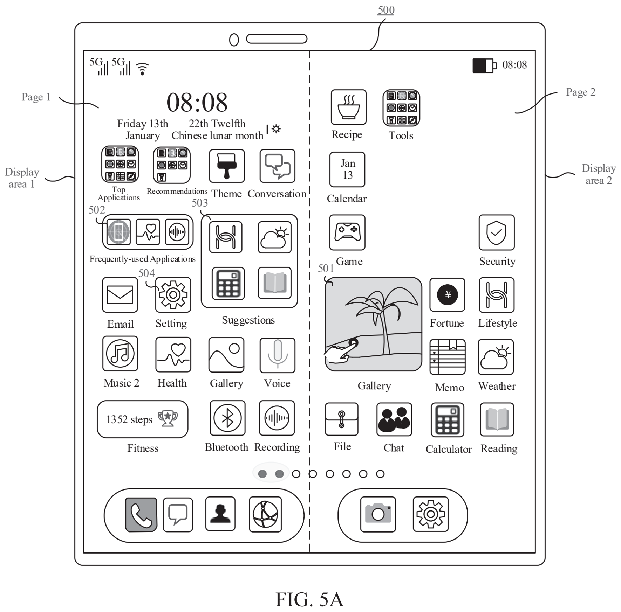

For example, as shown in FIG. 5A, the foldable display of the electronic device 100 may include the display area 1 and the display area 2, and the foldable display is in an unfolded state. A home screen 500 is displayed on the foldable display.

The home screen 500 displays two pages on which interface elements (such as an application icon, a service widget, and an application folder) are placed, including a page 1 and a page 2. The page 1 is displayed in the display area 1, and the page 2 is displayed in the display area 2. One or more interface elements (such as a frequently-used application folder 502, a large application folder 503, and a setting application icon 504) may be displayed on the page 1. One or more interface elements (such as a gallery widget 501, a fortune application icon, and a memo application icon) may be displayed on the page 2. Optionally, one or more of a page indicator, a status bar, and a dock area may be further displayed on the home screen 500. For specific descriptions of the one or more pieces of content, refer to related descriptions in the embodiment shown in FIG. 3A. Details are not described herein again. The following describes a display location of an interface element on a page in a display area with reference to FIG. 5A. Both the display area 1 and the display area 2 may include a plurality of units. When the page 1 is displayed in the display area 1, each interface element on the page 1 may occupy one or more units in the display area 1. When the page 2 is displayed in the display area 2, each interface element on the page 2 may occupy one or more units in the display area 2. A quantity of units occupied by an interface element and a location relationship between a plurality of units occupied by the interface element are determined by a size of the interface element. For a specific relationship, refer to related content in the embodiment shown in FIG. 1J. The dock area is not considered temporarily. For example, units in each display area are arranged in six rows and four columns. A 6*4-dimensional matrix may be constructed, and each digit in the matrix may correspond to one unit in the display area 1. A row ranking and a column ranking of the digit in the matrix may correspond to a row ranking and a column ranking of the unit in the display area 1. In the matrix, "1" represents that the unit is occupied (that is, an interface element is displayed), and "0" represents that the unit is not occupied. According to the page 1 shown in FIG. 5A, occupation of each unit in the display area 1 by each interface element on the page 1 may be represented by using the following 6*4-dimensional screen location-occupying matrix A2:

$$A2 = \begin{cases} 1 & 1 & 1 & 1 \\ 1 & 1 & 1 & 1 \\ 1 & 1 & 1 & 1 \\ 1 & 1 & 1 & 1 \\ 1 & 1 & 1 & 1 \\ 1 & 1 & 1 & 1 \end{cases} \text{ formula (7)}$$

It can be learned from Formula (7) that, when the page 1 is displayed in the display area 1, the display area 1 may include 4*6=24 units, and there is no unoccupied unit in the 24 units, that is, an interface element is displayed in each unit in the display area 1. A digit on the left side in a parenthesis represents a row ranking of the unit in the display area, and rows are sorted from top to bottom. A digit on the right side in the parenthesis represents a column ranking of the unit in the display area, and columns are sorted from left to right.

Similarly, it may be learned that, according to the page 2 shown in FIG. 5A, occupation of each unit in the display area 2 by each interface element on the page 2 may be represented by using the following 6*4-dimensional screen location-occupying matrix B2:

$$B2 = \begin{cases} 1 & 1 & 0 & 0 \\ 1 & 0 & 0 & 0 \\ 1 & 0 & 0 & 1 \\ 1 & 1 & 1 & 1 \\ 1 & 1 & 1 & 1 \\ 1 & 1 & 1 & 1 \end{cases} \text{ formula (8)}$$

It can be learned from Formula (8) that, when the page 2 is displayed in the display area 2, the display area 2 may include 4*6=24 units, unoccupied units in the 24 units include the following a plurality of units: a unit (1, 3), a unit (1, 4), a unit (2, 2), a unit (2, 3), a unit (2, 4), a unit (3, 2), and a unit (3, 3), and interface elements are displayed in all other units. A digit on the left side in a parenthesis represents a row ranking of the unit in the display area, and rows are sorted from top to bottom. A digit on the right side in the parenthesis represents a column ranking of the unit in the display area, and columns are sorted from left to right.

Interface elements such as the frequently-used application folder 502, the large application folder 503, and the setting application icon 504 are displayed on the page 1 displayed in the display area 1. A size of the frequently-used application folder 502 is 1*2, and the frequently-used application folder 502 occupies the following two units in the display area 1: a unit (3, 1) and the unit (3, 2). A size of the large application folder 503 is 2*2, and the large application folder 503 occupies the following four units in the display area 1: the unit (3, 3), a unit (3, 4), a unit (4, 3), and a unit (4, 4). The setting application icon 504 occupies a unit (4, 2) in the display area 1. The gallery widget 501 is displayed on the page 2 displayed in the display area 2. A size of the gallery widget 501 is 2*2, that is, the gallery widget 501 needs to occupy four units, and the four units are arranged in a square shape. It can be learned from the page 2 shown in FIG. 5A that a location occupied by the gallery widget 501 in the display area 2 includes the following four units: a unit (4, 1), a unit (4, 2), a unit (5, 1), and a unit (5, 2).

The electronic device 100 may receive and respond to a touch and hold operation of the user for the gallery widget 501, and display an edit bar 505 near the gallery widget 501.

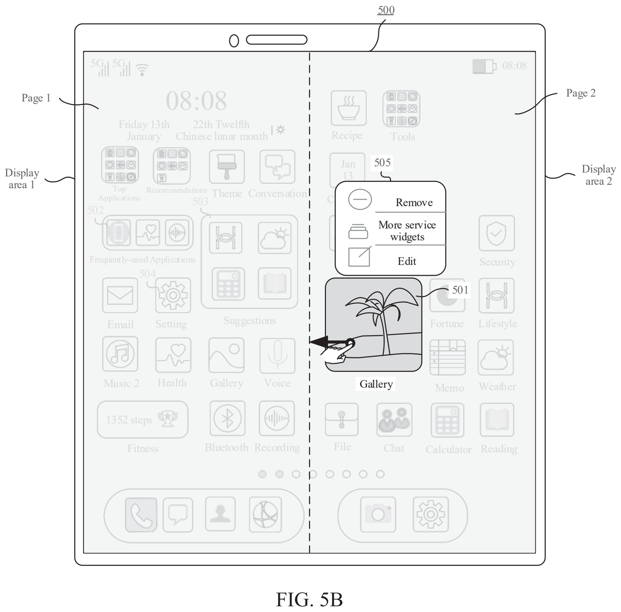

As shown in FIG. 5B, one or more controls may be displayed in the edit bar 505, for example, a remove control, a more service widgets control, and an edit control. For a specific description of the control in the edit bar 505, refer to related content shown in FIG. 3B. Details are not described herein again. Optionally, when displaying the edit bar 505, the electronic device 100 may further display other interface elements (interface elements other than the gallery widget 501 and the edit bar 505) on the home screen 500 in a fuzzy manner, to highlight the gallery widget 501. This helps the user focus on the gallery widget 501 and the edit bar 505.

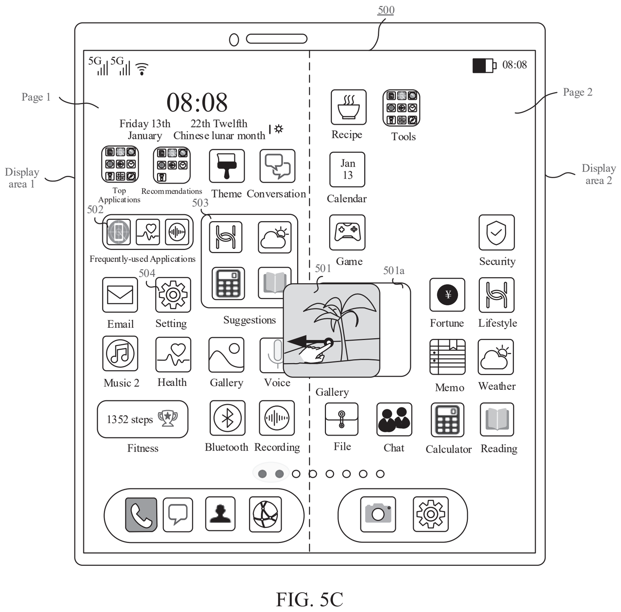

The electronic device 100 may receive and respond to a drag operation of the user for the gallery widget 501, as shown in FIG. 5C, disable display of the edit bar 505, and enable the gallery widget 501 to move along a track of the drag operation of the user.

As shown in FIG. 5C, on the home screen 500, display of the edit bar 505 is disabled, and the gallery widget 501 may move along the track of the drag operation of the user. Optionally, in a moving process of the gallery widget 501, an initial location prompt may be displayed at an initial location of the gallery widget 501 in the display area 2, for example, a rectangular box 501a shown in FIG. 5C. The rectangular box 501a may include all units occupied by the initial location. The initial location prompt may be used to inform the user of the initial location of the gallery widget 501 before the movement.

It may be understood that, in some other embodiments, the initial location prompt may alternatively be a prompt box or a prompt window in another shape, or a prompt of another type like a text or an animation. This is not limited herein in this application.

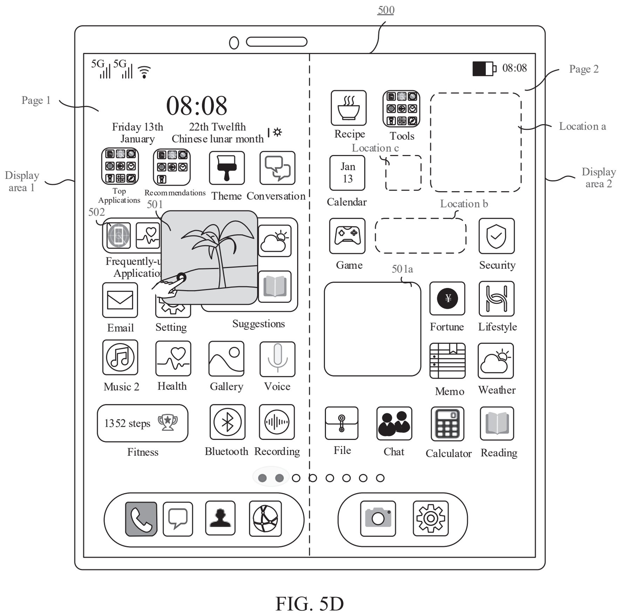

The electronic device 100 may display, in response to an operation of moving the gallery widget 501 to a location 1 by the user, the home screen 500 shown in FIG. 5D. A size of the location 1 is the same as a size of the gallery widget 501. In some embodiments, the electronic device 100 may detect the track and a moving speed of the drag operation of the user for the gallery widget 501. When detecting that the user drags the gallery widget 501 to the display area 1 and the moving speed is less than a preset value, as shown in FIG. 5D, the electronic device 100 may determine, based on the location 1 of the gallery widget 501 in the display area 1, one or more conflicting elements originally displayed at the location 1.

As shown in FIG. 5D, the gallery widget 501 is displayed at the location 1 in the display area 1, and the location 1 includes the following four units in the display area 1: the unit (3, 2), the unit (3, 3), the unit (4, 2), and the unit (4, 3). Digits in the parenthesis respectively represent a row and a column in which the unit is located in the display area. For details, refer to related descriptions in Formula (7). It can be learned from FIG. 5A that, before the drag operation of the user, in the display area 1, an interface element originally displayed at the unit (3, 2) is the frequently-used application folder 502 (a right half part of the frequently-used application folder 502), an interface element originally displayed at the unit (4, 2) is the setting application icon 504, and an interface element originally displayed at the unit (3, 3) and the unit (4, 3) is the large application folder 503 (a left half part of the large application folder 503). In other words, a part of the one or more conflicting elements is displayed at the location 1. Therefore, the electronic device 100 may determine that the one or more conflicting elements included in a conflicting element set are the frequently-used application folder 502, the large application folder 503, and the setting application icon 504. The conflicting element set occupies seven units, and occupies two rows and four columns in the display area 1. Occupation of each unit in the two rows and the four columns by the conflicting element set may be represented by using the following 2*4-dimensional location-occupying matrix C2:

$$C2 = \begin{Bmatrix} 1 & 1 & 1 & 1 \\ 0 & 1 & 1 & 1 \end{Bmatrix} \text{ formula (9)}$$

It can be learned from Formula (9) that, in the units that are in the two rows and the four columns and that correspond to the conflicting element set, only a unit (2, 1) is not occupied, and all other units are occupied by the conflicting element set. In other words, the conflicting element set needs to occupy seven units, and the seven units include all units other than a unit in a lower left corner in the units in the two rows and the four columns.

In a process in which the gallery widget 501 moves to the display area 1 along with the operation of the user, because the gallery widget 501 leaves the display area 2, unoccupied units in the display area 2 increase. In this case, occupation of each unit in the display area 2 by each interface element on the page 2 may be represented by using the following 6*4-dimensional screen location-occupying matrix D2:

$$D2 = \begin{Bmatrix} 1 & 1 & 0 & 0 \\ 1 & 0 & 0 & 0 \\ 1 & 0 & 0 & 1 \\ 0 & 0 & 1 & 1 \\ 0 & 0 & 1 & 1 \\ 1 & 1 & 1 & 1 \end{Bmatrix} \text{ formula (10)}$$

It can be learned from Formula (10) that, in a process of dragging the gallery widget 501 from the display area 2 to the display area 1, the display area 2 may include 4*6=24 units, unoccupied units in the 24 units include the following a plurality of units: a unit (1, 3), a unit (1, 4), a unit (2, 2), a unit (2, 3), a unit (2, 4), a unit (3, 2), a unit (3, 3), a unit (4, 1), a unit (4, 2), a unit (5, 1), and a unit (5, 2), and interface elements are displayed in all other units.

Based on the screen location-occupying matrix D2 of the display area 2 and the location-occupying matrix C2 of the conflicting element set, the electronic device 100 may determine that a location set exists in the display area 2. The location set includes a location a, a location b, and a location c. The location a can be used to place the large application folder 503, the location b can be used to place the frequently-used application folder 502, and the location c can be used to place the setting application icon 504. As shown in FIG. 5D, the location a includes the following four units in the display area 2: the unit (1, 3), the unit (1, 4), the unit (2, 3), and the unit (2, 4). The location b includes the following two units in the display area 2: the unit (3, 2) and the unit (3, 3). The location a includes the unit (2, 2) in the display area 2.

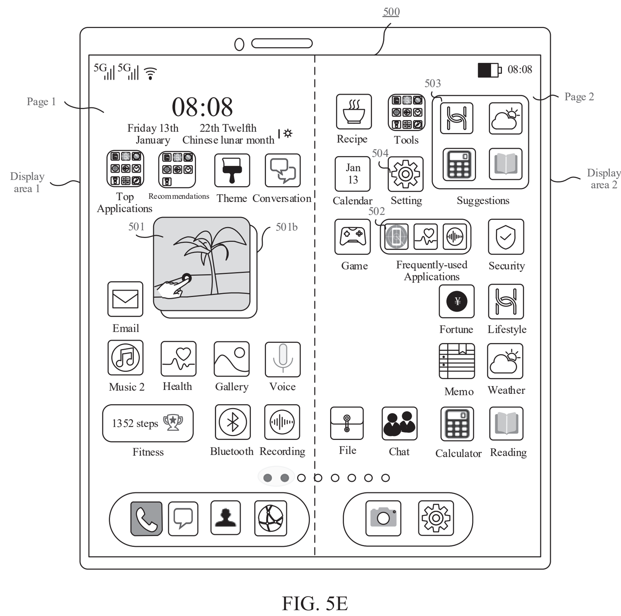

After determining that one or more locations at which the one or more conflicting elements can be separately accommodated and displayed exist in the display area 2, as shown in FIG. 5E, the electronic device 100 may display the large application folder 503 at the location a in the display area 2, display the frequently-used application folder 502 at the location b in the display area 2, and display the setting application icon 504 at the location c in the display area 2.

As shown in FIG. 5E, the large application folder 503 occupies the following four units in the display area 2: the unit (1, 3), the unit (1, 4), the unit (2, 3), and the unit (2, 4). The frequently-used application folder 502 occupies the following two units in the display area 2: the unit (3, 2) and the unit (3, 3). The setting application icon 504 occupies the unit (2, 2) in the display area 2. Optionally, a target location prompt, for example, a rectangular box 501b, may be further displayed at the location 1 in the display area 1, and the rectangular box 501b may include all the units occupied by the location 1. The target location prompt is used to inform the user that the target location may be used to place the gallery widget 501. It may be understood that, in some other embodiments, the target location prompt may alternatively be a prompt box or a prompt window in another shape, or a prompt of another type like a text or an animation. This is not limited herein in this application.

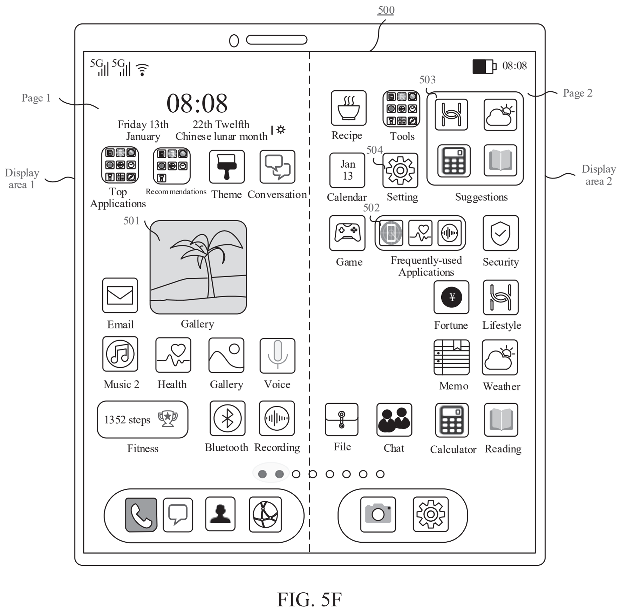

The electronic device 100 may receive and respond to an operation of releasing the gallery widget 501 at the location 1 by the user, as shown in FIG. 5F, and display the gallery widget 501 at the location 1 in the display area 1.

As shown in FIG. 5F, the gallery widget 501 is displayed at the location 1 in the display area 1, and a text "Gallery" may be further displayed below the gallery widget 501, to prompt a name of the gallery widget 501. In comparison with the home screen 500 shown in FIG. 5A, on the home screen 500 shown in FIG. 5F, the gallery widget 501 is displayed in the display area 1, and the conflicting element set (including the frequently-used application folder 502, the large application folder 503, and the setting application icon 504) is displayed in the display area 2.

It may be understood that the embodiment shown in FIG. 5A to FIG. 5F is merely an example. In embodiments of this application, the electronic device 100 may alternatively include more display areas, the interface element 1 may alternatively be an interface element other than the gallery widget 501, and the display area 1 and the display area 2 may alternatively include more or fewer interface elements, or interface elements different from those in the foregoing embodiment. Each display area may alternatively include more or fewer units than those in the foregoing embodiment, or units arranged in different manners, and the screen occupation information matrix corresponding to the display area may alternatively include a unit in the dock area. This is not limited herein in this application.

In some application scenarios, a foldable display of an electronic device 100 may include a display area 1 and a display area 2. When the foldable display is in an unfolded form, the electronic device 100 may display a page 1 of a home screen in the display area 1, and display a page 2 of the home screen in the display area 2. The page 2 may include an interface element 1 displayed at an initial location. When receiving an operation of moving the interface element 1 from the initial location on the page 2 to the location 1 on the page 1 by the user, if one or more interface elements (also referred to as conflicting elements) displayed at the location 1 cannot be separately accommodated and displayed in the display area 2, the electronic device 100 may determine that location squeezing fails, and display the interface element 1 at the initial location after detecting an operation of releasing the interface element 1 by the user.

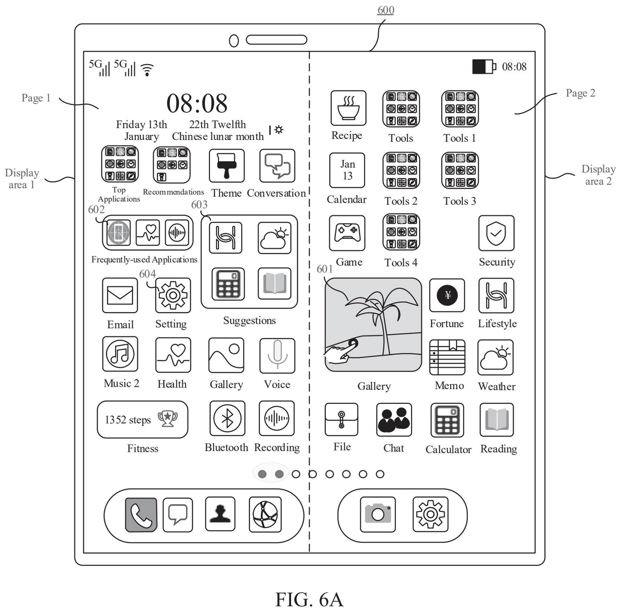

For example, as shown in FIG. 6A, the foldable display of the electronic device 100 may include the display area 1 and the display area 2. When the foldable display is in an unfolded form, the electronic device 100 may display a home screen 600 on the foldable display.

The home screen 600 displays two pages on which interface elements (such as an application icon, a service widget, and an application folder) are placed, including a page 1 and a page 2. The page 1 is displayed in the display area 1, and the page 2 is displayed in the display area 2. One or more interface elements (such as a frequently-used application folder 602, a large application folder 603, and a setting application icon 604) may be displayed on the page 1. One or more interface elements (such as a gallery widget 601, a fortune application icon, and a memo application icon) may be displayed on the page 2. Optionally, one or more of a page indicator, a status bar, and a dock area may be further displayed on the home screen 600. For specific descriptions of the one or more pieces of content, refer to related descriptions in the embodiment shown in FIG. 3A. Details are not described herein again.

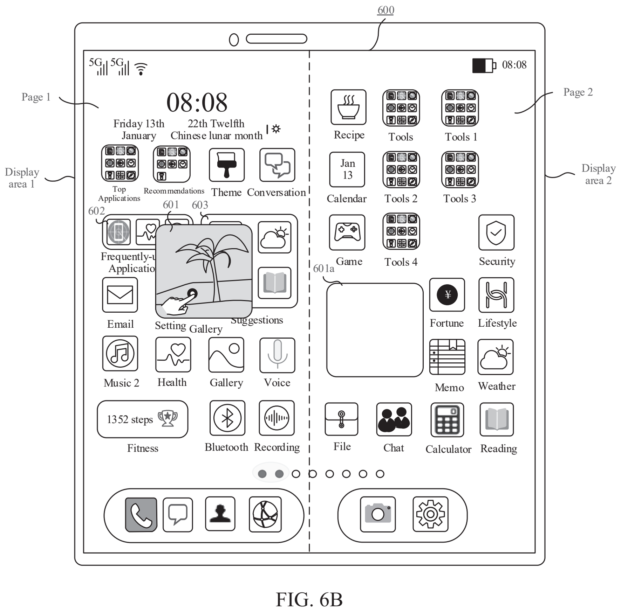

The electronic device 100 may receive and respond to an operation of dragging the gallery widget 601 to the location 1 in the display area 1 by the user, and display the home screen 600 shown in FIG. 6B. The operation of dragging the gallery widget 601 to the location 1 in the display area 1 by the user may include a touch and hold operation and a drag operation of the user for the gallery widget 601. For a specific interface change diagram, refer to the diagrams of interfaces shown in FIG. 3B to FIG. 3D, FIG. 4B to FIG. 4D, and FIG. 5B to FIG. 5D. Details are not described herein again.

As shown in FIG. 6B, interface elements displayed at the location 1 may include the frequently-used application folder 602, the large application folder 603, and the setting application icon 604. These interface elements are conflicting elements. In addition, at the location 1, a right half part of the frequently-used application folder 602, a left half part of the large application folder 603, and all of the setting application icon 604 are displayed. Optionally, an initial location prompt may be further displayed at an initial location of the gallery widget 601. The initial location prompt may be a rectangular box 601a shown in FIG. 6B, or may be a prompt in another shape. It can be learned from FIG. 6B that, a location set in which the foregoing conflicting elements can be separately accommodated and displayed does not exist in the display area 2.

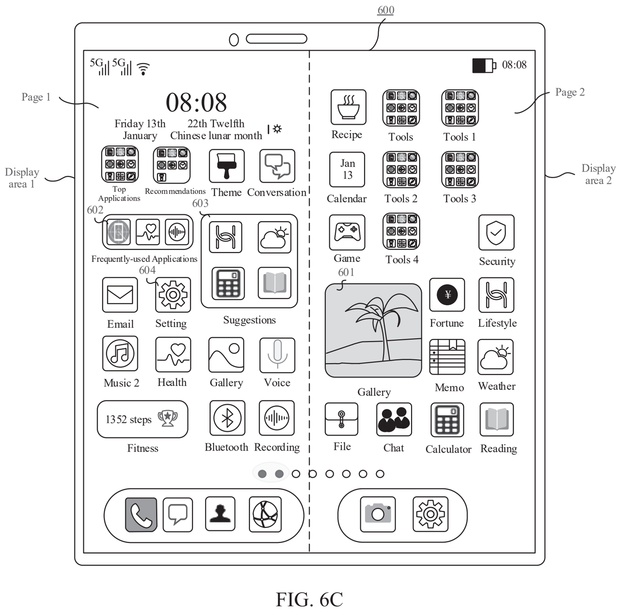

When determining that locations at which the conflicting elements can be accommodated and displayed cannot be separately found in the display area 2 for the four conflicting elements, the electronic device 100 may receive and respond to a release operation of the user, display the home screen 600 shown in FIG. 6C, and display the gallery widget 601 at the initial location in the display area 2.

As shown in FIG. 6C, the electronic device 100 displays the home screen 600, and the home screen 600 displayed in FIG. 6C is completely the same as the home screen 600 displayed in FIG. 6A.

In some other embodiments, when the electronic device 100 receives an operation of moving the interface element 1 from the initial location on the page 2 to the location 1 on the page 1, if a location set in which one or more interface elements (also referred to as conflicting elements) displayed at the location 1 can be separately accommodated and displayed does not exist in the display area 2, the electronic device 100 may alternatively add a new page, arrange and display the one or more conflicting elements in a first layout on the new page, and display an interface element 1 at the location 1. In this way, when there is no location set that can accommodate the conflicting elements on the page 1 and the page 2, the new page may be added to ensure that the interface element 1 is successfully moved.

For example, in response to an operation of moving the gallery widget 601 from the initial location in the display area 2 to the location 1 in the display area 1 by the user, the electronic device 100 displays the home screen 600 shown in FIG. 6B.

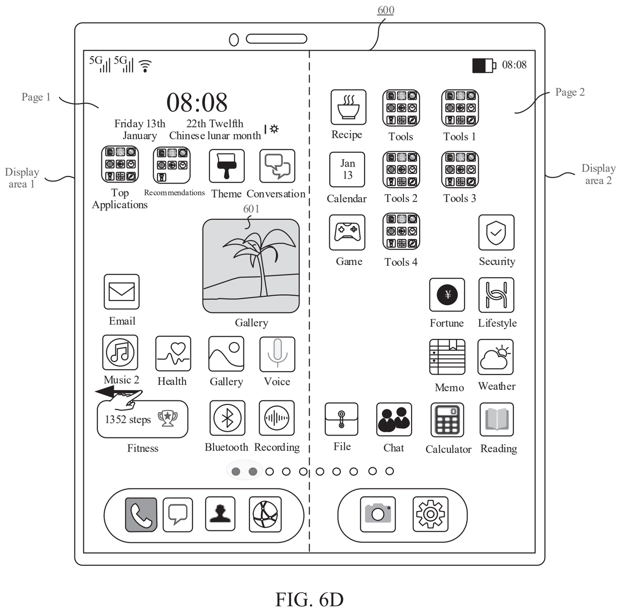

When determining that the locations at which the conflicting elements can be accommodated and displayed cannot be separately found in the display area 2 for the four conflicting elements, the electronic device 100 may receive and respond to the release operation of the user, display the home screen 600 shown in FIG. 6D, and display the gallery widget 601 at the location 1 in the display area 1.

As shown in FIG. 6D, the gallery widget 601 is displayed in the display area 1, and the four conflicting elements originally displayed at the location 1 are no longer displayed in the display area 1. In addition, in comparison with the embodiment shown in FIG. 6B, a page indicator on the home screen 600 shown in FIG. 6D indicates that two pages are added to the home screen 600.

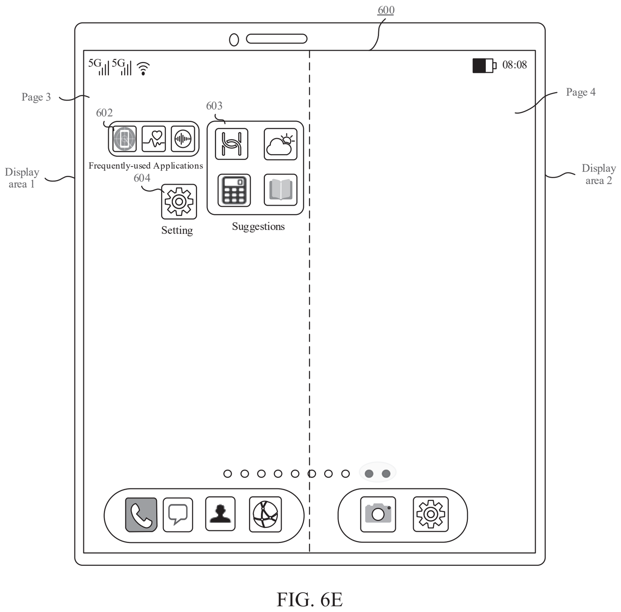

The electronic device 100 may receive and respond to an operation (for example, a plurality of leftward sliding operations) of switching pages to two rightmost pages by the user, and display a page 3 and a page 4 shown in FIG. 6E on the home screen 600. The conflicting elements originally displayed at the location 1 are displayed on the page 3.

As shown in FIG. 6E, the page 3 and the page 4 may be displayed on the home screen 600. The conflicting elements originally displayed at the location 1 are displayed on the page 3, and the conflicting elements may be displayed in an original location relationship.

In some application scenarios, a foldable display of an electronic device 100 may include a display area 1 and a display area 2. When the foldable display is in an unfolded form, the electronic device 100 may display a page 1 of a home screen in the display area 1, and display a page 2 of the home screen in the display area 2.

The page 2 may include an interface element 1 displayed at an initial location. When the electronic device 100 receives an operation of moving the interface element 1 from the initial location on the page 2 to the location 1 on the page 1 by the user, if one or more interface elements (also referred to as location-squeezing elements) displayed in a second layout at a location 3 below the location 1 can be accommodated and displayed (separately accommodated and displayed or accommodated and displayed in the second layout) in the display area 2, the electronic device 100 may display, in a first layout at a location 4 below the location 1, interface elements originally displayed in the first layout at the location 1, display, in the display area 2, conflicting elements originally displayed at the location 3, and display the interface element 1 at the location 1. A size of the location 4 is a size of an entire area occupied by the one or more interface elements arranged and displayed in the first layout at the location 1. The location 3 may be the same as or different from the location 4. In this way, downward location squeezing may be performed on the interface elements at the location 1, and the conflicting elements at the location 3 below the location 1 may be squeezed into another display area. This improves efficiency, and may further enable the original interface elements at the location 1 to be displayed in the original layout in the display area 1, to facilitate use by the user. In some embodiments, the location 3 may alternatively be a location above, on a left side, or on a right side of the location 1. This is not limited herein in this application.

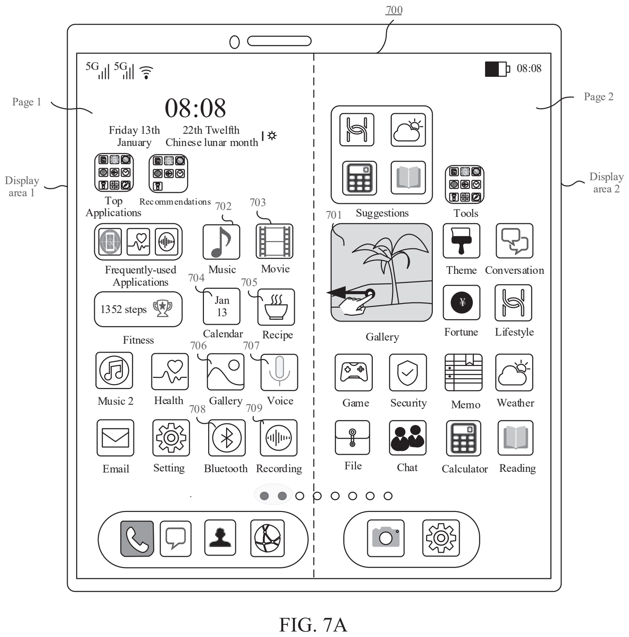

For example, as shown in FIG. 7A, the foldable display of the electronic device 100 may include the display area 1 and the display area 2. When the foldable display is in an unfolded form, the electronic device 100 may display a home screen 600 on the foldable display.

The home screen 700 displays two pages on which interface elements (such as an application icon, a service widget, and an application folder) are placed, including a page 1 and a page 2. The page 1 is displayed in the display area 1, and the page 2 is displayed in the display area 2. One or more interface elements (such as a music application icon 702, a movie application icon 703, a calendar application icon 704, a recipe application icon 705, a gallery application icon 706, a voice application icon 707, a Bluetooth application icon 708, and a recording application icon 709) may be displayed on the page 1. One or more interface elements (such as a gallery widget 701, a fortune application icon, and a memo application icon) may be displayed on the page 2. Optionally, one or more of a page indicator, a status bar, and a dock area may be further displayed on the home screen 700. For specific descriptions of the one or more pieces of content, refer to related descriptions in the embodiment shown in FIG. 3A. Details are not described herein again.

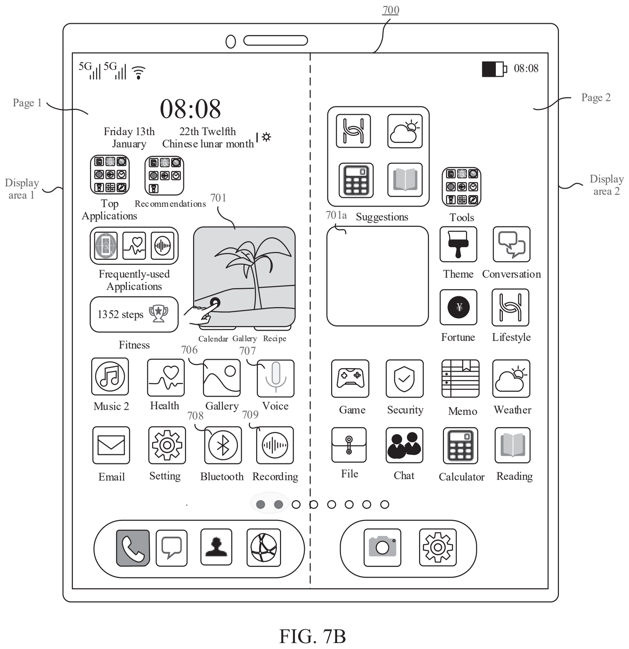

The electronic device 100 may receive and respond to an operation of dragging the gallery widget 701 to the location 1 in the display area 1 by the user, and display the home screen 700 shown in FIG. 7B. The operation of dragging the gallery widget 701 to the location 1 in the display area 1 by the user may include a touch and hold operation and a drag operation of the user for the gallery widget 701. For a specific interface change diagram, refer to the diagrams of interfaces shown in FIG. 3B to FIG. 3D, FIG. 4B to FIG. 4D, and FIG. 5B to FIG. 5D. Details are not described herein again.

As shown in FIG. 7B, the gallery widget 701 covers and is displayed at the location 1. The following four interface elements are displayed at the location 1 on the page 1: the music application icon 702, the movie application icon 703, the calendar application icon 704, and the recipe application icon 705, and the four interface elements are in 2*2 row-column distribution. The following four interface elements are displayed at a location 3 below the location 1: the gallery application icon 706, the voice application icon 707, the Bluetooth application icon 708, and the recording application icon 709. The four interface elements are in 2*2 row-column distribution, and a size of the location 3 is the same as a size of a location occupied by the four interface elements at the location 1. Optionally, an initial location prompt may be further displayed at an initial location of the gallery widget 701. The initial location prompt may be a rectangular box 701a shown in FIG. 7B, or may be a prompt in another shape. It can be learned from FIG. 7B that the four interface elements displayed at the location 3 may be accommodated and displayed at the initial location in the display area 2.

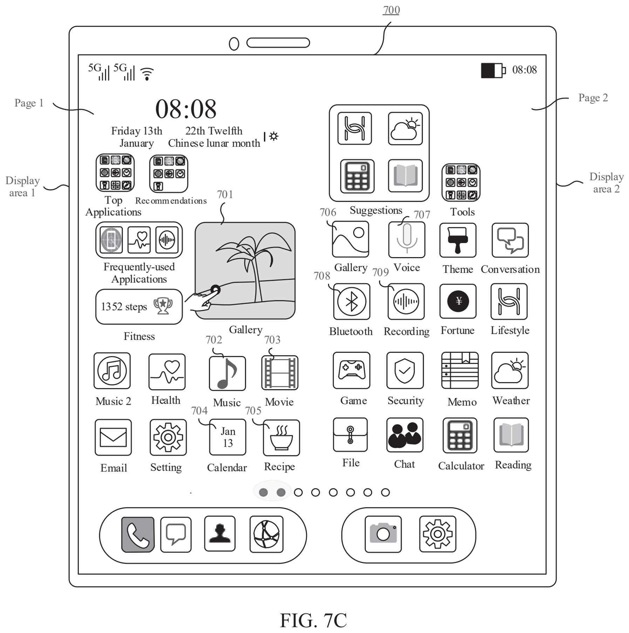

When detecting that a moving speed at which the user drags the gallery widget 701 is less than a preset value, the electronic device 100 may perform downward location squeezing the four interface elements displayed at the location 1, to display a home screen 600 shown in FIG. 7C.

As shown in FIG. 7C, the gallery widget 701 is displayed at the location 1 on the page 1, and the music application icon 702, the movie application icon 703, the calendar application icon 704, and the recipe application icon 705 are displayed at the location 3 below the location 1. In addition, the four interface elements are in 2*2 row-column distribution. The gallery application icon 706, the voice application icon 707, the Bluetooth application icon 708, and the recording application icon 709 are displayed at the initial location in the display area 2, and the four interface elements are in 2*2 row-column distribution.

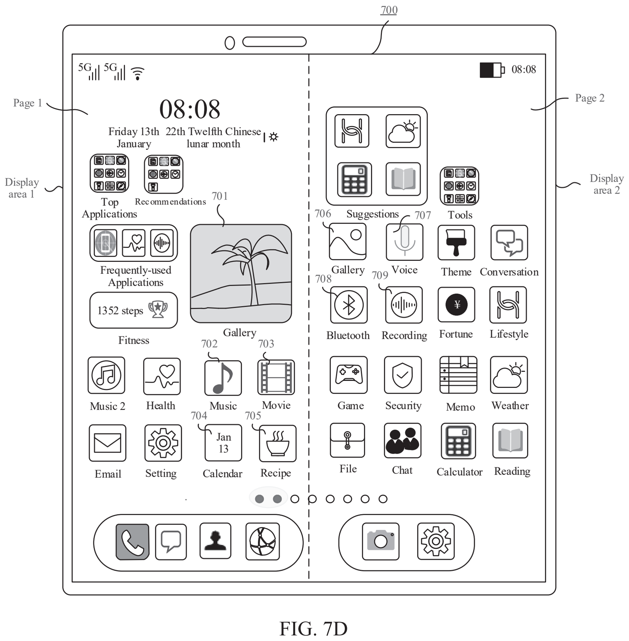

The electronic device 100 may receive and respond to a release operation of the user, as shown in FIG. 7D, and maintain a layout of interface elements on the home screen 700 shown in FIG. 7C.

It may be understood that the embodiment shown in FIG. 7A to FIG. 7D is merely an example. In embodiments of this application, if the interface elements (namely, conflicting elements) accommodated and displayed in the first layout at the location 3 can be accommodated and displayed in the first layout at the initial location in the display area 2, the electronic device 100 may display the conflicting elements in the first layout at the initial location. If a location 2 at which the conflicting elements can be accommodated and displayed in the first layout exists in the display area 2, the electronic device 100 may also display the conflicting elements in the first layout at the location 2, where the location 2 is different from the initial location. If the foregoing conflicting elements can be separately accommodated and displayed in the display area 2, the electronic device 100 may also separately display the conflicting elements in the display area 2.

The following describes a procedure of an interface element moving method according to an embodiment of this application.

FIG. 8A and FIG. 8B are a schematic flowchart of an interface element moving method according to an embodiment of this application.

As shown in FIG. 8A and FIG. 8B, a specific procedure of the interface element moving method may include the following steps.

S801: An electronic device 100 is in an unfolded form, one or more interface elements are displayed in a display area 1, and one or more interface elements are displayed in a display area 2, including an interface element 1.

A device form of the electronic device 100 is the unfolded form. For specific descriptions of the unfolded form, refer to related content in the embodiments shown in FIG. 1B and FIG. 1E. Details are not described herein again.

In the unfolded form, the one or more interface elements are displayed in the display area 1 of the electronic device 100, and the one or more interface elements (including the interface element 1) may also be displayed in the display area 2.

For example, in the embodiment shown in FIG. 3A, the one or more interface elements displayed in the display area 1 may include the music application icon 305, the movie application icon 306, the calendar application icon 307, the recipe application icon 308, and the like. The one or more interface elements displayed in the display area 2 may include the gallery widget 304, the theme application icon, the fortune application icon, and the like. The interface element 1 may be the gallery widget 304.

S802: The electronic device 100 receives an operation 1 of a user for the interface element 1, and displays a moving track of the interface element 1 in response to the operation 1.

The operation 1 may be a drag (also referred to as drag, move, or the like) operation of the user for the interface element 1. In some embodiments, the operation 1 may alternatively be a touch and hold and drag operation, that is, the operation 1 includes a touch and hold operation and a drag operation. For example, the operation 1 may be the drag operation for the gallery widget 304 in the embodiment shown in FIG. 3B. The operation 1 may also include the touch and hold operation for the gallery widget 304 in the embodiment shown in FIG. 3A and the drag operation for the gallery widget 304 in the embodiment shown in FIG. 3B.

In response to the operation 1 for the interface element 1, the electronic device 100 may display the moving track of the interface element 1 based on a track of the operation 1 on a foldable display (including the display area 1 and the display area 2). In other words, the electronic device 100 may enable the interface element 1 to move along the track of the operation 1.

In some other embodiments, the electronic device 100 may alternatively determine a target location (namely, a location 1 in the following) of the interface element 1 based on the operation 1 of the user for the interface element 1, and display the moving track of the interface element 1 based on the target location.

S803: The electronic device 100 obtains initial location information of the interface element 1, including a size of an initial location and coordinates 1 of the initial location in a coordinate system 2, where the initial location is an original location of the interface element 1 in the display area 2, and the coordinate system 2 is a two-dimensional coordinate system constructed in the display area 2 by using an upper left corner of the display area 2 as an origin.

The initial location of the interface element 1 is a location of the interface element 1 in the display area 2 before the electronic device 100 responds to the operation 1.

The size of the initial location may include a horizontal size and a vertical size of the initial location. In this embodiment of this application, the size of the initial location is the same as a size of the interface element 1. The size of the interface element 1 may also include a horizontal size and a vertical size of the interface element 1.

The size of the interface element 1 indicates a horizontal size and a vertical size of an area that needs to be occupied by the interface element 1 on the display (the display area 1 or the display area 2). It can be learned from the cell layout shown in FIG. 1J that the display area 2 may be divided into a plurality of units in rows and columns. In this case, the size of the interface element 1 may indicate a quantity of units that need to be occupied by the interface element 1 in the display area 2 and an arrangement form of the units. The horizontal size of the interface element 1 refers to a quantity of columns of units that need to be occupied by the interface element 1 on the display, and the vertical size refers to a quantity of rows of units that need to be occupied by the interface element 1 on the display. For example, if the size of the interface element 1 is 1*2, that is, the horizontal size is 2, and the vertical size is 1, the interface element 1 needs to occupy two units on the display, and an arrangement form of the two units is 1 *2 row-column distribution, that is, the interface element 1 needs to occupy the units in one row and two columns on the display. For another example, if the size of the interface element 1 is 4*2, that is, the horizontal size is 2, and the vertical size is 4, the interface element 1 needs to occupy eight units on the display, and an arrangement form of the eight units is 4*2 row-column distribution, that is, the interface element 1 needs to occupy the units in four rows and two columns on the display.

The coordinate system 2 may be a coordinate system constructed in the display area 2 by using the upper left corner of the display area 2 or any other point of the display area 2 (for example, a center point, a lower right corner, or an upper right corner of the display area 1) as the origin. This is not limited herein in this application. In some embodiments, the electronic device 100 may obtain a row ranking and a column ranking of each unit in the display area 2, and use the row ranking and the column ranking as coordinates of the unit in the display area. For example, when the electronic device 100 constructs a two-dimensional coordinate system in the display area 1 by using an upper left corner of the display area 1 as an origin, a downward direction as a positive direction of a horizontal axis, a rightward direction as a positive direction of a vertical axis, a horizontal size of one unit as a vertical unit 1, and a vertical size of one unit as a horizontal unit 1, a row ranking and a column ranking of each unit may be considered as a horizontal coordinate and a vertical coordinate of the unit in the coordinate system. In some other embodiments, the origin of the coordinate system 2 may alternatively be another point, each unit may correspond to one integer coordinate point, and there is no non-integer coordinate in the coordinate system 2. In this case, the electronic device 100 may determine coordinates of each unit in the coordinate system 2 based on a row ranking and a column ranking of the unit. For example, if the display area 2 includes units in 6*4 row-column distribution, the coordinate system 2 may be a two-dimensional coordinate system constructed in the display area 2 by using the upper left corner (for example, a unit in a first row from the top and a first column from the left) of the display area 2 as an origin, extending downward in a positive direction of a vertical axis, and extending rightward in a positive direction of a horizontal axis. In the coordinate system 2, a horizontal coordinate corresponding to a unit is a quantity of columns of the unit minus 1, and a vertical coordinate of the unit is a quantity of rows of the unit minus 1. To be specific, coordinates of the unit in the first row and the first column in the coordinate system 2 are (0, 0), and coordinates of a unit in a third row and a second column in the coordinate system 2 are (1, 2). A digit on a left side in a parenthesis is a horizontal coordinate, and a digit on a right side in the parenthesis is a vertical coordinate. It may be understood that a manner of constructing the coordinate system 2 is merely described as an example herein. In embodiments of this application, the electronic device 100 may alternatively construct the coordinate system 2 by using any point of the display area 2 (for example, the upper right corner, the lower right corner, or the center point of the display area 2) as an origin. This is not limited in this application.

The coordinates 1 are used to determine a location of the initial location in the display area 2. The coordinates 1 may be a coordinate point at the initial location (for example, a coordinate point of an upper left corner of the initial location in the coordinate system 2). In some embodiments, when a horizontal size or a vertical size of the initial location is greater than 1, the coordinates 1 may alternatively be a coordinate set including a plurality of coordinate points.

The embodiment shown in FIG. 3A is used as an example. For example, the interface element 1 is the gallery widget 304, and the initial location includes the following four units in the display area 2: a unit (3, 1), a unit (3, 2), a unit (4, 1), and a unit (4, 2). In this case, the coordinates 1 may be coordinates of the unit (3, 1) in the coordinate system 2, for example, coordinates (0, 2), or the coordinates 1 may include coordinates of the four units in the coordinate system 2, for example, coordinates (0, 2), (1, 2), (0, 3), and (1, 3). It should be noted that, when a digit represents a unit, a digit on the left side of the parenthesis represents a row ranking of the unit on a corresponding display (for example, the display area 2), and a digit on the right side of the parenthesis represents a column ranking of the unit on the corresponding display (for example, the display area 2). When a digit represents a coordinate, the digit on the left side of the parenthesis is a horizontal coordinate, and the digit on the right side of the parenthesis is a vertical coordinate.

S804: The electronic device 100 detects that a moving speed of the operation 1 in the display area 1 is less than a preset value, and determines the location 1 at which the interface element 1 is temporarily displayed in the display area 1, where a size of the location 1 is the same as the size of the initial location.

When the user drags the interface element 1 to the display area 1 by performing the operation 1, and the moving speed of the operation 1 is less than the preset value, the electronic device 100 may determine the location at which the interface element 1 is temporarily displayed in the display area 1 as the location 1, where the size of the location 1 is the same as the size of the interface element 1, that is, also the same as the size of the initial location.

In some other embodiments, the electronic device 100 may alternatively determine the location 1 based on another factor other than the moving speed (for example, a select operation for the location 1). This is not limited in this application.

It can be learned from the embodiment shown in FIG. 1J that a cell layout of the display area 1 may also include a plurality of units in rows and columns, and the location 1 may include one or more units in the display area 1. A quantity of units included in the location 1 and an arrangement form of the units are the same as a quantity of units indicated by the size of the interface element 1 and an arrangement form of the units. For example, in the embodiment shown in FIG. 3D, the interface element 1 is the gallery widget 304, the size of the interface element 1 is 2*2, and the size of the location 1 is 2*2. In other words, the location 1 includes four units in the display area 1, and an arrangement form of the four units is 2*2 row-column distribution.

S805: The electronic device 100 determines, based on the location 1, a conflicting element set, including one or more interface elements displayed at the location 1.

After determining the location 1, the electronic device 100 may determine, as the conflicting elements, the one or more interface elements displayed at the location 1. Then, the electronic device 100 may determine the conflicting element set, where the conflicting element set includes the one or more conflicting elements.

For example, in the embodiment shown in FIG. 3D, the following four interface elements are displayed at the location 1: the music application icon 305, the movie application icon 306, the calendar application icon 307, and the recipe application icon 308. The electronic device 100 may determine that the conflicting element set includes the following four conflicting elements: the music application icon 305, the movie application icon 306, the calendar application icon 307, and the recipe application icon 308.

S806: The electronic device 100 determines temporary location-occupying information of the conflicting element set, including a size of each conflicting element in the conflicting element set, a location relationship between the conflicting elements, and coordinates 2 of the conflicting element set in a coordinate system 1, where the coordinate system 1 is a two-dimensional coordinate system constructed in the display area 1 by using an upper left corner of the display area 1 as an origin.

The temporary location-occupying information may include the size of each conflicting element in the conflicting element set, the location relationship between the conflicting elements, and the coordinates 2 of the conflicting element set in the coordinate system 1. For specific descriptions of the size of the conflicting element, refer to related descriptions of the size of the interface element 1 in step S803. The location relationship between the conflicting elements refers to an arrangement layout of all the conflicting elements at the location 1, and may also be referred to as a first layout in this application. The coordinate system 1 may be the coordinate system constructed in the display area 1 by using the upper left corner of the display area 1 as the origin. In another possible implementation, the coordinate system 1 may alternatively be a coordinate system constructed in the display area 1 by using any other point of the display area 1 (for example, a center point, a lower right corner, or an upper right corner of the display area 1) as the origin. This is not limited herein in this application. The coordinates 2 are used to determine a location of the conflicting element set in the display area 1. The coordinates 2 may be a coordinate point (for example, a coordinate point of the upper left corner in the coordinate system 1) in the conflicting element set. In some embodiments, when a horizontal coordinate or a vertical coordinate of an area occupied by the conflicting element set in the display area 1 is greater than 1, the coordinates 2 may alternatively be a coordinate set including a plurality of coordinate points.

The temporary location-occupying information of the conflicting element set indicates a size of an area that is required to accommodate and display the conflicting element set with a relative location of each conflicting element in the conflicting element set maintained, that is, a quantity of units and an arrangement form of the units that are required to accommodate and display all the conflicting elements in an original layout of the conflict elements.

In some embodiments, the electronic device 100 may construct a temporary location-occupying matrix to represent the temporary location-occupying information of the conflicting element set.

For example, in the embodiment shown in FIG. 3D, the conflicting element set includes the following four conflicting elements: the music application icon 305, the movie application icon 306, the calendar application icon 307, and the recipe application icon 308. A size of each conflicting element is 1*1, that is, each conflicting element needs to occupy only one unit. In addition, an arrangement form of the four units occupied by the four conflicting elements is 2*2 row-column distribution. In this case, a 2*2-dimensional matrix may be constructed for the conflicting element set. Each digit "1" or "0" in the matrix may correspond to one unit on the display. In the matrix, "1" represents that the unit is occupied (that is, a conflicting element needs to be displayed), and "0" represents that the unit is not occupied (that is, no conflicting element needs to be displayed). In this case, the temporary location-occupying information of the conflicting element set may be represented by using the following temporary location-occupying matrix M1:

$$M1 = \begin{Bmatrix} 1 & 1 \\ 1 & 1 \end{Bmatrix} \text{ formula (11)}$$

It can be learned from Formula (11) that the temporary location-occupying matrix M1 is a 2*2-dimensional matrix, including two rows and two columns, and each digit in the matrix is "1". It can be learned from the temporary location-occupying matrix M1 that, if the conflicting element set needs to be moved without changing the relative location of each conflicting element in the conflicting element set, at least one blank area whose size is 2*2 is required to accommodate and display the conflicting element set.

It may be understood that the foregoing embodiment is merely an example in which that the temporary location-occupying information of the conflicting element set may be represented by constructing the temporary location-occupying matrix is described. In embodiments of this application, the conflicting element set may alternatively be a conflicting element set different from those in the foregoing embodiment, and the temporary location-occupying matrix may alternatively be a matrix that has a different dimension or different content from M1. In some embodiments, when constructing the temporary location-occupying matrix (or constructing another location-occupying matrix like an initial location-occupying matrix), the electronic device 100 may alternatively use another digit to represent whether a corresponding unit is occupied, or represent the temporary location-occupying information in another manner. This is not limited herein in this application.

S807: The electronic device 100 determines, based on the temporary location-occupying information and initial location information, whether a location 2 at which the conflicting element set can be accommodated and displayed exists at the initial location.

It should be noted that, that the conflicting element set can be accommodated and displayed at the location 2 means that all the conflicting elements in the conflicting element set can be placed at the location 2 with the location relationship between the conflicting elements in the conflicting element set before the operation 1 maintained (that is, relative locations of the conflicting elements are maintained).

The electronic device 100 may construct the initial location-occupying matrix based on a size of the initial location (a size of the interface element 1). A dimension of the initial location-occupying matrix is the same as the size of the interface element 1, and each digit in the matrix is "0", representing that the initial location is in an available state (namely, an unoccupied state) after the interface element 1 is dragged.

The embodiments shown in FIG. 3A to FIG. 3F are used as examples. For example, it can be learned from the initial location information that the size of the gallery widget 304 is 2*2. In this case, the initial location-occupying matrix may be the following matrix L1:

$$L1 = \begin{Bmatrix} 0 & 0 \\ 0 & 0 \end{Bmatrix} \text{ formula (12)}$$

It can be learned from Formula (12) that the dimension of the initial location-occupying matrix is the same as the size of the gallery widget 304 and is a 2*2-dimensional matrix, and all digits in the matrix are "0". It indicates that there are four unoccupied units at the initial location, and an arrangement form of the four units is 2*2 row-column distribution.

It may be understood that the foregoing embodiment is merely an example in which that the initial location information may be represented by constructing the initial location-occupying matrix is described. In embodiments of this application, the initial location may alternatively be another location, and the initial location-occupying matrix may alternatively be a matrix that has a different dimension or different content from L1. In some embodiments, the electronic device 100 may alternatively construct the initial location-occupying matrix in step S803, that is, construct the initial location-occupying matrix after obtaining the initial location information. This is not limited in this application.

After determining the initial location-occupying matrix, the electronic device 100 may determine, based on the initial location-occupying matrix and the temporary location-occupying matrix, whether the conflicting element set can be accommodated and displayed at the initial location.

For example, in the embodiments shown in FIG. 3A to FIG. 3F, the initial location-occupying matrix is the initial location-occupying matrix L1 shown in Formula (12), and the temporary location-occupying matrix is the temporary location-occupying matrix M1 shown in Formula (11). It can be learned from Formula (11) and Formula (12) that there are 2*2 available units in the initial location-occupying matrix L1, and the 2*2 available units may be used to accommodate and display the 2*2 conflicting element set. In other words, in the embodiments shown in FIG. 3A to FIG. 3F, the electronic device 100 may determine that the location 2 at which the conflicting element set can be accommodated and displayed exists at the initial location, and the location 2 is the same as the initial location.

In some embodiments, the electronic device 100 may alternatively not construct the temporary location-occupying matrix and the initial location-occupying matrix. In this case, the electronic device 100 may determine, based on the size of the initial location and the temporary location-occupying information, whether the conflicting elements in the conflicting element set can be placed at the initial location in the display area 2 with the original location relationship between the conflicting elements maintained.

For example, in the embodiments shown in FIG. 3A to FIG. 3F, the size of the initial location is 2*2, and the size of the conflicting element set is 2*2. The size of the conflicting element set is a size of an area required for displaying all the conflicting elements in the conflicting element set with an original location relationship between the conflicting elements maintained. It can be learned from the foregoing that the horizontal size of the initial location is not less than the horizontal size of the conflicting element set, and the vertical size of the initial location is not less than the vertical size of the conflicting element set. Therefore, the electronic device 100 may determine that the location 2 at which the conflicting element set can be accommodated and displayed exists at the initial location, and the location 2 is the same as the initial location.

In some embodiments, the electronic device 100 may alternatively determine, based on the temporary location-occupying information, whether the one or more conflicting elements displayed at the location 1 are all of the one or more conflicting elements, in other words, determine whether the one or more conflicting elements displayed at the location 1 are all complete elements. If all the conflicting elements displayed at the location 1 are complete, it indicates that the one or more conflicting elements arranged and displayed in the first layout can be accommodated and displayed at the location 1. Because the size of the location 1 is the same as the size of the initial location, the one or more conflicting elements arranged and displayed in the first layout can also be accommodated and displayed at the initial location.

It may be understood that, other two manners of determining, based on the size of the initial location and the size of the conflicting element set, whether the conflicting element set can be accommodated and displayed at the initial location are merely examples for description herein. In embodiments of this application, the electronic device 100 may alternatively determine, in a manner different from that in the foregoing embodiment, whether the conflicting element set can be accommodated and displayed at the initial location.

In some embodiments, the location 2 may alternatively be a partial area at the initial location. In this case, when determining, based on the temporary location-occupying information and the initial location information, that the location 2 exists, the electronic device 100 may determine a location relationship between the location 2 and the initial location. In addition, coordinates of the location 2 in the coordinate system 2 are determined based on the coordinates of the initial location in the coordinate system.

When determining that the location 2 at which the conflicting element set can be accommodated and displayed exists at the initial location, the electronic device 100 may perform the following step S809.

When determining that the location 2 at which the conflicting element set can be accommodated and displayed does not exist at the initial location, the electronic device 100 may perform the following step S808 and determine that location squeezing fails.

S808: The electronic device 100 determines that location exchanging and squeezing fails.

In some embodiments, after determining that the location exchanging and squeezing fails, and detecting an operation of releasing the interface element 1 by the user, the electronic device 100 may redisplay the interface element 1 at the initial location in the display area 2. For a diagram of an interface, refer to the embodiments shown in FIG. 6A to FIG. 6C.

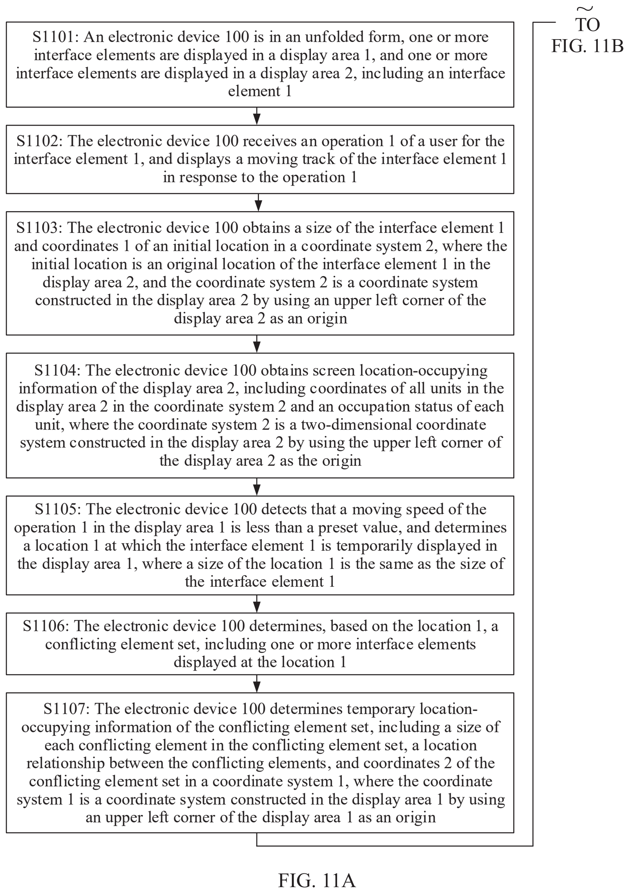

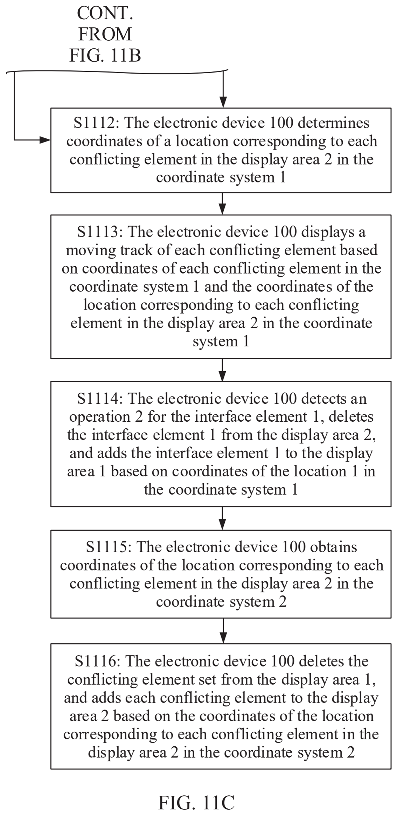

In some embodiments, after determining that the location exchanging and squeezing fails, the electronic device 100 may perform other determining logic. For details, refer to related content in the following embodiment shown in FIG. 11A to FIG. 11C. Details are not described herein.

In some other embodiments, the electronic device 100 may alternatively create a page, and display all conflicting elements in the conflicting element set at original relative locations (in an original layout) on the created page. For details, refer to the embodiments shown in FIG. 6D and FIG. 6E.

S809: The electronic device 100 determines coordinates 3 of the location 2 in the coordinate system 1.

The electronic device 100 may determine the relative location relationship between the location 2 and the initial location in step S807, and determine the coordinates of the location 2 in the coordinate system 2. Then, the electronic device 100 may obtain coordinates 3 of the location 2 in the coordinate system 1 through coordinate conversion based on the coordinates of the location 2 in the coordinate system 2 and a relationship between the coordinate system 1 and the coordinate system 2.

For example, in the embodiments shown in FIG. 3A to FIG. 3F, the location 2 is the initial location in the display area 2 (namely, an area in which the rectangular box 304a shown in FIG. 3D is located), the coordinate system 1 is created by using the upper left corner of the display area 1 as the origin, and the coordinate system 2 is created by using the upper left corner of the display area 2 as the origin. It can be learned that the coordinates of the location 2 in the coordinate system 2 may include the following four coordinate points: (0, 2), (0, 3), (1, 2), and (1, 3). It can be learned from the location relationship between the display area 1 and the display area 2 and the size of the display area 1 that coordinates of the origin of the coordinate system 2 in the coordinate system 1 are (4, 0). To be specific, vertical coordinates of all coordinate points of the coordinate system 2 remain unchanged in the coordinate system 1, and horizontal coordinates are increased by 4. It can be learned through coordinate conversion that coordinates of the location 2 in the coordinate system 1 may include the following four coordinate points: (4, 2), (4, 3), (5, 2), and (5, 3).

In some embodiments, the electronic device 100 may alternatively determine, in step S807, a row ranking and a column ranking of each unit included in the location 2 in the display area 2. Then, the electronic device 100 may also determine the coordinates 3 of the location 2 in the coordinate system 1 based on the arrangement forms of the units in the display area 1 and the display area 2 and relationships between a row ranking of the unit and the coordinate system and between a column ranking of the unit and the coordinate system.

S810: The electronic device 100 displays a moving track of the conflicting element set based on the coordinates 2 and the coordinates 3.

Both the coordinates 2 and the coordinates 3 are coordinates in the coordinate system 1. The coordinates 2 are a location of the conflicting element set before the conflicting element set is moved, and the coordinates 3 are a location of the conflicting element set after the conflicting element set is moved. The electronic device 100 may display the moving track of the conflicting element set based on the coordinates 2 and the coordinates 3.

S811: The electronic device 100 detects an operation 2 for the interface element 1, deletes the interface element 1 from the display area 2, and adds the interface element 1 to the display area 1 based on coordinates of the location 1 in the coordinate system 1.

The operation 2 may be a release operation for the interface element 1, for example, the release operation of the user for the gallery widget 304 shown in FIG. 3E.

S812: The electronic device 100 obtains coordinates 4 of the location 2 in the coordinate system 2.

The electronic device 100 may obtain the coordinates 4 of the location 2 in the coordinate system 2 through coordinate conversion based on the coordinates 3 of the location 2 in the coordinate system 1 and a relationship between the coordinates 1 and the coordinates 2. A specific conversion manner may be an inverse operation of the coordinate conversion manner shown in step S809. In some embodiments, after determining the location 2, the electronic device 100 may alternatively obtain and store the coordinates of the location 2 in the coordinate system 2, to read and use the coordinates in step S812.

S813: The electronic device 100 deletes the conflicting element set from the display area 1, and adds the conflicting element set to the display area 2 based on the coordinates 4.

It may be understood that the embodiment shown in FIG. 8A and FIG. 8B is merely an example. In embodiments of this application, the electronic device 100 may further include more than two displays. This is not limited herein in this application.

In this way, even if there is no enough space in the display area 1 to accommodate and display the interface element 1, the electronic device 100 may exchange, with the location of the interface element 1 in the display area 2, the location of the one or more conflicting elements arranged in the first layout in the display area 1. This simplifies operation steps and improves efficiency.

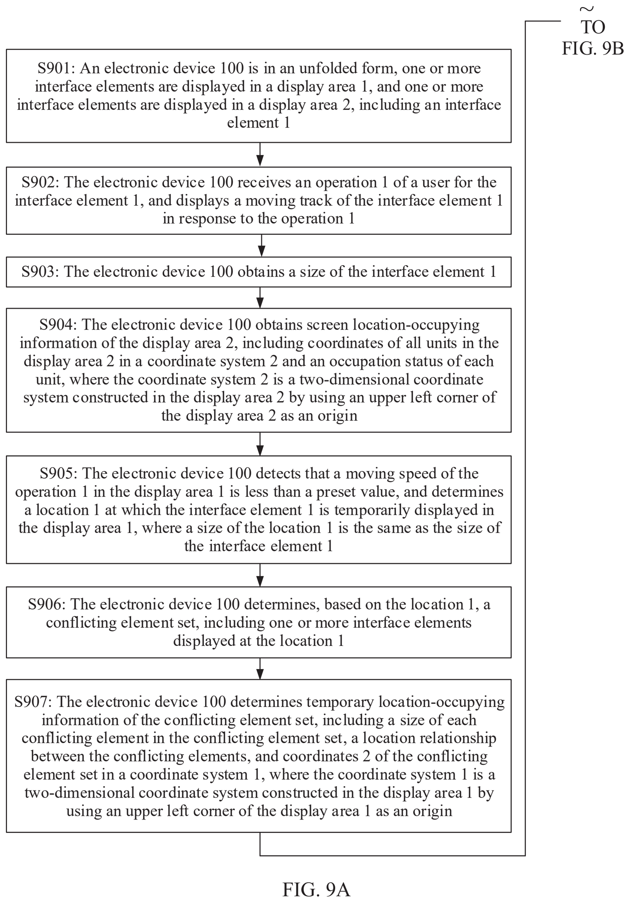

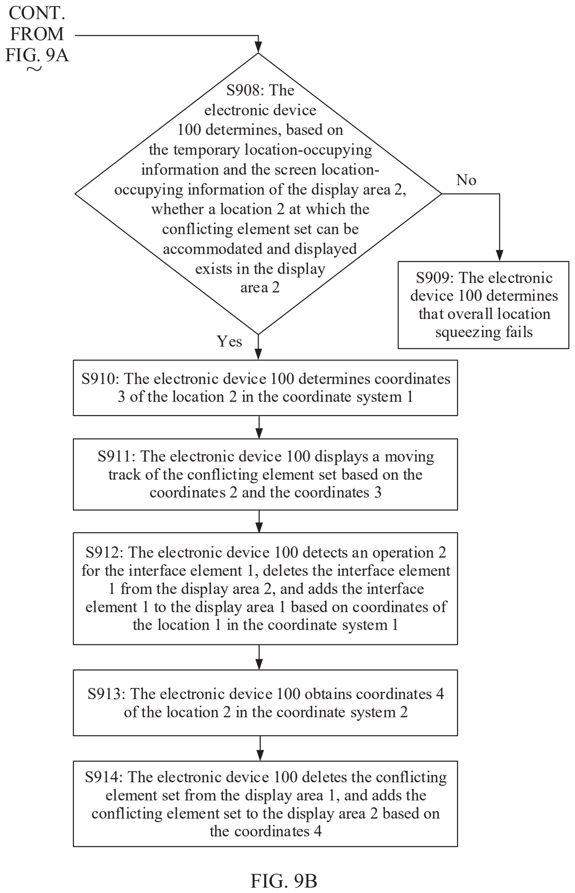

FIG. 9A and FIG. 9B are a schematic flowchart of another interface element moving method according to an embodiment of this application.

As shown in FIG. 9A and FIG. 9B, a specific procedure of the interface element moving method based on overall location squeezing may include the following steps.

S901: An electronic device 100 is in an unfolded form, one or more interface elements are displayed in a display area 1, and one or more interface elements are displayed in a display area 2, including an interface element 1.

A device form of the electronic device 100 is the unfolded form. For specific descriptions of the unfolded form, refer to related content in the embodiments shown in FIG. 1B and FIG. 1E. Details are not described herein again.

In the unfolded form, the one or more interface elements are displayed in the display area 1 of the electronic device 100, and the one or more interface elements (including the interface element 1) may also be displayed in the display area 2.

For example, in the embodiment shown in FIG. 4A, the one or more interface elements displayed in the display area 1 may include the large application folder 402, the setting application icon 403, the health application icon 404, the gallery application icon 405, and the like. The one or more interface elements displayed in the display area 2 may include the gallery widget 401, the lifestyle application icon, the fortune application icon, and the like. The interface element 1 may be the gallery widget 401.

S902: The electronic device 100 receives an operation 1 of a user for the interface element 1, and displays a moving track of the interface element 1 in response to the operation 1.

The operation 1 may be a drag (also referred to as drag, move, or the like) operation of the user for the interface element 1. In some embodiments, the operation 1 may alternatively be a touch and hold and drag operation, that is, the operation 1 includes a touch and hold operation and a drag operation. For example, the operation 1 may be the drag operation for the gallery widget 401 in the embodiment shown in FIG. 4B. The operation 1 may also include the touch and hold operation for the gallery widget 401 in the embodiment shown in FIG. 4A and the drag operation for the gallery widget 401 in the embodiment shown in FIG. 4B.

In response to the operation 1 for the interface element 1, the electronic device 100 may display the moving track of the interface element 1 based on a track of the operation 1 on a display (including the display area 1 and the display area 2). In other words, the electronic device 100 may enable the interface element 1 to move along the track of the operation 1.

In some other embodiments, the electronic device 100 may alternatively determine a target location (namely, a location 1 in the following) of the interface element 1 based on the operation 1 of the user for the interface element 1, and display the moving track of the interface element 1 based on the target location.

S903: The electronic device 100 obtains a size of the interface element 1.

For specific content of the size of the interface element 1, refer to related content of step S803 shown in FIG. 8A. Details are not described herein again.

S904: The electronic device 100 obtains screen location-occupying information of the display area 2, including coordinates of all units in the display area 2 in a coordinate system 2 and an occupation status of each unit, where the coordinate system 2 is a two-dimensional coordinate system constructed in the display area 2 by using an upper left corner of the display area 2 as an origin.

It can be learned from the embodiment shown in FIG. 1J that the foldable display (including the display area 1 and the display area 2) of the electronic device 100 may include a plurality of units in row-column distribution.

An occupation status of each unit includes an occupied state and an available state (namely, an unoccupied state). That a unit is in the occupied state means that an interface element is displayed in the unit, and that a unit is in the available state means that no interface element is displayed in the unit.

The screen location-occupying information of the display area 2 may indicate coordinates of all units in the display area 2 and an occupation status of each unit. It should be noted that, in the screen location-occupying information that is of the display area 2 and that is obtained in step S904, one or more units included in the initial location of the interface element 1 (namely, a location of the interface element 1 in the display area 2 before the operation 1) are all in the available state.

For the coordinate system 2, refer to related descriptions of step S803 shown in FIG. 8A.

In some embodiments, the screen location-occupying information of the display area 2 may be a screen location-occupying matrix. A dimension of the screen location-occupying matrix may be determined based on row-column distribution of units in the display area 2. For example, if the display area 2 includes a plurality of units distributed in four rows and four columns, the dimension of the screen location-occupying matrix may be 4*4. For another example, if the display area 2 includes a plurality of units distributed in six rows and four columns, the dimension of the screen location-occupying matrix may be 6*4, or the like. The screen location-occupying matrix may include zero or one or more first digits (for example, a digit "1") and zero or one or more second digits (for example, a digit "0"). The first digit is different from the second digit. A row ranking and a column ranking of the first digit or the second digit in the screen location-occupying matrix may correspond to a unit having a same row ranking and column ranking in the display area 2. A unit corresponding to the first digit is in the occupied state in the display area 2, and a unit corresponding to the second digit is in the available state (namely, the unoccupied state) in the display area 2. In this way, zero, one, or more occupied units in the display area 2 may be determined based on locations of the zero, one, or more first digits in the screen location-occupying matrix, and zero, one, or more unoccupied units in the display area 2 are determined based on locations of the zero, the one, or the more second digits in the screen location-occupying matrix. In other words, the screen location-occupying information of the display area 2 is indicated by using the screen location-occupying matrix of the display area 2.

For example, before receiving and responding to the operation 1, for example, in the embodiment shown in FIG. 3A, the screen location-occupying matrix of the display area 2 may be the screen location-occupying matrix B0 shown in Formula (2), in the embodiment shown in FIG. 4A, the screen location-occupying matrix of the display area 2 may be the screen location-occupying matrix B1 shown in Formula (4), and in the embodiment shown in FIG. 5A, the screen location-occupying matrix of the display area 2 may be the screen location-occupying matrix B2 shown in Formula (8). For another example, after receiving and responding to the operation 1, for example, in the embodiment shown in FIG. 4B or FIG. 4C, the screen location-occupying matrix of the display area 2 may be the screen location-occupying matrix D1 shown in Formula (6), and in the embodiment shown in FIG. 5B or FIG. 5C, the screen location-occupying matrix of the display area 2 may be the screen location-occupying matrix D2 shown in Formula (10).

In some other embodiments, the electronic device 100 may alternatively not construct the screen location-occupying matrix. In this case, the screen location-occupying information obtained by the electronic device 100 may include coordinates of each unit in the coordinate system 2, and may further include whether each unit is occupied.

S905: The electronic device 100 detects that a moving speed of the operation 1 in the display area 1 is less than a preset value, and determines the location 1 at which the interface element 1 is temporarily displayed in the display area 1, where a size of the location 1 is the same as the size of the interface element 1.

For specific content of step S905, refer to related descriptions of step S804 shown in FIG. 8A. Details are not described herein again.

The location 1 may include one or more units in the display area 1. A quantity of units included in the location 1 and an arrangement form of the units are the same as a quantity of units indicated by the size of the interface element 1 and an arrangement form of the units. For example, in the embodiment shown in FIG. 4D, the interface element 1 is the gallery widget 401, the size of the interface element 1 is 2*2, and the size of the location 1 is 2*2. In other words, the location 1 includes four units in the display area 1, and an arrangement form of the four units is 2*2 row-column distribution.

S906: The electronic device 100 determines, based on the location 1, a conflicting element set, including one or more interface elements displayed at the location 1.

For example, in the embodiment shown in FIG. 4D, the following four interface elements are displayed at the location 1: the large application folder 402, the setting application icon 403, the health application icon 404, and the gallery application icon 405. The electronic device 100 may determine that the conflicting element set includes the following four conflicting elements: the large application folder 402, the setting application icon 403, the health application icon 404, and the gallery application icon 405.

S907: The electronic device 100 determines temporary location-occupying information of the conflicting element set, including a size of each conflicting element in the conflicting element set, a location relationship between the conflicting elements, and coordinates 2 of the conflicting element set in a coordinate system 1, where the coordinate system 1 is a coordinate system constructed in the display area 1 by using an upper left corner of the display area 1 as an origin.

For specific content of the temporary location-occupying information, refer to related descriptions in step S806 shown in FIG. 8A.

In some embodiments, the electronic device 100 may construct a temporary location-occupying matrix to represent the temporary location-occupying information of the conflicting element set.

For example, in the embodiment shown in FIG. 4D, the location 1 includes four units in the display area 1, and an arrangement form of the four units is 2*2 row-column distribution. The conflicting element set includes the following four conflicting elements: the large application folder 402, the setting application icon 403, the health application icon 404, and the gallery application icon 405. A size of the large application folder 402 is 2*2, sizes of the other three conflicting elements are all 1*1, and a unit in a lower left corner of the large application folder 402 occupies a unit in an upper right corner of the location 1. The setting application icon 403 occupies a unit in an upper left corner of the location 1, the health application icon 404 occupies a unit in a lower left corner of the location 1, and the gallery application icon 405 occupies a unit in a lower right corner of the location 1. In this case, a 3*3-dimensional matrix may be constructed for the conflicting element set, and each first digit (for example, a digit "1") or second digit (for example, a digit "0") in the matrix may correspond to one unit. In the matrix, the first digit represents that the unit is occupied (that is, a conflicting element needs to be displayed), and the second digit represents that the unit is not occupied (that is, no conflicting element needs to be displayed). In this case, the temporary location-occupying information of the conflicting element set may be represented by using the 3*3-dimensional location-occupying matrix C1 shown in Formula (5).

It can be learned from Formula (5) that, if the conflicting element set needs to be moved with a relative location of each conflicting element in the conflicting element set maintained, at least seven available units are required, and the seven available units are all units other than a unit in an upper left corner and a unit in a lower right corner in nine units in 3*3 row-column distribution.

It may be understood that the foregoing embodiment is merely an example in which that the temporary location-occupying information of the conflicting element set may be represented by constructing the temporary location-occupying matrix is described. In embodiments of this application, the conflicting element set may alternatively be a conflicting element set different from those in the foregoing embodiment, and the temporary location-occupying matrix may alternatively be a matrix that has a different dimension or different content. In some embodiments, when constructing the temporary location-occupying matrix (or constructing another location-occupying matrix like an initial location-occupying matrix), the electronic device 100 may alternatively use another digit to represent whether a corresponding unit is occupied, or represent the temporary location-occupying information in another manner. This is not limited herein in this application.

S908: The electronic device 100 determines, based on the temporary location-occupying information and the screen location-occupying information of the display area 2, whether a location 2 at which the conflicting element set can be accommodated and displayed exists in the display area 2.

It should be noted that, that the conflicting element set can be accommodated and displayed at the location 2 means that all the conflicting elements in the conflicting element set can be placed at the location 2 with the location relationship between the conflicting elements in the conflicting element set before the operation 1 maintained (that is, an arrangement layout of the conflicting elements at the location 1 is maintained). In addition, before the one or more conflicting elements are placed at the location 2 with the original location relationship maintained, no interface element is displayed at the location 2.

In some embodiments, the electronic device 100 may determine, based on the temporary location-occupying matrix obtained in step S907 and the screen location-occupying matrix that is of the display area 2 and that is obtained in step S904, whether the location 2 exists in the display area 2.

For example, the embodiments shown in FIG. 4A to FIG. 4F are used as examples. The screen location-occupying matrix of the display area 2 is the screen location-occupying matrix D1 shown in Formula (6), and the temporary location-occupying matrix of the conflicting element set is the location-occupying matrix C1 shown in Formula (5). The matrix is traversed by using an upper left corner of the screen location-occupying matrix D1 as a start point, and it may be found that the following seven unoccupied units exist in the screen location-occupying matrix D1: a unit (1, 3), a unit (1, 4), a unit (2, 2), a unit (2, 3), a unit (2, 4), a unit (3, 2), and a unit (3, 3), where a row-column distribution form of the seven units is completely the same as row-column distribution of the seven digits "1" in the location-occupying matrix C1. Therefore, the electronic device 100 may determine that the location 2 at which the conflicting element set can be accommodated and displayed exists in the display area 2, and the location 2 includes the seven units.

In some embodiments, the electronic device 100 may alternatively not construct the temporary location-occupying matrix and the screen location-occupying matrix of the display area 2. In this case, the electronic device 100 may determine a distribution status of the available units in the display area 2 based on the screen location-occupying information of the display area 2, and determine, based on the distribution status of the available units and the temporary location-occupying information, whether the location 2 exists.

After determining the location 2, the electronic device 100 may obtain coordinates of the location 2 in a coordinate system 2 corresponding to the display area 2. The coordinate system 2 is a two-dimensional coordinate system constructed in the display area 2 by using an upper left corner (or any point of the display area 2) of the display area 2 as an origin.

When determining that the location 2 at which the conflicting element set can be accommodated and displayed exists in the display area 2, the electronic device 100 may perform the following step S910.

When determining that the location 2 at which the conflicting element set can be accommodated and displayed does not exist in the display area 2, the electronic device 100 may perform the following step S909 and determine that location squeezing fails.

S909: The electronic device 100 determines that overall location squeezing fails.

In some embodiments, after determining that the overall location squeezing fails, and detecting an operation of releasing the interface element 1 by the user, the electronic device 100 may redisplay the interface element 1 at the initial location in the display area 2. In other words, cross-screen moving for the interface element 1 fails.

In some embodiments, after determining that the overall location squeezing fails, the electronic device 100 may perform other determining logic. For details, refer to related content in the following embodiment shown in FIG. 11A to FIG. 11C. Details are not described herein.

In some other embodiments, the electronic device 100 may alternatively create a page, and display all conflicting elements in the conflicting element set at original relative locations (in an original layout) on the created page. For details, refer to the embodiments shown in FIG. 6D and FIG. 6E.

S910: The electronic device 100 determines coordinates 3 of the location 2 in the coordinate system 1.

The electronic device 100 may determine the coordinates of the location 2 in the coordinate system 2 in the foregoing step S908. Then, the electronic device 100 may obtain coordinates 3 of the location 2 in the coordinate system 1 through coordinate conversion based on the coordinates of the location 2 in the coordinate system 2 and a relationship between the coordinate system 1 and the coordinate system 2.

For a specific manner in which the electronic device 100 determines the coordinates of the location 2 in the coordinate system 1 based on the coordinates of the location 2 in the coordinate system 2, refer to related content of step S809 shown in FIG. 8B. Details are not described herein again.

S911: The electronic device 100 displays a moving track of the conflicting element set based on the coordinates 2 and the coordinates 3.

S912: The electronic device 100 detects an operation 2 for the interface element 1, deletes the interface element 1 from the display area 2, and adds the interface element 1 to the display area 1 based on coordinates of the location 1 in the coordinate system 1.

The operation 2 may be a release operation for the interface element 1, for example, the release operation of the user for the gallery widget 401 shown in FIG. 4E.

S913: The electronic device 100 obtains coordinates 4 of the location 2 in the coordinate system 2.

S914: The electronic device 100 deletes the conflicting element set from the display area 1, and adds the conflicting element set to the display area 2 based on the coordinates 4.

For specific content of step S911 to step S914, refer to related content of step S810 to step S813 shown in FIG. 8B. Details are not described herein again.

It may be understood that the embodiment shown in FIG. 9A and FIG. 9B is merely an example. In embodiments of this application, the electronic device 100 may further include more than two displays. This is not limited herein in this application.

According to the interface element moving method provided in this embodiment of this application, even if the one or more conflicting elements arranged in the first layout at the location 1 cannot be accommodated and displayed at the initial location, the electronic device 100 may search for, in the display area 2 by traversing the display area 2, the location 2 at which the one or more conflicting elements arranged in the first layout can be accommodated and displayed, display the one or more conflicting elements arranged in the first layout at the location 2, and display the interface element 1 at the location 1. This simplifies operation steps and improves efficiency.

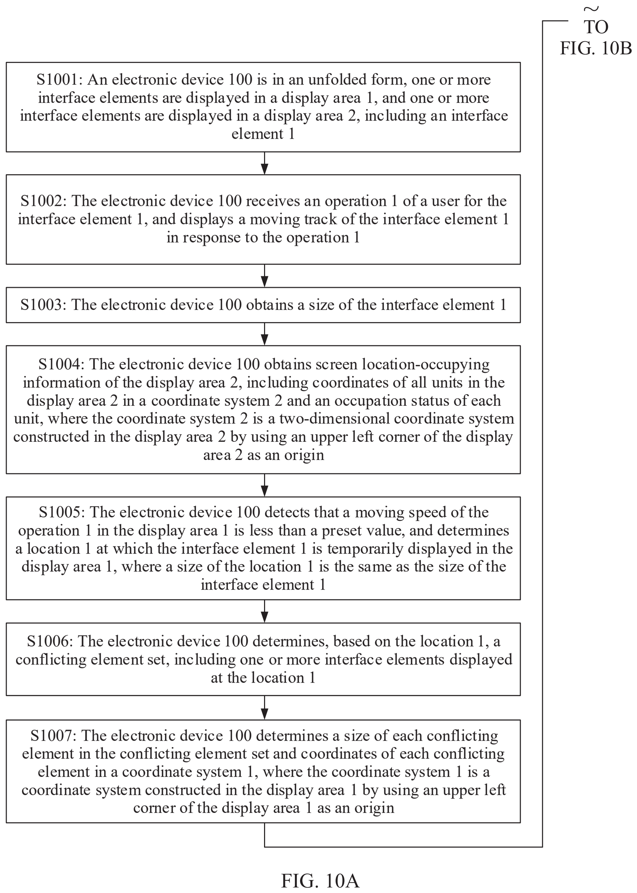

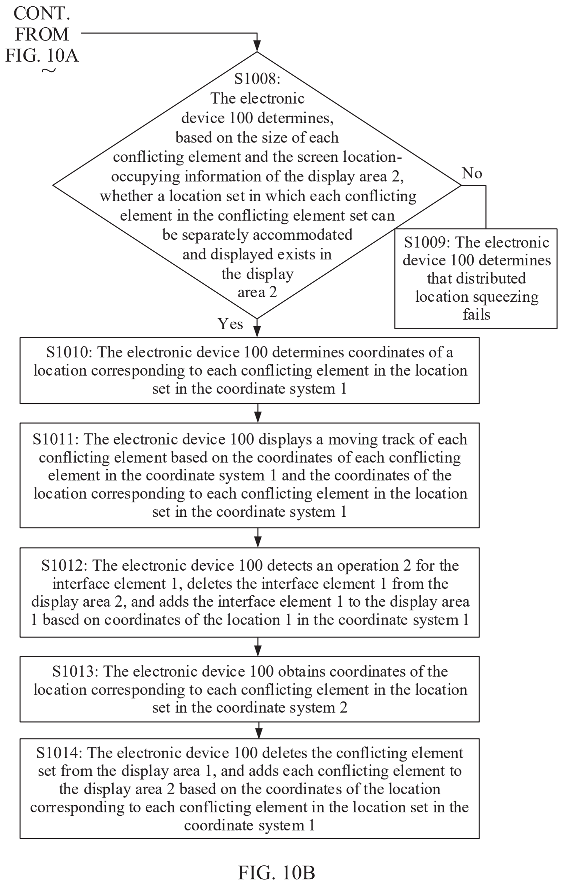

FIG. 10A and FIG. 10B are a schematic flowchart of an interface element moving method based on distributed location squeezing according to an embodiment of this application.

As shown in FIG. 10A and FIG. 10B, a specific procedure of the interface element moving method based on distributed location squeezing may include the following steps.

S1001: An electronic device 100 is in an unfolded form, one or more interface elements are displayed in a display area 1, and one or more interface elements are displayed in a display area 2, including an interface element 1.

A device form of the electronic device 100 is the unfolded form. For specific descriptions of the unfolded form, refer to related content in the embodiments shown in FIG. 1B and FIG. 1E. Details are not described herein again.

In the unfolded form, the one or more interface elements are displayed in the display area 1 of the electronic device 100, and the one or more interface elements (including the interface element 1) may also be displayed in the display area 2.

For example, in the embodiment shown in FIG. 5A, the one or more interface elements displayed in the display area 1 may include the frequently-used application folder 502, the large application folder 503, the setting application icon 504, and the like. The one or more interface elements displayed in the display area 2 may include the gallery widget 501, the lifestyle application icon, the fortune application icon, and the like. The interface element 1 may be the gallery widget 501.

S1002: The electronic device 100 receives an operation 1 of a user for the interface element 1, and displays a moving track of the interface element 1 in response to the operation 1.

The operation 1 may be a drag (also referred to as drag, move, or the like) operation of the user for the interface element 1. In some embodiments, the operation 1 may alternatively be a touch and hold and drag operation, that is, the operation 1 includes a touch and hold operation and a drag operation. For example, the operation 1 may be the drag operation for the gallery widget 501 in the embodiment shown in FIG. 5B. The operation 1 may also include the touch and hold operation for the gallery widget 501 in the embodiment shown in FIG. 5A and the drag operation for the gallery widget 501 in the embodiment shown in FIG. 5B.

For specific content of step S1002, refer to related descriptions in step S802 shown in FIG. 8A and step S902 shown in FIG. 9A.

S1003: The electronic device 100 obtains a size of the interface element 1.

For specific content of the size of the interface element 1, refer to related content of step S803 shown in FIG. 8A. Details are not described herein again.

S1004: The electronic device 100 obtains screen location-occupying information of the display area 2, including coordinates of all units in the display area 2 in a coordinate system 2 and an occupation status of each unit, where the coordinate system 2 is a two-dimensional coordinate system constructed in the display area 2 by using an upper left corner of the display area 2 as an origin.

For specific content of step S1004, refer to related content of step S904 shown in FIG. 9A.

S1005: The electronic device 100 detects that a moving speed of the operation 1 in the display area 1 is less than a preset value, and determines the location 1 at which the interface element 1 is temporarily displayed in the display area 1, where a size of the location 1 is the same as the size of the initial location.

For specific content of step S1005, refer to related descriptions of step S804 shown in FIG. 8A. Details are not described herein again.

The location 1 may include one or more units in the display area 1. A quantity of units included in the location 1 and an arrangement form of the units are the same as a quantity of units indicated by the size of the interface element 1 and an arrangement form of the units. For example, in the embodiment shown in FIG. 5D, the interface element 1 is the gallery widget 501, the size of the interface element 1 is 2*2, and the size of the location 1 is 2*2. In other words, the location 1 includes four units in the display area 1, and an arrangement form of the four units is 2*2 row-column distribution.

S1006: The electronic device 100 determines, based on the location 1, a conflicting element set, including one or more interface elements displayed at the location 1.

For example, in the embodiment shown in FIG. 5D, the following three interface elements are displayed at the location 1: the frequently-used application folder 502, the large application folder 503, and the setting application icon 504. The electronic device 100 may determine that the conflicting element set includes the following three conflicting elements: the frequently-used application folder 502, the large application folder 503, and the setting application icon 504.

S1007: The electronic device 100 determines a size of each conflicting element in the conflicting element set and coordinates of each conflicting element in a coordinate system 1, where the coordinate system 1 is a coordinate system constructed in the display area 1 by using an upper left corner of the display area 1 as an origin.

For specific descriptions of the coordinate system 1, refer to step S806 shown in FIG. 8A. Details are not described herein again.

The coordinates of the conflicting element in the coordinate system 1 may indicate a location of the conflicting element in the display area 1. The coordinates of the conflicting element in the coordinate system 1 may be a coordinate point (for example, coordinates of a unit located in an upper left corner of units occupied by the conflicting element), or may be a coordinate set including a plurality of coordinate points. This is not limited herein in this application.

In some embodiments, the electronic device 100 may alternatively construct a temporary location-occupying matrix to represent a size of each conflicting element in the conflicting element set.

The temporary location-occupying matrix may be a location-occupying matrix of the entire conflicting element set. For example, in the embodiment shown in FIG. 5D, the location 1 includes four units in the display area 1, and an arrangement form of the four units is 2*2 row-column distribution. The conflicting element set includes the following three conflicting elements: the frequently-used application folder 502, the large application folder 503, and the setting application icon 504. A size of the frequently-used application folder 502 is 1*2, a size of the large application folder 402 is 2*2, and a size of the setting application icon is 1*1. A location relationship between the foregoing three conflicting elements and the location 1 is as follows: A rightmost unit of the frequently-used application folder 502 occupies a unit in an upper left corner of the location 1, two units on a left side of the large application folder 402 respectively occupy two units on a right side of the location 1, and the setting application icon 403 occupies a unit in a lower left corner of the location 1. In this case, a 2*4-dimensional matrix may be constructed for the conflicting element set, and each first digit (for example, a digit "1") or second digit (for example, a digit "0") in the matrix may correspond to one unit. In the matrix, the first digit represents that the unit is occupied (that is, a conflicting element needs to be displayed), and the second digit represents that the unit is not occupied (that is, no conflicting element needs to be displayed). In this case, the temporary location-occupying information of the conflicting element set may be represented by using the 2*4-dimensional location-occupying matrix C2 shown in Formula (9).

In some other embodiments, the temporary location-occupying matrix may alternatively include a temporary location-occupying matrix of each conflicting element, and the temporary location-occupying matrix of each interface element may indicate a size of the conflicting element. In other words, a dimension of the temporary location-occupying matrix of the conflicting element is the same as the size of the conflicting element, and all digits in the matrix are first digits (for example, a digit "1").

It may be understood that the foregoing embodiment is merely an example in which that the size of each conflicting element may be represented by constructing the temporary location-occupying matrix is described. In embodiments of this application, the conflicting element set may alternatively be a conflicting element set different from those in the foregoing embodiment, and the temporary location-occupying matrix may alternatively be a matrix that has a different dimension or different content. In some embodiments, when constructing the temporary location-occupying matrix, the electronic device 100 may alternatively use another digit to represent whether a corresponding unit is occupied, or represent the temporary location-occupying information in another manner. This is not limited herein in this application.

S1008: The electronic device 100 determines, based on the size of each conflicting element and the screen location-occupying information of the display area 2, whether a location set in which each conflicting element in the conflicting element set can be separately accommodated and displayed exists in the display area 2.

The location set may include one or more locations, and a quantity of locations in the location set is the same as a quantity of conflicting elements in the conflicting element set. Each location may include one or more units in the display area 2, and is used to accommodate and display one conflicting element in the conflicting element set. A size of the location is the same as a size of the conflicting element. In addition, before the conflicting element is placed at the location in the location set, no interface element is displayed at the location in the location set.

The electronic device 100 may arrange all the conflicting elements in the conflicting element set in descending order based on sizes of the conflicting elements, and sequentially determine, based on the arrangement order and the sizes of the conflicting elements, whether a location at which the conflicting element can be accommodated and displayed exists in the display area 2. If locations of all the conflicting elements in the conflicting element set can be found in the display area 2, the electronic device 100 may determine that the location set in which each conflicting element in the conflicting element set can be separately accommodated and displayed exists in the display area 2. When the conflicting elements are sorted based on the sizes, the conflicting elements may be first sorted based on products of horizontal sizes and vertical sizes. When products corresponding to two conflicting elements are the same, the conflicting elements may be sorted based on the horizontal sizes (or the vertical sizes). In some other embodiments, the electronic device 100 may alternatively use another sorting manner. This is not limited herein in this application.

In some embodiments, the electronic device 100 may determine, based on the size that is of the conflicting element and that is obtained in step S1007 and the screen location-occupying matrix that is of the display area 2 and that is obtained in step S1004, whether the location set exists in the display area 2.

For example, in the embodiments shown in FIG. 5A to FIG. 5F, the screen location-occupying matrix of the display area 2 may be the screen location-occupying matrix D2 in Formula (10). In the conflicting element set, sizes are arranged in descending order as follows: the large application folder 503 (whose size is 2*2), the frequently-used application folder 502 (whose size is 1*2), and the setting application icon 504 (whose size is 1*1). The electronic device 100 may traverse the matrix by using an upper left corner of the screen location-occupying matrix D2 as a start point, to determine that a location 3 exists in the display area 2, and the location 3 includes the following four units whose row-column distribution is 2*2: a unit (1, 3), a unit (1, 4), a unit (2, 3), and a unit (2, 4), where the four units may be used to place the large application folder 504 whose size is 2*2. The electronic device 100 may replace digits "0" at locations corresponding to the foregoing four units in the screen location-occupying matrix D2 with digits "1", to obtain a new screen location-occupying matrix D21. Then, the electronic device 100 may traverse the matrix by using the upper left corner of the replaced screen location-occupying matrix D21 as a start point, to determine that a location 4 exists in the display area 2, and the location 4 includes the following two units whose row-column distribution is 1*2: a unit (3, 2) and a unit (3, 3), where the two units may be used to place the frequently-used application folder 502 whose size is 1*2. The electronic device 100 may replace a digit "0" at locations corresponding to the foregoing two units in the screen location-occupying matrix D21 with a digit "1", to obtain a new screen location-occupying matrix D22. Then, the electronic device 100 may traverse the matrix by using an upper left corner of the replaced screen location-occupying matrix D22 as a start point, to determine that a location 5 exists in the display area 2, and the location 5 includes the following units whose row-column distribution is 1*1: a unit (2, 2), where the unit may be used to place the setting application icon 504 whose size is 1*1.

In some embodiments, the electronic device 100 may alternatively not construct the temporary location-occupying matrix and the screen location-occupying matrix of the display area 2. In this case, the electronic device 100 may determine a distribution status of the available units in the display area 2 based on the screen location-occupying information of the display area 2, and determine, based on the distribution status of the available units and the size of each conflicting element, whether the location set in which all conflicting elements can be separately accommodated and displayed exists.

After determining the location set, the electronic device 100 may obtain coordinates of a location corresponding to each conflicting element in the location set in the coordinate system 2.

When determining that the location set in which all the conflicting elements in the conflicting element set can be separately accommodated and displayed exists in the display area 2, the electronic device 100 may perform the following step S1010.

When determining that the location set in which all the conflicting elements in the conflicting element set can be separately accommodated and displayed does not exist in the display area 2, the electronic device 100 may perform the following step S1009 and determine that location squeezing fails.

S1009: The electronic device 100 determines that distributed location squeezing fails.

After determining that the distributed location squeezing fails, and detecting an operation of releasing the interface element 1 by the user, the electronic device 100 may redisplay the interface element 1 at the initial location in the display area 2. In other words, cross-screen moving for the interface element 1 fails.

In some other embodiments, the electronic device 100 may alternatively create a new page, maintain an original layout of the conflicting elements, and display all the conflicting elements on the new page. For details, refer to the embodiments shown in FIG. 6D to FIG. 6E.

S1010: The electronic device 100 determines coordinates of a location corresponding to each conflicting element in the location set in the coordinate system 1.

The electronic device 100 may determine coordinates of a location corresponding to each conflicting element in the location set in the coordinate system 2 in step S1008. Then, the electronic device 100 may obtain, through coordinate conversion based on the coordinates of the location corresponding to each conflicting element in the location set in the coordinate system 2 and a relationship between the coordinate system 1 and the coordinate system 2, the coordinates 3 of the location corresponding to each conflicting element in the location set in the coordinate system 1.

For a specific manner in which the electronic device 100 determines the coordinates of the location 2 in the coordinate system 1 based on the coordinates of the location 2 in the coordinate system 2, refer to related content of step S809 shown in FIG. 8B. Details are not described herein again.

S1011: The electronic device 100 displays a moving track of each conflicting element based on the coordinates of each conflicting element in the coordinate system 1 and the coordinates of the location corresponding to each conflicting element in the location set in the coordinate system 1.

S1012: The electronic device 100 detects an operation 2 for the interface element 1, deletes the interface element 1 from the display area 2, and adds the interface element 1 to the display area 1 based on coordinates of the location 1 in the coordinate system 1.

The operation 2 may be a release operation for the interface element 1, for example, the release operation of the user for the gallery widget 501 shown in FIG. 5E.

S1013: The electronic device 100 obtains the coordinates of the location corresponding to each conflicting element in the location set in the coordinate system 2.

S1014: The electronic device 100 deletes the conflicting element set from the display area 1, and adds each conflicting element to the display area 2 based on the coordinates of the location corresponding to each conflicting element in the location set in the coordinate system 1.

For specific content of step S1011 to step S1014, refer to related content of step S810 to step S813 shown in FIG. 8B. Details are not described herein again.

It may be understood that the embodiment shown in FIG. 10A and FIG. 10B is merely an example. In embodiments of this application, the electronic device 100 may further include more than two displays. This is not limited herein in this application.

According to the interface element moving method provided in this embodiment of this application, when there is no enough space in the display area 1 to accommodate and display the interface element 1, unoccupied units in the display area 2 may be traversed to search for, in the display area 2, the locations at which the conflicting elements can be separately accommodated and displayed, and the conflicting element is displayed at the corresponding location in the display area 2. In this way, the interface element 1 may be moved from the display area 2 to the display area 1 through a single drag operation. This simplifies operation steps and improves efficiency.

FIG. 11A to FIG. 11C are a schematic flowchart of an interface element moving method according to an embodiment of this application.

As shown in FIG. 11A to FIG. 11C, a specific procedure of the interface element moving method may include the following steps.

S1101: An electronic device 100 is in an unfolded form, one or more interface elements are displayed in a display area 1, and one or more interface elements are displayed in a display area 2, including an interface element 1.

S1102: The electronic device 100 receives an operation 1 of a user for the interface element 1 and displays a moving track of the interface element 1 in response to the operation 1.

S1103: The electronic device 100 obtains a size of the interface element 1 and coordinates 1 of the initial location in a coordinate system 2, where the initial location is an original location of the interface element 1 in the display area 2, and the coordinate system 2 is a coordinate system constructed in the display area 2 by using an upper left corner of the display area 2 as an origin.

S1104: The electronic device 100 obtains screen location-occupying information of the display area 2, including coordinates of all units in the display area 2 in a coordinate system 2 and an occupation status of each unit, where the coordinate system 2 is a two-dimensional coordinate system constructed in the display area 2 by using an upper left corner of the display area 2 as an origin.

S1105: The electronic device 100 detects that a moving speed of the operation 1 in the display area 1 is less than a preset value, and determines the location 1 at which the interface element 1 is temporarily displayed in the display area 1, where a size of the location 1 is the same as the size of the initial location.

S1106: The electronic device 100 determines, based on the location 1, a conflicting element set, including one or more interface elements displayed at the location 1.

S1107: The electronic device 100 determines temporary location-occupying information of the conflicting element set, including a size of each conflicting element in the conflicting element set, a location relationship between the conflicting elements, and coordinates 2 of the conflicting element set in a coordinate system 1, where the coordinate system 1 is a coordinate system constructed in the display area 1 by using an upper left corner of the display area 1 as an origin.

For specific content of step S1101 to step S1107, refer to related description of step S901 to step S907 shown in FIG. 9A. Details are not described herein again. For step S1103, refer to related content of step S803 shown in FIG. 8A.

S1108: The electronic device 100 determines, based on the size of the interface element 1 and the temporary location-occupying information, whether a location 2 at which the conflicting element set can be accommodated and displayed exists at the initial location of the interface element 1.

The initial location of the interface element 1 is a location of the interface element 1 in the display area 2 before the electronic device 100 responds to the operation 1. The size of the interface element 1 is the same as a size of the initial location. The electronic device 100 may determine, based on the size of the initial location and the temporary location-occupying information, whether the location 2 at which the conflicting element set can be accommodated and displayed exists at the initial location. For a specific determining manner, refer to the specific description of step S807 shown in FIG. 8B. Details are not described herein again.

When determining that the location 2 at which the conflicting element set can be accommodated and displayed exists at the initial location, the electronic device 100 may perform the following step S1112.

When determining that the location 2 at which the conflicting element set can be accommodated and displayed does not exist at the initial location, the electronic device 100 determines that location exchanging and squeezing fails and may perform the following step S1109.

S1109: The electronic device 100 determines, based on the temporary location-occupying information and the screen location-occupying information of the display area 2, whether the location 2 at which the conflicting element set can be accommodated and displayed exists in the display area 2.

It should be noted that, that the conflicting element set can be accommodated and displayed at the location 2 means that all the conflicting elements in the conflicting element set are accommodated and displayed at the location 2 with the location relationship between the conflicting elements in the conflicting element set before the operation 1 maintained (that is, relative locations of the conflicting elements are maintained).

For other specific content of step S1109, refer to related descriptions of step S908 shown in FIG. 9B. Details are not described herein again.

When determining that the location 2 at which the conflicting element set can be accommodated and displayed exists in the display area 2, the electronic device 100 may perform the following step S1112.

When determining that the location 2 at which the conflicting element set can be accommodated and displayed does not exist in the display area 2, the electronic device 100 determines that overall location squeezing fails and may perform the following step S1110.

S1110: The electronic device 100 determines, based on the size of each conflicting element and the screen location-occupying information of the display area 2, whether a location set in which each conflicting element in the conflicting element set can be separately accommodated and displayed exists in the display area 2.

For specific content of step S1110, refer to related content of step S1008 shown in FIG. 10B. Details are not described herein again.

When determining that the location set in which all the conflicting elements in the conflicting element set can be separately accommodated and displayed exists at the initial location, the electronic device 100 may perform the following step S1112.

When determining that the location set in which all the conflicting elements in the conflicting element set can be separately accommodated and displayed does not exist at the initial location, the electronic device 100 may perform the following step S1111 and determine that distributed location squeezing fails.

S1111: The electronic device 100 determines that distributed location squeezing fails.

After determining that the distributed location squeezing fails, and detecting an operation of releasing the interface element 1 by the user, the electronic device 100 may redisplay the interface element 1 at the initial location in the display area 2. In other words, cross-screen moving for the interface element 1 fails.

In some embodiments, after determining that the distributed location squeezing in the display area 2 fails, the electronic device 100 may further separately search the display area 1 and the display area 2 for locations of the conflicting elements. For a specific manner, refer to the following embodiments. Details are not described herein.

S1112: The electronic device 100 determines coordinates of a location corresponding to each conflicting element in the display area 2 in the coordinate system 1.

S1113: The electronic device 100 displays a moving track of each conflicting element based on the coordinates of each conflicting element in the coordinate system 1 and the coordinates of the location corresponding to each conflicting element in the display area 2 in the coordinate system 1.

S1114: The electronic device 100 detects an operation 2 for the interface element 1, deletes the interface element 1 from the display area 2, and adds the interface element 1 to the display area 1 based on coordinates of the location 1 in the coordinate system 1.

S1115: The electronic device 100 obtains coordinates of the location corresponding to each conflicting element in the display area 2 in the coordinate system 2.

S1116: The electronic device 100 deletes the conflicting element set from the display area 1, and adds each conflicting element to the display area 2 based on the coordinates of the location corresponding to each conflicting element in the display area 2 in the coordinate system 2.

For specific content of step S1112 to step S1116, refer to related content of step S809 to step S813 shown in FIG. 8B, or related content of step S1010 to step S1014 shown in FIG. 10B. Details are not described herein again.

It may be understood that the embodiment shown in FIG. 11A to FIG. 11C is merely an example. In embodiments of this application, the electronic device 100 may further include more than two displays. This is not limited herein in this application.

According to the interface element moving method provided in embodiments of this application, the location of the conflicting element may be found in the display area 2 with reference to the three location squeezing manners in the embodiments shown in FIG. 8A to FIG. 10B. In this way, a probability of successful location finding can be increased, operation steps are simplified, and efficiency is improved.

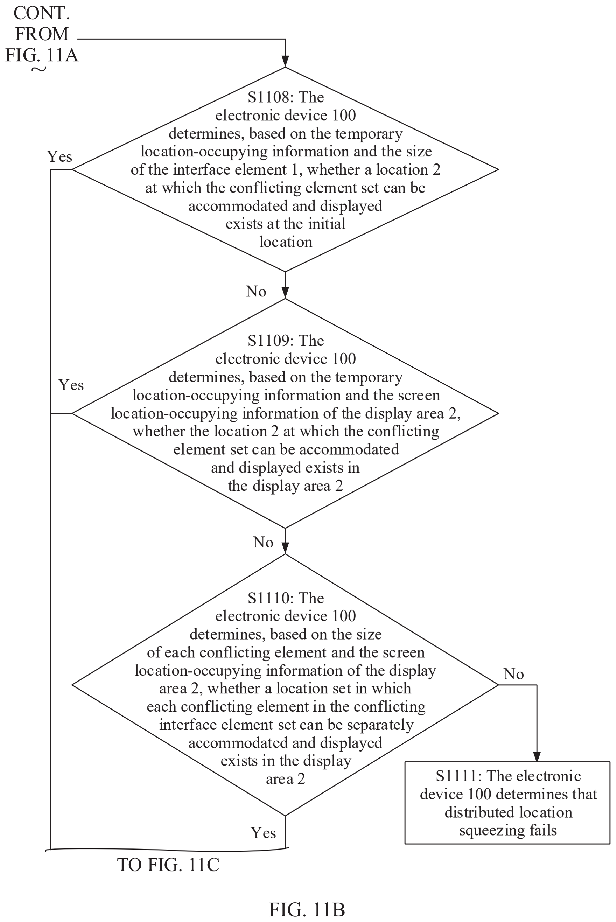

In some embodiments, before step S1108 shown in FIG. 11B, the electronic device 100 may further first search for a location, in the display area 1, for the conflicting element in the conflicting element set. When it is determined that the display area 1 does not have the location set in which all the conflicting elements can be separately accommodated and displayed, the electronic device 100 may perform step S1108 and subsequent steps, to search for a location in the display area 2 for the conflicting element. In this way, a location in the display area 1 may be first found for the conflicting element, to increase a probability of successful location squeezing.

In some other embodiments, after determining, in step S1111, that the distributed location squeezing fails, the electronic device 100 may further sort conflicting elements based on sizes with reference to the screen location-occupying information of the display area 1 and the screen location-occupying information of the display area 2, and sequentially search for a location, in the display area 1 and the display area 2, for each conflicting element based on a sorting result. After the location is found, coordinates of a new location of the conflicting element in the coordinate system 1 may be obtained, and a moving track of the conflicting element is displayed. In this way, after distributed location squeezing on a single screen fails, locations for the conflicting elements may be sequentially found based on screen location-occupying information of a plurality of displays, to increase a probability of successful location squeezing.

In some other embodiments, downward (or leftward, rightward, or another direction) location squeezing may be further performed on the conflicting elements displayed at the location 1 in the display area 1 in the embodiments shown in FIG. 8A to FIG. 11C. When one or more conflicting elements are displayed in a first layout at the location 1 in the display area 1, and one or more interface elements (also referred to as location-squeezing elements) are displayed in a second layout at a location 3 in the display area 1, if the display area 2 has a location 5 at which the one or more location-squeezing elements displayed in the second layout can be accommodated and displayed, in response to the operation 1 of moving the interface element from the initial location in the display area 2 to the location 1 in the display area 1 by the user, the one or more conflicting elements are displayed in the first layout at a location 4 below (or on a left side, a right side, or the like) the location 1, the interface element 1 is displayed at the location 1, and the one or more location-squeezing elements are displayed in the second layout at a location 5, where the location 5 may be the initial location, or may be another location in the display area 2. If a location set in which the one or more location-squeezing elements can be separately accommodated and displayed exists in the display area 2, in response to the operation 1 of moving the interface element from the initial location in the display area 2 to the location 1 in the display area 1 by the user, the one or more location-squeezing elements are separately displayed in the display area 2. A size of the location 4 is a size of an entire area occupied by the one or more interface elements arranged and displayed in the first layout at the location 1. The location 3 may be the same as or different from the location 4. A direction of the location 3 relative to the location 1 is the same as a direction of the location 4 relative to the location 1. For example, both the location 3 and the location 4 may be locations below the location 1. When downward (or another direction) location squeezing is performed on the conflicting element, the electronic device 100 may also obtain location-occupying information of the location-squeezing element, and determine a location of the location-squeezing element in the display area 2. For a specific manner, refer to the foregoing manner of determining the location of the conflicting element in the display area 2. Details are not described herein again.

It should be noted that, in the embodiments shown in FIG. 2A to FIG. 11C, an example in which the electronic device 100 includes the foldable display is used to describe the interface element moving method provided in embodiments of this application. In embodiments of this application, the interface element moving method may also be applied to a case in which the electronic device 100 does not include a foldable display. In other words, the display area 1 and the display area 2 may also be located in a same non-foldable display. In this case, when an interface element is moved from one display area to another display area, the electronic device 100 may also perform the interface element moving method provided in any one of the foregoing embodiments. This is not limited herein in this application.

The following describes functional modules of an electronic device 100 according to an embodiment of this application.

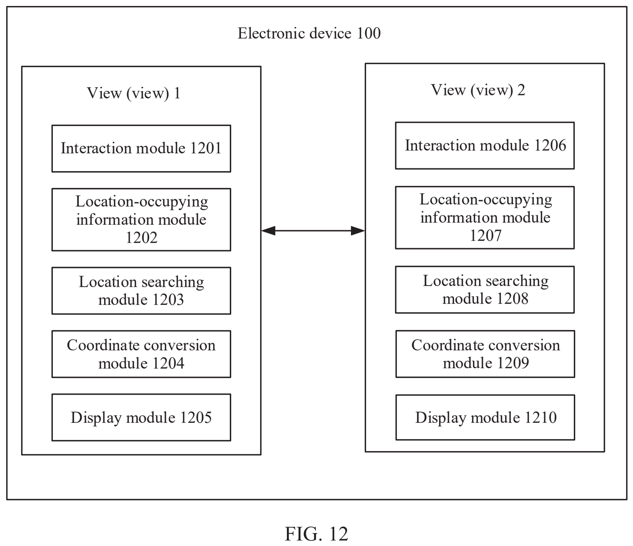

FIG. 12 is a diagram of functional modules of an electronic device 100 according to an embodiment of this application.

As shown in FIG. 12, the electronic device 100 may include a plurality of views (views), for example, a view 1 and a view 2. The view 1 may be a view of a display area 1, and the view 2 may be a view of a display area 2. The view 1 may include an interaction module 1201, a location-occupying information module 1202, a location searching module 1203, a coordinate conversion module 1204, and a display module 1205. The view 2 may include an interaction module 1206, a location-occupying information module 1207, a location searching module 1208, a coordinate conversion module 1209, and a display module 1210.

In the view 1, the interaction module 1201 may receive an operation of a user for an interface element displayed in the display area 1, for example, a touch and hold operation, a drag operation, or a touch and hold and drag operation for the interface element displayed in the display area 1. The interaction module 1201 may further detect a moving track of the user operation in the display area 1. The interaction module 1201 may receive and respond to an operation of moving an interface element in the display area 1 to another display (for example, the display area 2) by the user, and send an instruction 1 to the location-occupying information module 1202, instructing the location-occupying information module 1202 to send the location-occupying information of the display area 1 to a location searching module (for example, the location searching module 1208 in the view 2) in a view corresponding to the another display. The interaction module 1201 may further receive an operation of moving an interface element on another display to a target location (for example, a location 1) in the display area 1 by the user, and send an instruction 2 to the location-occupying information module 1202, instructing the location-occupying information module 1202 to determine one or more conflicting elements displayed at the target location.

The location-occupying information module 1202 may store screen location-occupying information of the display area 1, including coordinates of each unit, an occupation status of each unit, and the like in an interface currently displayed in the display area 1. The location-occupying information module 1202 may receive and respond to the instruction 1 sent by the interaction module 1201, and send the screen location-occupying information of the display area 1 to a location searching module corresponding to another display. The location-occupying information module 1202 may further receive and respond to the instruction 2 sent by the interaction module 1201, determine a conflicting element set, determine temporary location-occupying information of the conflicting element set, and send the temporary location-occupying information to the location searching module 1203, where the conflicting element set includes one or more conflicting elements. In some embodiments, in response to the instruction 2, the location-occupying information module 1202 may further send the location-occupying information of the display area 1 to the location searching module.

The location searching module 1203 may search for a location for each conflicting element in the conflicting element set. In some embodiments, the location searching module 1203 may search for a location for the conflicting element set in the display area 2 based on screen location-occupying information of the display area 2 and the temporary location-occupying information of the conflicting element set. The location searching module 1203 may alternatively search for the location for each conflicting element in the display area 2 based on the screen location-occupying information of the display area 2 and a size of each conflicting element in the temporary location-occupying information. In some embodiments, the location searching module 1203 may further search for the location for each conflicting element in the display area 1 based on the screen location-occupying information of the display area 1, the size of each conflicting element, and the like. After determining a new location of each conflicting element, the location searching module 1203 may send a location searching result to the coordinate conversion module 1204.

After receiving the location searching result, the coordinate conversion module 1204 may perform coordinate conversion on a new location of each conflicting element, to obtain coordinates of the new location in a coordinate system 1 corresponding to the display area 1. The coordinate system 1 is a two-dimensional coordinate system constructed in the display area 1 by using any point in the display area 1 as an origin. In some embodiments, when the new location of the conflicting element is in the display area 2, the coordinate conversion module 1204 may further send the coordinates of the new location in the coordinate system 1 corresponding to the display to the coordinate conversion module 1209 in the view 2. The coordinate conversion module 1209 determines, through coordinate conversion, coordinates of the new location in a coordinate system 2 corresponding to the display area 2.

The display module 1205 may display corresponding content based on location-occupying information of the display area 1. The display module 1205 may further display a moving track of the conflicting element, a moving track of a dragged interface element, and the like.

For functions of the modules in the view 2, refer to the functions of the corresponding modules in the view 1. Details are not described herein again.

It may be understood that the embodiment shown in FIG. 12 is merely an example. In embodiments of this application, the electronic device 100 may further include more views, and each view may further include more modules, fewer modules, or modules different from those in the foregoing embodiment. This is not limited herein in this application.

The following describes a procedure in which an electronic device performs an interface element moving method according to an embodiment of this application.

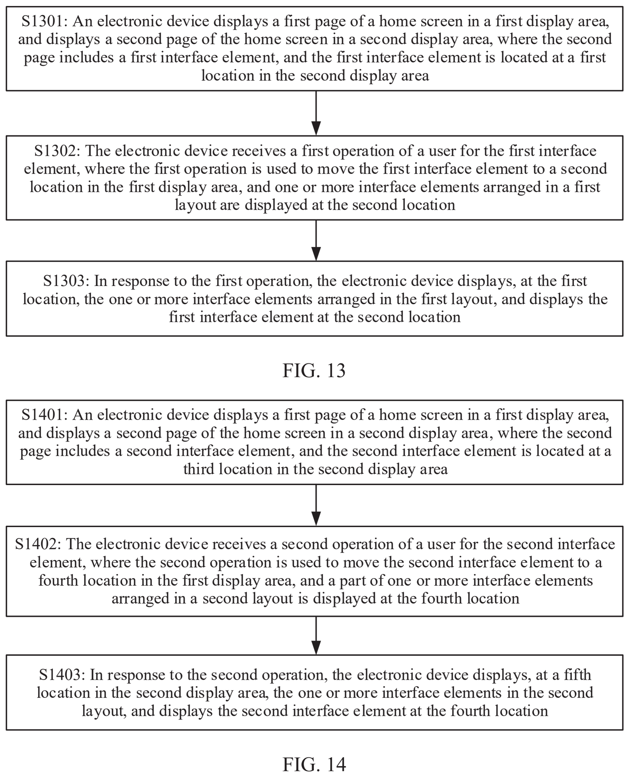

In the following embodiments shown in FIG. 13 to FIG. 17, the electronic device may be the electronic device 100 that includes the foldable display and that is in the unfolded form in the foregoing embodiments, or may be the electronic device 100 that does not include the foldable display and that includes the non-foldable display in the embodiment shown in FIG. 1K. In addition, in any one of the foregoing cases, the display (the foldable display or the non-foldable display) of the electronic device may include the first display area and the second display area.

As shown in FIG. 13, a procedure of an interface element moving method may include the following steps.

S1301: An electronic device displays a first page of a home screen in a first display area, and displays a second page of the home screen in a second display area, where the second page includes a first interface element, and the first interface element is located at a first location in the second display area.

In the embodiments shown in FIG. 13 to FIG. 17, the first display area may be the display area 1 in the foregoing embodiments, and the second display area may be the display area 2 in the foregoing embodiments. The first page may be the page 1 in the foregoing embodiments, and the second page may be the page 2 in the foregoing embodiments. The first interface element may be the interface element 1 in the embodiment shown in FIG. 8A and FIG. 8B or FIG. 11A to FIG. 11C. The first location may be the initial location in the embodiment shown in FIG. 8A and FIG. 8B or FIG. 11A to FIG. 11C.

S1302: The electronic device receives a first operation of a user for the first interface element, where the first operation is used to move the first interface element to a second location in the first display area, and one or more interface elements arranged in a first layout are displayed at the second location.

The first operation may be the operation 1 in the embodiment shown in FIG. 8A and FIG. 8B or FIG. 11A to FIG. 11C. The second location may be the location 1 in the embodiment shown in FIG. 8A and FIG. 8B or FIG. 11A to FIG. 11C. The one or more interface elements arranged and displayed in the first layout may be the conflicting elements in the embodiment shown in FIG. 8A and FIG. 8B or FIG. 11A to FIG. 11C. In step S1302, that the one or more interface elements arranged in the first layout are displayed at the second location means that the one or more interface elements displayed at the second location are all complete elements.

S1303: In response to the first operation, the electronic device displays, at the first location, the one or more interface elements arranged in the first layout, and displays the first interface element at the second location.

As shown in FIG. 14, a procedure of another interface element moving method may include the following steps.

S1401: An electronic device displays a first page of a home screen in a first display area, and displays a second page of the home screen in a second display area, where the second page includes a second interface element, and the second interface element is located at a third location in the second display area.

The second interface element may be the interface element 1 in the embodiment shown in FIG. 9A and FIG. 9B or FIG. 11A to FIG. 11C, and the third location may be the initial location in the embodiment shown in FIG. 9A and FIG. 9B or FIG. 11A to FIG. 11C.

S1402: The electronic device receives a second operation of a user for the second interface element, where the second operation is used to move the second interface element to a fourth location in the first display area, and a part of one or more interface elements arranged in a second layout is displayed at the fourth location. The part of the one or more interface elements means that at least one of the one or more interface elements displayed at the fourth location is incomplete at the fourth location.

The second operation may be the operation 1 in the embodiment shown in FIG. 9A and FIG. 9B or FIG. 11A to FIG. 11C, the fourth location may be the location 1 in the embodiment shown in FIG. 9A and FIG. 9B or FIG. 11A to FIG. 11C, and the one or more interface elements arranged in the second layout may be the conflicting elements in the embodiment shown in FIG. 9A and FIG. 9B or FIG. 11A to FIG. 11C.

S1403: In response to the second operation, the electronic device displays, at a fifth location in the second display area, the one or more interface elements arranged in the second layout, and displays the second interface element at the fourth location.

The fifth location may be the location 2 in the embodiment shown in FIG. 9A and FIG. 9B or FIG. 11A to FIG. 11C.

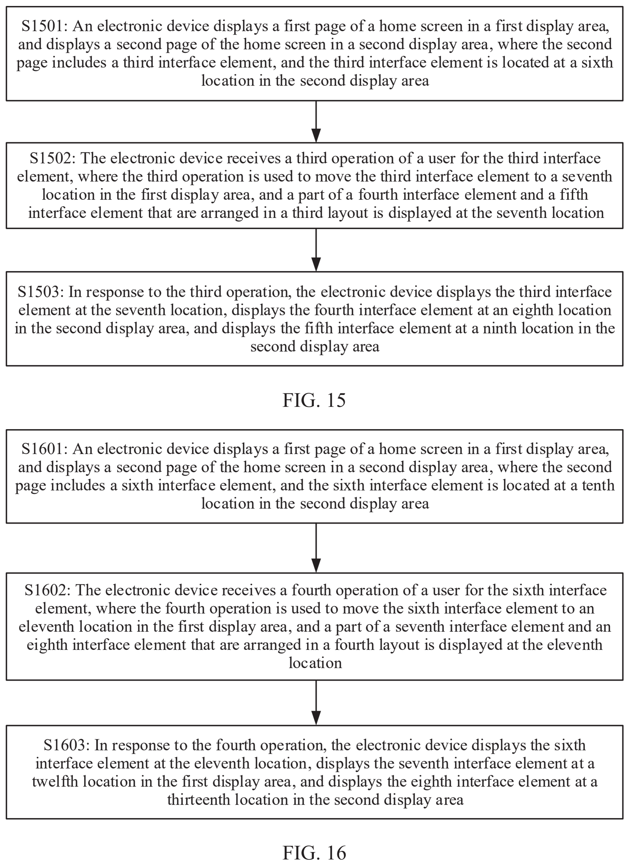

As shown in FIG. 15, a procedure of another interface element moving method may include the following steps.

S1501: An electronic device displays a first page of a home screen in a first display area, and displays a second page of the home screen in a second display area, where the second page includes a third interface element, and the third interface element is located at a sixth location in the second display area.

The third interface element may be the interface element 1 in the embodiment shown in FIG. 10A and FIG. 10B or FIG. 11A to FIG. 11C. The sixth location may be the initial location in the embodiment shown in FIG. 10A and FIG. 10B or FIG. 11A to FIG. 11C.

S1502: The electronic device receives a third operation of a user for the third interface element, where the third operation is used to move the third interface element to a seventh location in the first display area, and a part of a fourth interface element and a fifth interface element that are arranged in a third layout is displayed at the seventh location.

The third operation may be the operation 1 in the embodiment shown in FIG. 10A and FIG. 10B or FIG. 11A to FIG. 11C. The seventh location may be the location 1 in the embodiment shown in FIG. 10A and FIG. 10B or FIG. 11A to FIG. 11C. The fourth interface element and the fifth interface element may be the conflicting elements in the embodiment shown in FIG. 10A and FIG. 10B or FIG. 11A to FIG. 11C. It should be noted that, in step S1502, that the part of the fourth interface element and the fifth interface element that are arranged in the third layout is displayed at the seventh location means that at least one of the fourth interface element and the fifth interface element displayed at the seventh location is incomplete at the seventh location (for example, only a part of the fifth interface element is displayed at the seventh location). In addition, in some embodiments, another interface element may be further displayed at the seventh location.

S1503: In response to the third operation, the electronic device displays the third interface element at the seventh location, displays the fourth interface element at an eighth location in the second display area, and displays the fifth interface element at a ninth location in the second display area.

The eighth location and the ninth location may be locations in the location set in the embodiment shown in FIG. 10A and FIG. 10B or FIG. 11A to FIG. 11C.

As shown in FIG. 16, a procedure of another interface element moving method may include the following steps.

S1601: An electronic device displays a first page of a home screen in a first display area, and displays a second page of the home screen in a second display area, where the second page includes a sixth interface element, and the sixth interface element is located at a tenth location in the second display area.

The third interface element may be the interface element 1 in the embodiment. The sixth location may be the initial location in the embodiment, that is, a location of the interface element 1 before the movement.

S1602: The electronic device receives a fourth operation of the user for the sixth interface element, where the fourth operation is used to move the sixth interface element to an eleventh location in the first display area, and a part of a seventh interface element and an eighth interface element that are arranged in a fourth layout is displayed at the eleventh location.

The fourth operation may be the operation 1 in the embodiment. The eleventh location may be the location 1 in the embodiment. The seventh interface element and the eighth interface element may be the conflicting elements in the embodiment. It should be noted that, in step S1602, that the part of the seventh interface element and the eighth interface element that are arranged in the fourth layout are displayed at the eleventh location means that at least one of the seventh interface element and the eighth interface element displayed at the eleventh location is incomplete. In addition, in some embodiments, another interface element may be further displayed at the eleventh location.

S1603: In response to the fourth operation, the electronic device displays the sixth interface element at the eleventh location, displays the seventh interface element at a twelfth location in the first display area, and displays the eighth interface element at a thirteenth location in the second display area.

The twelfth location may be an unoccupied location in the first display area, and the thirteenth location may be an unoccupied location in the second display area. In some embodiments, there may be an intersection between the thirteenth location and the tenth location.

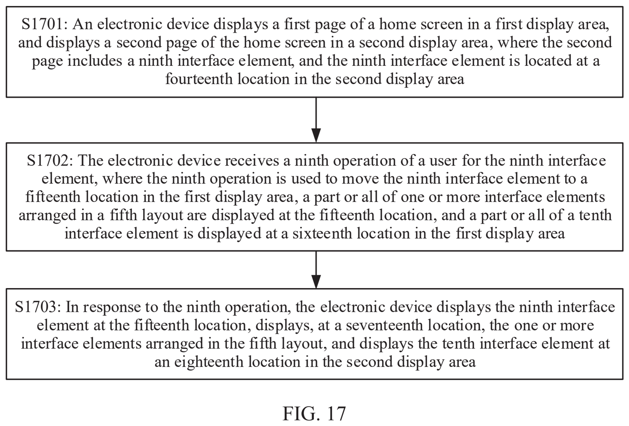

As shown in FIG. 17, a procedure of another interface element moving method may include the following steps.

S1701: An electronic device displays a first page of a home screen in a first display area, and displays a second page of the home screen in a second display area, where the second page includes a ninth interface element, and the ninth interface element is located at a fourteenth location in the second display area.

The ninth interface element may be the interface element 1 in the embodiment, and the fourteenth location may be the initial location in the embodiment.

S1702: The electronic device receives a ninth operation of a user for the ninth interface element, where the ninth operation is used to move the ninth interface element to a fifteenth location in the first display area, a part or all of one or more interface elements arranged in a fifth layout are displayed at the fifteenth location in the first display area, and a part or all of a tenth interface element is displayed at a sixteenth location in the first display area.

The ninth operation may be the operation 1 in the embodiment. The fifteenth location may be the location 1 in the embodiment, the one or more interface elements arranged and displayed in the fifth layout at the fifteenth location may be the conflicting elements in the embodiment, the sixteenth location may be the location 3 in the foregoing embodiments shown in FIG. 7A to FIG. 7D, and the tenth element displayed at the sixteenth location may be the location-squeezing element in the embodiments shown in FIG. 7A to FIG. 7D. In some embodiments, another element may be further displayed at the sixteenth location. One or more interface elements are displayed at a location (all of the one or more interface elements are displayed) means that the one or more interface elements are complete at the location. A part of one or more interface elements is displayed at a location means that at least one of the one or more interface elements displayed at the location is incomplete.

S1703: In response to the ninth operation, the electronic device displays the ninth interface element at the fifteenth location, displays, at a seventeenth location in the first display area, the one or more interface elements arranged in the fifth layout, and displays a tenth interface element at an eighteenth location in the second display area, where the sixteenth location and the seventeenth location are on a same side of the fifteenth location.

The seventeenth location may be the location 4 in the embodiments shown in FIG. 7A to FIG. 7D. The eighteenth location may be an unoccupied location in the second display area, and the eighteenth location may be the same as or different from the fourteenth location.

In some embodiments, the sixteenth location may be the same as the seventeenth location.

In some embodiments, if the interface element displayed at the sixteenth location further includes another element, in response to the ninth operation, the electronic device may display, in an original layout in the second display area, one or more interface elements displayed at the sixteenth location, or separately display the one or more interface elements at different locations in the second display area, or separately display the one or more interface elements in the first display area and the second display area, or the like.

It should be noted that the interface element moving methods shown in FIG. 13 to FIG. 17 may be separately performed as an interface element moving method, or any plurality of the foregoing methods may be combined. This is not limited herein in this application.

Implementations of this application may be combined at random to implement different technical effect.

All or some of the foregoing embodiments may be implemented by software, hardware, firmware, or any combination thereof. When software is used to implement the methods, all or a part of embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, microwave, or the like) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

A person of ordinary skill in the art may understand that all or some procedures of the methods in embodiments may be implemented by a computer program instructing related hardware. The program may be stored in the computer-readable storage medium. When the program is executed, the procedures in the method embodiments may be performed. The storage medium includes any medium that can store program code, for example, a ROM, a random access memory RAM, a magnetic disk, or a compact disc.

In conclusion, the foregoing descriptions are merely example embodiments of the technical solutions of the present invention, and are not intended to limit the protection scope of the present invention. Any modification, equivalent replacement, improvement, or the like made in accordance with the disclosure of the present invention shall be included in the protection scope of the present invention.

**Claims**

1. An interface element moving method, applied to an electronic device comprising a foldable display, wherein the foldable display comprises a first display area and a second display area, and the method comprises:

    when the electronic device is in an unfolded form, displaying a first page of a home screen in the first display area, and displaying a second page of the home screen in the second display area, wherein the second page comprises a first interface element, and the first interface element is located at a first location in the second display area;
    receiving a first operation of a user for the first interface element, wherein the first operation is used to move the first interface element to a second location in the first display area, and one or more interface elements arranged in a first layout are displayed at the second location; and
    in response to the first operation, displaying, at the first location, the one or more interface elements arranged in the first layout, and displaying the first interface element at the second location.

2. The method according to claim 1, wherein the method further comprises:

    the second page further comprises a second interface element, and the second interface element is located at a third location in the second display area;
    receiving a second operation of the user for the second interface element, wherein the second operation is used to move the second interface element to a fourth location in the first display area, and a part of one or more interface elements arranged in a second layout is displayed at the fourth location; and
    in response to the second operation, displaying, at a fifth location in the second display area, the one or more interface elements arranged in the second layout, and displaying the second interface element at the fourth location.

3. The method according to claim 1 or 2, wherein the method further comprises:

the second page further comprises a third interface element, and the third interface element is located at a sixth location in the second display area;
receiving a third operation of the user for the third interface element, wherein the third operation is used to move the third interface element to a seventh location in the first display area, and a part of a fourth interface element and a fifth interface element that are arranged in a third layout is displayed at the seventh location; and
in response to the third operation, displaying the third interface element at the seventh location, displaying the fourth interface element at an eighth location in the second display area, and displaying the fifth interface element at a ninth location in the second display area.

4. The method according to any one of claims 1 to 3, wherein the method further comprises:

the second page further comprises a sixth interface element, and the sixth interface element is located at a tenth location in the second display area;
receiving a fourth operation of the user for the sixth interface element, wherein the fourth operation is used to move the sixth interface element to an eleventh location in the first display area, and a part of a seventh interface element and an eighth interface element that are arranged in a fourth layout is displayed at the eleventh location; and
in response to the fourth operation, displaying the sixth interface element at the eleventh location, displaying the seventh interface element at a twelfth location in the first display area, and displaying the eighth interface element at a thirteenth location in the second display area.

5. The method according to any one of claims 1 to 4, wherein the method further comprises:
in response to the first operation, moving, by the first interface element, along a track of the first operation.

6. The method according to claim 5, wherein in a process in which the first interface element moves along with the track of the first operation, the method further comprises:
displaying an initial location prompt at the first location, wherein the initial location prompt is used to prompt the first location.

7. The method according to any one of claims 1 to 6, wherein the method further comprises:

displaying a moving track of the one or more interface elements.

8. The method according to any one of claims 1 to 7, wherein before the electronic device is in the unfolded form, the method further comprises:
when the electronic device is in a folded form, displaying the first page in the first display area, and displaying a first interface or a black screen in the second display area, wherein the first interface is different from the home screen.

9. The method according to claim 8, wherein the method further comprises:

when the electronic device is in the folded form, receiving a fifth operation of the user for the first display area; and
displaying the second page in the first display area in response to the fifth operation.

10. The method according to claim 8 or 9, wherein the method further comprises:

when the electronic device is in the folded form, receiving a sixth operation of the user; and
switching the electronic device from the folded form to the unfolded form in response to the sixth operation.

11. The method according to any one of claims 1 to 7, wherein the electronic device further comprises another display, and the display comprises a third display area; and before the electronic device is in the unfolded form, the method further comprises:
when the electronic device is in a folded form, displaying the first page in the third display area.

12. The method according to claim 11, wherein the method further comprises:

when the electronic device is in the folded form, receiving a seventh operation of the user for the third display area; and
displaying the second page in the first display area in response to the seventh operation.

13. The method according to claim 11 or 12, wherein the method further comprises:

when the electronic device is in the folded form, receiving an eighth operation of the user; and
switching the electronic device from the folded form to the unfolded form in response to the eighth operation.

14. The method according to any one of claims 1 to 13, wherein the method further comprises:

**EP 4 657 225 A1**

the second page further comprises a ninth interface element, the ninth interface element is located at a fourteenth location in the second display area, a part or all of one or more interface elements arranged in a fifth layout are displayed at a fifteenth location in the first display area, and a part or all of a tenth interface element is displayed at a sixteenth location in the first display area;

receiving a ninth operation of the user for the ninth interface element, wherein the ninth operation is used to move the ninth interface element to the fifteenth location in the first display area; and

in response to the ninth operation, displaying the ninth interface element at the fifteenth location, displaying, at a seventeenth location in the first display area, the one or more interface elements arranged in the fifth layout, and displaying a tenth interface element at an eighteenth location in the second display area, wherein the sixteenth location and the seventeenth location are on a same side of the fifteenth location.

15. The method according to claim 14, wherein the sixteenth location is the same as the seventeenth location.

16. An electronic device, comprising: one or more processors, one or more memories, and one or more foldable displays, wherein the foldable displays comprise a first display area and a second display area; and the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 15.

17. A computer-readable storage medium, comprising computer instructions, wherein when the computer instructions are run on an electronic device, the electronic device is enabled to perform the method according to any one of claims 1 to 15.

Electronic device 100

FIG. 1A

FIG. 1B

Display
area 1

Display
area 2

100

Rear-facing camera

Folding edge

**Forward folded form**

FIG. 1C

**Forward folded form**

FIG. 1D

Reversely folded form

FIG. 1E

Front-facing
camera

Top edge          <u>**100**</u>

44a

33a

Display
area 1

**Unfolded
form**

Display
area 2

33b

44b

Bottom edge

FIG. 1F

**100**

Folding edge

Rear-facing camera

Display area 1

Display area 2

**Forward folded form**

FIG. 1G

Folding edge

**100**

Display area 3

Display area 2

Display area 1

**Forward folded form**

FIG. 1H

**Reversely folded form**

FIG. 1I

FIG. 1J

FIG. 1K

1000

Page 1

Display area 1

5G 5G 🛜    ▮▯ 08:08

# 08:08

Friday 13th    22th Twelfth    | ☼
January    Chinese lunar month

Top    Recommendations
Applications

Frequently-used    Music    Movie
Applications

1352 steps 🏆    Jan 13    ♨

Fitness    Calendar    Recipe

Music 2    Health    Gallery    Voice

Email    Setting    Bluetooth    Recording

⬅ 🖐    ● ○ ○ ○ ○ ○ ○ ○

📞 💬 👤 🌐

FIG. 2A

FIG. 2B

1010

5G 5G 📶  08:08

08:08

Display
area 2

Friday 13th     22th Twelfth
January    Chinese lunar month   | ✻

FIG. 2C

Display
area 2

FIG. 2D

1020

Page 1

Display area 1

5G | 5G | 📶

**08:08**

Friday 13th January

22th Twelfth Chinese lunar month | ☼

Top Applications    Recommendations

Frequently-used Applications

Music    Movie

1352 steps 🏆    Jan 13    ♨

Fitness    Calendar    Recipe

Music 2    Health    Gallery    Voice

Email    Setting    Bluetooth    Recording

📞 💬 👤 🌐

Page 2

Display area 2

🔋 08:08

Suggestions    Tools

Gallery    Theme    Conversation

Fortune    Lifestyle

Game    Security    Memo    Weather

File    Chat    Calculator    Reading

📷 ⚙

FIG. 2E

FIG. 2F

FIG. 2G

FIG. 2H

FIG. 3A

FIG. 3B

FIG. 3C

FIG. 3D

FIG. 3E

FIG. 3F

_400_

Page 1 · Page 2

Display area 1 · Display area 2

08:08

Friday 13th January · 22th Twelfth Chinese lunar month

Top Applications · Recommendations · Theme · Conversation

_402_

Frequently-used Applications

Recipe · Tools

Jan 13 · Calendar

Game · Security

_403_

Email · Setting · Suggestions

_404_ · _405_

Music 2 · Health · Gallery · Voice

_401_

Gallery · Fortune · Lifestyle · Memo · Weather

1352 steps · Fitness · Bluetooth · Recording

File · Chat · Calculator · Reading

FIG. 4A

FIG. 4B

FIG. 4C

FIG. 4D

FIG. 4E

FIG. 4F

FIG. 5A

FIG. 5B

FIG. 5C

FIG. 5D

FIG. 5E

FIG. 5F

FIG. 6A

FIG. 6B

FIG. 6C

FIG. 6D

FIG. 6E

_700_

Page 1

Display area 1

Page 2

Display area 2

5G 5G

08:08

08:08

Friday 13th January

22th Twelfth Chinese lunar month

Top Applications

Recommendations _702_

_703_

_701_ Suggestions

Tools

Frequently-used Applications

Music

Movie

Theme

Conversation

_704_

_705_

1352 steps

Jan 13

Fitness

Calendar

Recipe

Gallery

Fortune

Lifestyle

_706_

_707_

Music 2

Health

Gallery

Voice

Game

Security

Memo

Weather

_708_

_709_

Email

Setting

Bluetooth

Recording

File

Chat

Calculator

Reading

FIG. 7A

FIG. 7B

FIG. 7C

FIG. 7D

~
TO
FIG. 8B

S801: An electronic device 100 is in an unfolded form, one or more interface elements are displayed in a display area 1, and one or more interface elements are displayed in a display area 2, including an interface element 1

S802: The electronic device 100 receives an operation 1 of a user for the interface element 1, and displays a moving track of the interface element 1 in response to the operation 1

S803: The electronic device 100 obtains initial location information of the interface element 1, including a size of an initial location and coordinates 1 of the initial location in a coordinate system 2, where the initial location is an original location of the interface element 1 in the display area 2, and the coordinate system 2 is a two-dimensional coordinate system constructed in the display area 2 by using an upper left corner of the display area 2 as an origin

S804: The electronic device 100 detects that a moving speed of the operation 1 in the display area 1 is less than a preset value, and determines a location 1 at which the interface element 1 is temporarily displayed in the display area 1, where a size of the location 1 is the same as the size of the initial location

S805: The electronic device 100 determines, based on the location 1, a conflicting element set, including one or more interface elements displayed at the location 1

S806: The electronic device 100 determines temporary location-occupying information of the conflicting element set, including a size of each conflicting element in the conflicting element set, a location relationship between the conflicting elements, and coordinates 2 of the conflicting element set in a coordinate system 1, where the coordinate system 1 is a two-dimensional coordinate system constructed in the display area 1 by using an upper left corner of the display area 1 as an origin

FIG. 8A

CONT.
FROM
FIG. 8A

S807:
The electronic
device 100 determines,
based on the temporary
location-occupying information
and the initial location information, whether
a location 2 at which the conflicting
element set can be accommodated
and displayed exists at
the initial
location

No

S808: The electronic
device 100 determines
that location exchanging
and squeezing fails

Yes

S809: The electronic device 100 determines
coordinates 3 of the location 2 in the
coordinate system 1

S810: The electronic device 100 displays a
moving track of the conflicting element set
based on the coordinates 2 and the
coordinates 3

S811: The electronic device 100 detects an
operation 2 for the interface element 1,
deletes the interface element 1 from the
display area 2, and adds the interface
element 1 to the display area 1 based on
coordinates of the location 1 in the
coordinate system 1

S812: The electronic device 100 obtains
coordinates 4 of the location 2 in the
coordinate system 2

S813: The electronic device 100 deletes the
conflicting element set from the display area
1, and adds the conflicting element set to the
display area 2 based on the coordinates 4

FIG. 8B

~
TO
FIG. 9B

S901: An electronic device 100 is in an unfolded form, one or more interface elements are displayed in a display area 1, and one or more interface elements are displayed in a display area 2, including an interface element 1

S902: The electronic device 100 receives an operation 1 of a user for the interface element 1, and displays a moving track of the interface element 1 in response to the operation 1

S903: The electronic device 100 obtains a size of the interface element 1

S904: The electronic device 100 obtains screen location-occupying information of the display area 2, including coordinates of all units in the display area 2 in a coordinate system 2 and an occupation status of each unit, where the coordinate system 2 is a two-dimensional coordinate system constructed in the display area 2 by using an upper left corner of the display area 2 as an origin

S905: The electronic device 100 detects that a moving speed of the operation 1 in the display area 1 is less than a preset value, and determines a location 1 at which the interface element 1 is temporarily displayed in the display area 1, where a size of the location 1 is the same as the size of the interface element 1

S906: The electronic device 100 determines, based on the location 1, a conflicting element set, including one or more interface elements displayed at the location 1

S907: The electronic device 100 determines temporary location-occupying information of the conflicting element set, including a size of each conflicting element in the conflicting element set, a location relationship between the conflicting elements, and coordinates 2 of the conflicting element set in a coordinate system 1, where the coordinate system 1 is a two-dimensional coordinate system constructed in the display area 1 by using an upper left corner of the display area 1 as an origin

FIG. 9A

CONT.
FROM
FIG. 9A
~

S908: The electronic device 100 determines, based on the temporary location-occupying information and the screen location-occupying information of the display area 2, whether a location 2 at which the conflicting element set can be accommodated and displayed exists in the display area 2

No

S909: The electronic device 100 determines that overall location squeezing fails

Yes

S910: The electronic device 100 determines coordinates 3 of the location 2 in the coordinate system 1

S911: The electronic device 100 displays a moving track of the conflicting element set based on the coordinates 2 and the coordinates 3

S912: The electronic device 100 detects an operation 2 for the interface element 1, deletes the interface element 1 from the display area 2, and adds the interface element 1 to the display area 1 based on coordinates of the location 1 in the coordinate system 1

S913: The electronic device 100 obtains coordinates 4 of the location 2 in the coordinate system 2

S914: The electronic device 100 deletes the conflicting element set from the display area 1, and adds the conflicting element set to the display area 2 based on the coordinates 4

FIG. 9B

S1001: An electronic device 100 is in an unfolded form, one or more interface elements are displayed in a display area 1, and one or more interface elements are displayed in a display area 2, including an interface element 1

↓

S1002: The electronic device 100 receives an operation 1 of a user for the interface element 1, and displays a moving track of the interface element 1 in response to the operation 1

↓

S1003: The electronic device 100 obtains a size of the interface element 1

↓

S1004: The electronic device 100 obtains screen location-occupying information of the display area 2, including coordinates of all units in the display area 2 in a coordinate system 2 and an occupation status of each unit, where the coordinate system 2 is a two-dimensional coordinate system constructed in the display area 2 by using an upper left corner of the display area 2 as an origin

↓

S1005: The electronic device 100 detects that a moving speed of the operation 1 in the display area 1 is less than a preset value, and determines a location 1 at which the interface element 1 is temporarily displayed in the display area 1, where a size of the location 1 is the same as the size of the interface element 1

↓

S1006: The electronic device 100 determines, based on the location 1, a conflicting element set, including one or more interface elements displayed at the location 1

↓

S1007: The electronic device 100 determines a size of each conflicting element in the conflicting element set and coordinates of each conflicting element in a coordinate system 1, where the coordinate system 1 is a coordinate system constructed in the display area 1 by using an upper left corner of the display area 1 as an origin

FIG. 10A

CONT.
FROM
FIG. 10A
~

S1008:
The electronic
device 100 determines,
based on the size of each
conflicting element and the screen location-
occupying information of the display area 2,
whether a location set in which each conflicting
element in the conflicting element set can
be separately accommodated
and displayed exists in
the display
area 2

No

S1009: The electronic device 100 determines that distributed location squeezing fails

Yes

S1010: The electronic device 100 determines coordinates of a location corresponding to each conflicting element in the location set in the coordinate system 1

S1011: The electronic device 100 displays a moving track of each conflicting element based on the coordinates of each conflicting element in the coordinate system 1 and the coordinates of the location corresponding to each conflicting element in the location set in the coordinate system 1

S1012: The electronic device 100 detects an operation 2 for the interface element 1, deletes the interface element 1 from the display area 2, and adds the interface element 1 to the display area 1 based on coordinates of the location 1 in the coordinate system 1

S1013: The electronic device 100 obtains coordinates of the location corresponding to each conflicting element in the location set in the coordinate system 2

S1014: The electronic device 100 deletes the conflicting element set from the display area 1, and adds each conflicting element to the display area 2 based on the coordinates of the location corresponding to each conflicting element in the location set in the coordinate system 1

FIG. 10B

S1101: An electronic device 100 is in an unfolded form, one or more interface elements are displayed in a display area 1, and one or more interface elements are displayed in a display area 2, including an interface element 1

S1102: The electronic device 100 receives an operation 1 of a user for the interface element 1, and displays a moving track of the interface element 1 in response to the operation 1

S1103: The electronic device 100 obtains a size of the interface element 1 and coordinates 1 of an initial location in a coordinate system 2, where the initial location is an original location of the interface element 1 in the display area 2, and the coordinate system 2 is a coordinate system constructed in the display area 2 by using an upper left corner of the display area 2 as an origin

S1104: The electronic device 100 obtains screen location-occupying information of the display area 2, including coordinates of all units in the display area 2 in the coordinate system 2 and an occupation status of each unit, where the coordinate system 2 is a two-dimensional coordinate system constructed in the display area 2 by using the upper left corner of the display area 2 as the origin

S1105: The electronic device 100 detects that a moving speed of the operation 1 in the display area 1 is less than a preset value, and determines a location 1 at which the interface element 1 is temporarily displayed in the display area 1, where a size of the location 1 is the same as the size of the interface element 1

S1106: The electronic device 100 determines, based on the location 1, a conflicting element set, including one or more interface elements displayed at the location 1

S1107: The electronic device 100 determines temporary location-occupying information of the conflicting element set, including a size of each conflicting element in the conflicting element set, a location relationship between the conflicting elements, and coordinates 2 of the conflicting element set in a coordinate system 1, where the coordinate system 1 is a coordinate system constructed in the display area 1 by using an upper left corner of the display area 1 as an origin

FIG. 11A

CONT.
FROM
FIG. 11A
~

Yes

S1108: The
electronic device 100
determines, based on the temporary
location-occupying information and the size
of the interface element 1, whether a location 2
at which the conflicting element set can be
accommodated and displayed
exists at the initial
location

No

Yes

S1109: The
electronic device 100
determines, based on the temporary
location-occupying information and the screen
location-occupying information of the display area 2,
whether the location 2 at which the conflicting
element set can be accommodated
and displayed exists in
the display area 2

No

S1110: The
electronic device 100
determines, based on the size
of each conflicting element and the screen
location-occupying information of the display
area 2, whether a location set in which
each conflicting element in the conflicting
interface element set can be separately
accommodated and displayed
exists in the display
area 2

No

S1111: The electronic
device 100 determines that
distributed location
squeezing fails

Yes

TO FIG. 11C

FIG. 11B

CONT.
FROM
FIG. 11B

S1112: The electronic device 100 determines coordinates of a location corresponding to each conflicting element in the display area 2 in the coordinate system 1

S1113: The electronic device 100 displays a moving track of each conflicting element based on coordinates of each conflicting element in the coordinate system 1 and the coordinates of the location corresponding to each conflicting element in the display area 2 in the coordinate system 1

S1114: The electronic device 100 detects an operation 2 for the interface element 1, deletes the interface element 1 from the display area 2, and adds the interface element 1 to the display area 1 based on coordinates of the location 1 in the coordinate system 1

S1115: The electronic device 100 obtains coordinates of the location corresponding to each conflicting element in the display area 2 in the coordinate system 2

S1116: The electronic device 100 deletes the conflicting element set from the display area 1, and adds each conflicting element to the display area 2 based on the coordinates of the location corresponding to each conflicting element in the display area 2 in the coordinate system 2

FIG. 11C

Electronic device 100

View (view) 1

Interaction module 1201

Location-occupying
information module
1202

Location searching
module 1203

Coordinate conversion
module 1204

Display module 1205

View (view) 2

Interaction module 1206

Location-occupying
information module
1207

Location searching
module 1208

Coordinate conversion
module 1209

Display module 1210

FIG. 12

S1301: An electronic device displays a first page of a home screen in a first display area, and displays a second page of the home screen in a second display area, where the second page includes a first interface element, and the first interface element is located at a first location in the second display area

S1302: The electronic device receives a first operation of a user for the first interface element, where the first operation is used to move the first interface element to a second location in the first display area, and one or more interface elements arranged in a first layout are displayed at the second location

S1303: In response to the first operation, the electronic device displays, at the first location, the one or more interface elements arranged in the first layout, and displays the first interface element at the second location

FIG. 13

S1401: An electronic device displays a first page of a home screen in a first display area, and displays a second page of the home screen in a second display area, where the second page includes a second interface element, and the second interface element is located at a third location in the second display area

S1402: The electronic device receives a second operation of a user for the second interface element, where the second operation is used to move the second interface element to a fourth location in the first display area, and a part of one or more interface elements arranged in a second layout is displayed at the fourth location

S1403: In response to the second operation, the electronic device displays, at a fifth location in the second display area, the one or more interface elements in the second layout, and displays the second interface element at the fourth location

FIG. 14

S1501: An electronic device displays a first page of a home screen in a first display area, and displays a second page of the home screen in a second display area, where the second page includes a third interface element, and the third interface element is located at a sixth location in the second display area

S1502: The electronic device receives a third operation of a user for the third interface element, where the third operation is used to move the third interface element to a seventh location in the first display area, and a part of a fourth interface element and a fifth interface element that are arranged in a third layout is displayed at the seventh location

S1503: In response to the third operation, the electronic device displays the third interface element at the seventh location, displays the fourth interface element at an eighth location in the second display area, and displays the fifth interface element at a ninth location in the second display area

FIG. 15

S1601: An electronic device displays a first page of a home screen in a first display area, and displays a second page of the home screen in a second display area, where the second page includes a sixth interface element, and the sixth interface element is located at a tenth location in the second display area

S1602: The electronic device receives a fourth operation of a user for the sixth interface element, where the fourth operation is used to move the sixth interface element to an eleventh location in the first display area, and a part of a seventh interface element and an eighth interface element that are arranged in a fourth layout is displayed at the eleventh location

S1603: In response to the fourth operation, the electronic device displays the sixth interface element at the eleventh location, displays the seventh interface element at a twelfth location in the first display area, and displays the eighth interface element at a thirteenth location in the second display area

FIG. 16

S1701: An electronic device displays a first page of a home screen in a first display area, and displays a second page of the home screen in a second display area, where the second page includes a ninth interface element, and the ninth interface element is located at a fourteenth location in the second display area

S1702: The electronic device receives a ninth operation of a user for the ninth interface element, where the ninth operation is used to move the ninth interface element to a fifteenth location in the first display area, a part or all of one or more interface elements arranged in a fifth layout are displayed at the fifteenth location, and a part or all of a tenth interface element is displayed at a sixteenth location in the first display area

S1703: In response to the ninth operation, the electronic device displays the ninth interface element at the fifteenth location, displays, at a seventeenth location, the one or more interface elements arranged in the fifth layout, and displays the tenth interface element at an eighteenth location in the second display area

FIG. 17

## INTERNATIONAL SEARCH REPORT

| | International application No. |
|---|---|
| | **PCT/CN2024/082199** |

### A.  CLASSIFICATION OF SUBJECT MATTER

G06F 3/04817(2022.01)i

According to International Patent Classification (IPC) or to both national classification and IPC

### B.  FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 折叠, 双屏, 图标, 应用, APP, 位置, 交换, 替换, 对调, fold, double screen, icon, application, location, swap, replace

### C.  DOCUMENTS CONSIDERED TO BE RELEVANT

| Category* | Citation of document, with indication, where appropriate, of the relevant passages | Relevant to claim No. |
|---|---|---|
| Y | CN 107943367 A (NUBIA TECHNOLOGY CO., LTD.) 20 April 2018 (2018-04-20) description, paragraphs 106-194 | 1-17 |
| Y | CN 111338529 A (VIVO COMMUNICATION TECHNOLOGY CO., LTD.) 26 June 2020 (2020-06-26) description, paragraphs 117-145, and figure 7 | 1-17 |
| Y | CN 112162667 A (VIVO COMMUNICATION TECHNOLOGY CO., LTD.) 01 January 2021 (2021-01-01) description, paragraphs 25-101, and figure 5 | 2-4, 14-15 |
| A | CN 105094527 A (XIAOMI INC.) 25 November 2015 (2015-11-25) entire document | 1-17 |
| A | CN 107168969 A (BEIJING SOGOU TECHNOLOGY DEVELOPMENT CO., LTD.) 15 September 2017 (2017-09-15) entire document | 1-17 |
| A | CN 112269502 A (VIVO COMMUNICATION TECHNOLOGY CO., LTD.) 26 January 2021 (2021-01-26) entire document | 1-17 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 June 2024** | **11 June 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/082199**

| Patent document cited in search report | | | Publication date (day/month/year) | Patent family member(s) | Publication date (day/month/year) |
|---|---|---|---|---|---|
| CN | 107943367 | A | 20 April 2018 | None | |
| CN | 111338529 | A | 26 June 2020 | None | |
| CN | 112162667 | A | 01 January 2021 | None | |
| CN | 105094527 | A | 25 November 2015 | None | |
| CN | 107168969 | A | 15 September 2017 | None | |
| CN | 112269502 | A | 26 January 2021 | None | |

Form PCT/ISA/210 (patent family annex) (July 2022)

**REFERENCES CITED IN THE DESCRIPTION**

**Patent documents cited in the description**

• CN 202310325688X